(19) Europäisches Patentamt / European Patent Office / Office européen des brevets

(11) **EP 4 253 631 A1**

(12) **EUROPEAN PATENT APPLICATION**
published in accordance with Art. 153(4) EPC

(43) Date of publication:
04.10.2023 Bulletin 2023/40

(21) Application number: 21896032.6

(22) Date of filing: 04.01.2021

(51) International Patent Classification (IPC):
*D06F 34/28* (2020.01)     *D06F 39/02* (2006.01)
*D06F 39/12* (2006.01)     *B29C 45/26* (2006.01)
*A47J 36/06* (2006.01)

(52) Cooperative Patent Classification (CPC):
**A47J 36/06; B29C 45/26; D06F 39/02; D06F 39/12;**
**D06F 34/28**

(86) International application number:
**PCT/CN2021/070153**

(87) International publication number:
**WO 2022/110512 (02.06.2022 Gazette 2022/22)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: 30.11.2020  CN 202011381066
30.11.2020  CN 202022841803 U

(71) Applicant: **Wuxi Little Swan Electric Co., Ltd.**
**Wuxi, Jiangsu 214028 (CN)**

(72) Inventors:
• **LIU, Zhongcai**
**Wuxi, Jiangsu 214028 (CN)**

• **GAO, Fei**
**Wuxi, Jiangsu 214028 (CN)**
• **CAO, Chunde**
**Wuxi, Jiangsu 214028 (CN)**
• **SUN, Qing**
**Wuxi, Jiangsu 214028 (CN)**
• **YANG, Peng**
**Wuxi, Jiangsu 214028 (CN)**
• **LI, Birong**
**Wuxi, Jiangsu 214028 (CN)**
• **ZHANG, Runrun**
**Wuxi, Jiangsu 214028 (CN)**

(74) Representative: **Whitlock, Holly Elizabeth Ann et al**
**Maucher Jenkins**
**Seventh Floor Offices**
**Artillery House**
**11-19 Artillery Row**
**London SW1P 1RT (GB)**

(54) **EXTERNAL APPEARANCE COMPONENT, HOUSEHOLD APPLIANCE, AND MOLD**

(57)     Provided is an external appearance component, the external appearance component being a one-piece injection-molded part, comprising: a non-external-appearance panel, the surface of the non-external-appearance panel being a non-external-appearance surface, the non-external-appearance panel being provided with at least one blocking hole (1012, 4012, 5011), the blocking holes running through the non-external-appearance panel in the direction of the thickness of the non-external-appearance panel a first external-appearance panel, the first-external-appearance panel being connected to the perimeter wall of the non-external-appearance panel, the first external-appearance panel extending circumferentially around the non-external-appearance panel; the surface of one side of the non-external-appearance panel is provided with at least one running-gate molding area (1011, 4021, 5021, 50311, 50321) corresponding to a running gate of the mold, the at least one running-gate molding area being arranged adjacent to the first external-appearance panel, at least one blocking hole being arranged adjacent to the first external-appearance panel, and the blocking holes adjacent to the first external-appearance panel being spaced apart from the running-gate molding area adjacent to the first external-appearance panel along the length of the first external-appearance panel. Also provided is a household appliance comprising the described external-appearance component, and a mold. The external-appearance component can, to a certain extent, prevent the appearance of a flow pattern on the external-appearance surface of the panel, improving the qualification rate of external-appearance components to a certain extent, and decreasing costs.

FIG. 1

**Description**

**EXTERNAL APPEARANCE COMPONENT, HOUSEHOLD APPLIANCE, AND MOLD**

The present application is based on and claims priority to Chinese Patent Applications No. 202011381066.1 and No. 202022841803.3, filed on November 30, 2020, the entire disclosures of which are incorporated herein by reference.

**FIELD**

The present disclosure relates to the field of household appliances technologies, and more particularly, to an appearance part, a household appliance, and a mold.

**BACKGROUND**

In general, a household appliance such as a front-load washing machine has appearance parts including parts such as a control panel, a dispenser handle, and a worktop, and these appearance parts have dual requirements of functions and appearance.

In the related art, when the appearance part is injection molded, a flow liner defect is prone to occur on a product. Severe flow liners generated on an appearance surface of the appearance part would result in a low qualification rate and high cost of the product. As a result, user's usage demands cannot be satisfied.

**SUMMARY**

The present disclosure aims to solve at least one of the technical problems existing in the related art. Accordingly, an object of the present disclosure is to provide an appearance part with a high qualification rate.

The present disclosure further provides a household appliance including the appearance part described above.

The present disclosure further provides a mold for forming an appearance part.

An appearance part according to embodiments of the present disclosure is an integral injection-molding piece. The appearance part includes a non-appearance plate and a first appearance plate. A surface of the non-appearance plate is a non-appearance surface. At least one blocking hole is formed on the non-appearance plate and penetrates the non-appearance plate in a thickness direction of the non-appearance plate. The first appearance plate is connected to a peripheral wall of the non-appearance plate and extends in a peripheral direction of the non-appearance plate. A side surface of the non-appearance plate in the thickness direction of the non-appearance plate has at least one gate forming region corresponding to a gate of a mold. The at least one gate forming region is located adjacent to the first appearance plate. The at least one blocking hole is formed adjacent to the first appearance plate, and the at least one blocking hole adjacent to the first appearance plate is spaced apart from the at least one gate forming region adjacent to the first appearance plate in the peripheral direction of the non-appearance plate; or a non-appearance surface of the first appearance plate has at least one gate forming region adapted to correspond to the gate of the mold, and the at least one blocking hole is formed adjacent to the first appearance plate.

With the appearance part according to the embodiments of the present disclosure, it is possible to at least prevent flow liners from being generated on the appearance plate to some extent. Therefore, yield of the appearance part can be at least improved to some extent, thereby lowering cost and satisfying user's usage demands.

According to some embodiments of the present disclosure, the appearance part further includes a second appearance plate. The second appearance plate is connected to the peripheral wall of the non-appearance plate. The first appearance plate and the second appearance plate are arranged in the peripheral direction of the non-appearance plate. The side surface of the non-appearance plate in the thickness direction of the non-appearance plate has a plurality of gate forming regions corresponding to a plurality of gates of the mold. Some of the plurality of gate forming regions are located adjacent to the first appearance plate, and the remaining of the plurality of gate forming regions are located adjacent to the second appearance plate. Some of a plurality of blocking holes are formed adjacent to the first appearance plate and are spaced apart from some of the plurality of gate forming regions in the peripheral direction of the non-appearance plate, and the remaining of the plurality of blocking holes are formed adjacent to the second appearance plate and are spaced apart from the remaining of the plurality of gate forming regions in the peripheral direction of the non-appearance plate; or the non-appearance surface of the first appearance plate has the gate forming region adapted to corresponding to the gate of the mold, or each of the non-appearance surface of the first appearance plate and a non-appearance surface of the second appearance plate has the gate forming region adapted to the gate of the mold, some of the plurality of blocking holes are formed adjacent to the first appearance plate, and at least one of the remaining of the plurality of blocking holes is formed adjacent to the second appearance plate.

According to some embodiments of the present disclosure, a minimum distance between each of some of the plurality of blocking holes adjacent to the first appearance plate and the first appearance plate is smaller than or equal to 20 mm; a minimum distance between each of the remaining of the plurality of blocking holes adjacent to the second appearance plate and the second appearance plate is smaller than or equal to 20 mm; a minimum distance between each of some of the plurality of gate forming regions adjacent to the first appearance plate and the first appearance plate is smaller than or equal to 20 mm; and/or a minimum distance between each of the remaining of the plurality of gate forming regions adjacent to the second appearance plate and the second appearance plate is smaller than or equal to 20 mm.

According to some embodiments of the present disclosure, a minimum distance between each of some of the plurality of blocking holes adjacent to the first appearance plate and the first appearance plate is smaller than or equal to 10 mm; a minimum distance between each of the remaining of the plurality of blocking holes adjacent to the second appearance plate and the second appearance plate is smaller than or equal to 10 mm; a minimum distance between each of some of the plurality of gate forming regions adjacent to the first appearance plate and the first appearance plate is smaller than or equal to 10 mm; and/or a minimum distance between each of the remaining of the plurality of gate forming regions adjacent to the second appearance plate and the second appearance plate is smaller than or equal to 10 mm.

According to some embodiments of the present disclosure, a minimum distance between each of some of the plurality of blocking holes adjacent to the first appearance plate and the first appearance plate is 0 mm; a minimum distance between each of the remaining of the plurality of blocking holes adjacent to the second appearance plate and the second appearance plate is 0 mm; a minimum distance between each of some of the plurality of gate forming regions adjacent to the first appearance plate and the first appearance plate is 0 mm; and/or a minimum distance between each of the remaining of the plurality of gate forming regions adjacent to the second appearance plate and the second appearance plate is 0 mm.

According to some embodiments of the present disclosure, the at least one blocking hole includes a plurality of blocking holes arranged at intervals in the peripheral direction of the non-appearance plate.

According to some embodiments of the present disclosure, a wall thickness of the non-appearance plate is smaller than a wall thickness of an end of the first appearance plate connected to the non-appearance plate.

According to some embodiments of the present disclosure, the wall thickness of the non-appearance plate is smaller than a minimum wall thickness of the first appearance plate.

According to some embodiments of the present disclosure, a wall thickness of the non-appearance plate is smaller than a wall thickness of an end of the second appearance plate connected to the non-appearance plate.

According to some embodiments of the present disclosure, the wall thickness of the non-appearance plate is smaller than a minimum wall thickness of the second appearance plate.

According to some embodiments of the present disclosure, the appearance part is a spray-free piece including a resin matrix and metal particles distributed in the resin matrix.

According to some embodiments of the present disclosure, the metal particles are aluminum, silver, or copper.

A household appliance according to embodiments of the present disclosure includes the appearance part as described above.

With the household appliance according to the embodiments of the present disclosure, by providing the appearance part as described above, it is possible to at least prevent the flow liners from being generated on the appearance plate to some extent. Therefore, the yield of the appearance part can be at least improved to some extent, thereby lowering the cost and satisfying the user's usage demands.

A mold according to embodiments of the present disclosure includes a mold core having a mold cavity. The mold cavity includes a non-appearance plate mold cavity and a first appearance plate mold cavity. At least one post structure is provided in the non-appearance plate mold cavity. The at least one post structure is used for forming a blocking hole and extends across the non-appearance plate mold cavity in a thickness direction of the non-appearance plate mold cavity. The first appearance plate mold cavity is in communication with an outer periphery of the non-appearance plate mold cavity and extends in a peripheral direction of the non-appearance plate mold cavity. The mold core has at least one gate located at the non-appearance plate mold cavity. The at least one gate is formed adjacent to the first appearance plate mold cavity. The at least one post structure is disposed adjacent to the first appearance plate mold cavity, and the post structure adjacent to the first appearance plate mold cavity is spaced apart from the least one gate adjacent to the first appearance plate mold cavity in the peripheral direction of the non-appearance plate mold cavity; or the mold core has at least one gate located at the first appearance plate mold cavity, and the at least one post structure is disposed adjacent to the first appearance plate mold cavity.

With the mold according to the embodiments of the present disclosure, it is possible to facilitate the material to be formed at the appearance plate mold cavity preferentially, thus at least preventing the flow liners from being generated on the appearance plate due to a flow of the material to the appearance plate mold cavity from the non-appearance plate mold cavity to some extent. Therefore, the yield of the appearance part can be improved, thereby lowering the cost and satisfying the user's usage demands.

According to some embodiments of the present disclosure, the mold cavity includes a second appearance plate mold cavity in communication with the outer periphery of the non-appearance plate mold cavity, and the first appearance plate mold cavity and the second appearance plate mold cavity are arranged in the peripheral direction of the non-appearance plate mold cavity. The mold core has a plurality of gates located at the non-appearance plate mold cavity. Some of the plurality of gates are formed adjacent to the first appearance plate mold cavity, and the remaining of the plurality of gates are formed adjacent to the second appearance plate mold cavity. Some of the plurality of post structures are disposed adjacent to the first appearance plate mold cavity and are spaced apart from some of the plurality of gates in the peripheral direction of the non-appearance plate mold cavity, and the remaining of the plurality of post structures are disposed adjacent to the second appearance plate mold cavity and are spaced apart from the remaining of the plurality of gates in the peripheral direction of the non-appearance plate mold cavity; or the mold core has a gate located at the first appearance plate mold cavity, or has a gate located at each of the first appearance plate mold cavity and the second appearance plate mold cavity, some of the plurality of post structures are disposed adjacent to the first appearance plate mold cavity, and at least one of the remaining of the plurality of post structures is disposed adjacent to the second appearance plate mold cavity.

According to some embodiments of the present disclosure, a minimum distance between each of some of the plurality of post structures adjacent to the first appearance plate mold cavity and the first appearance plate mold cavity is smaller than or equal to 20 mm; a minimum distance between each of the remaining of the plurality of post structures adjacent to the second appearance plate mold cavity and the second appearance plate mold cavity is smaller than or equal to 20 mm; a minimum distance between each of some of the plurality of gates adjacent to the first appearance plate mold cavity and the first appearance plate mold cavity is smaller than or equal to 20 mm; and/or a minimum distance between each of the remaining of the plurality of gates adjacent to the second appearance plate mold cavity and the second appearance plate mold cavity is smaller than or equal to 20 mm.

According to some embodiments of the present disclosure, a minimum distance between each of some of the plurality of post structures adjacent to the first appearance plate mold cavity and the first appearance plate mold cavity is smaller than or equal to 10 mm; a minimum distance between each of the remaining of the plurality of post structures adjacent to the second appearance plate mold cavity and the second appearance plate mold cavity is smaller than or equal to 10 mm; a minimum distance between each of some of the plurality of gates adjacent to the first appearance plate mold cavity and the first appearance plate mold cavity is smaller than or equal to 10 mm; and/or a minimum distance between each of the remaining of the plurality of gates adjacent to the second appearance plate mold cavity and the second appearance plate mold cavity is smaller than or equal to 10 mm.

According to some embodiments of the present disclosure, a minimum distance between each of some of the plurality of post structures adjacent to the first appearance plate mold cavity and the first appearance plate mold cavity is 0 mm; a minimum distance between each of the remaining of the plurality of post structures adjacent to the second appearance plate mold cavity and the second appearance plate mold cavity is 0 mm; a minimum distance between each of some of the plurality of gates adjacent to the first appearance plate mold cavity and the first appearance plate mold cavity is 0 mm; and/or a minimum distance between each of the remaining of the plurality of gates adjacent to the second appearance plate mold cavity and the second appearance plate mold cavity is 0 mm.

According to some embodiments of the present disclosure, the mold core has a gate located at the appearance plate mold cavity.

According to some embodiments of the present disclosure, the at least one post structure includes a plurality of post structures arranged at intervals in the peripheral direction of the non-appearance plate mold cavity.

According to some embodiments of the present disclosure, a thickness of the non-appearance plate mold cavity is smaller than a thickness of an end, in communication with the non-appearance plate mold cavity, of the first appearance plate mold cavity.

According to some embodiments of the present disclosure, the thickness of the non-appearance plate mold cavity is smaller than a minimum thickness of the first appearance plate mold cavity.

According to some embodiments of the present disclosure, a thickness of the non-appearance plate mold cavity is smaller than a thickness of an end, in communication with the non-appearance plate mold cavity, of the second appearance plate mold cavity.

According to some embodiments of the present disclosure, the thickness of the non-appearance plate mold cavity is smaller than a minimum thickness of the second appearance plate mold cavity.

Additional aspects and advantages of the present disclosure will be provided at least in part in the following description, or will become apparent at least in part from the following description, or can be learned from practicing of the present disclosure.

## BRIEF DESCRIPTION OF THE DRAWINGS

The above and/or additional embodiments of the present disclosure will become apparent and readily understood from the following description of embodiments in conjunction with the accompanying drawings, in which:

FIG. 1 is a schematic view of a control panel according to some embodiments of the present disclosure;

FIG. 1a is an enlarged view of Part 1B illustrated in FIG. 1;

FIG. 1b is an enlarged view of Part 2B illustrated in FIG. 1;

FIG. 1c is an enlarged view of Part 3B illustrated in FIG. 1;

FIG. 2 is a schematic cross-sectional view in A-A direction as illustrated in FIG. 1, in which an arrow width A1 is a width direction of a panel side plate, an arrow thickness A2 is a thickness direction of the panel side plate, and an arrow thickness A1 is a thickness direction of a panel connection plate;

FIG. 3 is an enlarged view of Part B illustrated in FIG. 1;

FIG. 4 is a schematic view of a control panel according to some embodiments of the present disclosure in another direction;

FIG. 5 is a schematic cross-sectional view in C-C direction as illustrated in FIG. 4;

FIG. 6 is an enlarged view of Part E illustrated in FIG. 5;

FIG. 7 is a schematic view of a panel mold according to some embodiments of the present disclosure;

FIG. 8 is a schematic cross-sectional view in F-F direction as illustrated in FIG. 7;

FIG. 9 is an enlarged view of Part H illustrated in FIG. 8, in which a width A2 is a width direction of a panel side plate mold cavity;

FIG. 10 is a schematic cross-sectional view in G-G direction as illustrated in FIG. 7;

FIG. 11 is an enlarged view of Part M illustrated in FIG. 10;

FIG. 12 is a schematic flow view of a material in a panel side plate mold cavity according to some embodiments of the present disclosure;

FIG. 13 is a schematic flow view of a material in a panel side plate mold cavity according to other embodiments of the present disclosure;

FIG. 14 is a schematic flow view of a material in a panel side plate mold cavity according to other embodiments of the present disclosure;

FIG. 15 is a schematic flow view of a material in a panel side plate mold cavity according to other embodiments of the present disclosure;

FIG. 16 is a schematic flow view of a material in a mold cavity in the related art.

FIG. 17 is a schematic view of a dispenser handle according to some embodiments of the present disclosure;

FIG. 18 is a cross-sectional view in V-V direction as illustrated in FIG. 17, in which an arrow thickness E2 is a width direction of a handle side plate;

FIG. 19 is an enlarged view of Part W illustrated in FIG. 18;

FIG. 20 is a schematic view of a dispenser handle according to some embodiments of the present disclosure in another direction;

FIG. 20a is a schematic view of a dispenser handle according to some embodiments of the present disclosure in yet another direction, in which an arrow length E1 is a length direction of a handle connection plate, and an arrow width E1 is a width direction of the handle connection plate;

FIG. 20b is an enlarged view of Part W1 illustrated in FIG. 20a;

FIG. 21 is a schematic view of a handle mold according to some embodiments of the present disclosure;

FIG. 22 is a cross-sectional view in X-X direction as illustrated in FIG. 21;

FIG. 23 is a cross-sectional view in Y-Y direction as illustrated in FIG. 21;

FIG. 24 is a schematic view of a handle mold according to some embodiments of the present disclosure in another direction;

FIG. 25 is a cross-sectional view in Z1-Z1 direction as illustrated in FIG. 24;

FIG. 26 is a cross-sectional view in Z-Z direction as illustrated in FIG. 24;

FIG. 27 is a schematic view of a worktop according to some embodiments of the present disclosure;

FIG. 28 is a schematic view of a worktop according to some embodiments of the present disclosure in another direction;

FIG. 29 is a cross-sectional view in A1-A1 direction as illustrated in FIG. 28;

FIG. 30 is an enlarged view of Part A2 illustrated in FIG. 29;

FIG. 31 is an enlarged view of Part A3 illustrated in FIG. 28;

FIG. 32 is a schematic view of a worktop according to some embodiments of the present disclosure in yet another direction;

FIG. 33 is a cross-sectional view in A4-A4 direction as illustrated in FIG. 32, in which an arrow width D1 is a width direction of a worktop side plate, and an arrow thickness D 1 is a thickness direction of the worktop side plate;

FIG. 34 is an enlarged view of part A5 illustrated in FIG. 33;

FIG. 35 is a schematic view of a worktop according to some embodiments of the present disclosure in still yet another direction;

FIG. 36 is an enlarged view of Part A6 illustrated in FIG. 35;

FIG. 37 is an enlarged view of Part A7 illustrated in FIG. 36, in which an arrow thickness D2 is a thickness direction of a worktop connection portion;

FIG. 37a is a schematic view of a worktop according to some embodiments of the present disclosure in other direction;

FIG. 37b is an enlarged view of Part A12 illustrated in FIG. 37a;

FIG. 37c is an enlarged view of Part A13 illustrated in FIG. 37a;

FIG. 37d is an enlarged view of Part A14 illustrated in FIG. 37a;

FIG. 37e is an enlarged view of Part A15 illustrated in FIG. 37a;

FIG. 37f is an enlarged view of Part A16 illustrated in FIG. 37a;

FIG. 37g is an enlarged view of Part A17 illustrated in FIG. 37a;

FIG. 37h is an enlarged view of Part A18 illustrated in FIG. 37a;

FIG. 37i is a schematic cross-sectional view of Part A11-A11 illustrated in FIG. 37a;

FIG. 37j is an enlarged view of Part A19 illustrated in FIG. 37i;

FIG. 37k is an enlarged view of Part A20 illustrated in FIG. 37i;

FIG. 38 is a schematic view of a worktop mold according to some embodiments of the present disclosure;

FIG. 39 is a cross-sectional view in A8-A8 direction as illustrated in FIG. 38;

FIG. 40 is a cross-sectional view in A9-A9 direction as illustrated in FIG. 38;

FIG. 41 is a cross-sectional view in A10-A10 direction as illustrated in FIG. 38; and

FIG. 42 is an enlarged view of Part A11 illustrated in FIG. 37.

Reference Numerals:

control panel 10; panel connection plate 101; panel gate forming region 1011; one panel gate forming region 1011a; panel blocking hole 1012; one panel blocking hole 1012a; panel side plate 102; first side plate body 1021; second side plate body 1022; panel top plate 103; panel connection rib 104; panel connection rib body 1041; panel connection portion 1042; panel mold 1; panel mold core 11; panel connection plate mold cavity 111; panel gate 1111; panel side plate mold cavity 112; first side plate body mold cavity 1121; panel top plate mold cavity 113; panel connection rib mold cavity 114; panel connection rib body mold cavity 1141; panel connection portion mold cavity 1142.

dispenser handle 40; handle connection plate 401; handle blocking hole 4012; handle side plate 402; first handle side plate body 4021; second handle side plate body 4022; handle variable wall thickness region 4023; handle constant wall thickness region 4024; handle gate forming region 4021; handle plate 403; gripping portion 4031; handle mold 4; handle mold core 41; handle connection plate mold cavity 411; handle side plate mold cavity 412; first handle side plate body mold cavity 4121; handle variable thickness region 4123; handle plate mold cavity 413.

worktop 50; worktop connection plate 501; worktop blocking hole 5011; worktop side plate 502; worktop gate forming region 5021; feeding table 503; outer peripheral side plate 5031; outer peripheral side plate gate forming region 50311; enclosing plate 5032; enclosing plate gate forming region 50321; top plate 5033; worktop variable wall thickness region 5023; worktop constant wall thickness region 5024; worktop connection rib 504; worktop through hole 50421; laundry feeding port 505; worktop mold 5; worktop mold core 51; worktop connection plate mold cavity 511; worktop side plate mold cavity 512; worktop variable thickness region 5121; feeding table mold cavity 513; outer peripheral side plate mold cavity 5131; enclosing plate mold cavity 5132; top plate mold cavity 5133; column 514.

## DETAILED DESCRIPTION OF THE EMBODIMENTS

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the accompanying drawings are illustrative only, and are intended to explain, rather than limiting the present disclosure.

In general, a household appliance such as a front-load washing machine has an appearance part such as a control panel, a dispenser handle, and a worktop, which has dual requirements of function and appearance.

Generally, a manufacturing process for the appearance part is mostly implemented through an injection molding and spraying process, and the sprayed appearance part has a gorgeous metal appearance effect. However, the spraying process has the defects such as serious pollution, high cost, low qualified rate, unrecyclable unqualified product, and the like, which seriously affects health of environment and production personnel, and does not conform to the green manufacturing concept. In order to overcome the defects in the spraying process, a spraying-free thermoplastic engineering material emerges, and the metal appearance effect of a product can be given by spraying-free injection molding. As a result, the spraying process can be replaced, thereby lowering production cost. Meanwhile, it is possible to avoid emission of pollutants during the spraying.

No matter whether the appearance part is manufactured by using a spraying-free material or through the injection molding and spraying process, for a material with poor fluidity, especially for a spraying-free material including metal particles, since there are the metal particles and other substances in the spraying-free material, uneven arrangement of the metal particles may be generated due to an obstruction to the material when flowing during the injection molding. As a result, the injection-molded product may occur light scattering under an irradiation of light, and flow liners thus are visually generated on the product, which results in a flow liner defect on the product. When the flow liners are generated on an appearance surface of the product, it not only leads to low qualified rate but also cannot satisfy user's usage demands. A description will be provided below taking the spraying-free material including metal particles as an example. That is, the appearance part may be a spray-free piece including a resin matrix and metal particles distributed in the resin matrix. Optionally, the metal particles are aluminum, silver, or copper.

According to the embodiments of the present disclosure, an appearance part, a household appliance, and a mold for forming the appearance part will be described below. Therefore, the appearance part is an integral injection-molding piece. As a result, a structure of the integral piece not only can ensure structural and performance stability of the appearance part, but also leads to convenient forming and simple manufacturing. Moreover, redundant assembly parts and connection steps can be removed, and connection reliability of the appearance part can be ensured. Furthermore, the integrally formed structure is high in overall strength and stability, is more convenient to be assembled, and is longer in service life.

According to the embodiments of the present disclosure, an appearance part includes a non-appearance plate and a first appearance plate. A surface of the non-appearance plate is a non-appearance surface. The first appearance plate has an appearance surface and a non-appearance surface. When the appearance part is applied in a household appliance, the surface of the non-appearance plate is not exposed, and the surface of the appearance plate is exposed. The first appearance plate is connected to an outer peripheral wall of the non-appearance plate and extends in a peripheral direction of the non-appearance plate. A plurality of blocking holes is formed on the non-appearance plate. The plurality of blocking holes is arranged at intervals and penetrates the non-appearance plate in a thickness direction of the non-appearance plate.

According to some embodiments of the present disclosure, the appearance part includes a second appearance plate having an appearance surface and a non-appearance surface. The first appearance plate and the second appearance plate are both connected to the peripheral wall of the non-appearance plate, and are arranged in the peripheral direction of the non-appearance plate.

In order to facilitate a description of a specific structure of the appearance part, a mold for forming then appearance part is combined below.

A mold according to embodiments of the present disclosure includes a mold core having a mold cavity. The mold cavity includes a non-appearance plate mold cavity and a first appearance plate mold cavity. At least one post structure is provided in the non-appearance plate mold cavity. The at least one post structure is used for forming a blocking hole, and extends across the non-appearance plate mold cavity in a thickness direction of the non-appearance plate mold cavity. The first appearance plate mold cavity is in communication with an outer periphery of the non-appearance plate mold cavity and extends in a peripheral direction of the non-appearance plate mold cavity.

Optionally, the mold cavity includes a second appearance plate mold cavity. The first appearance plate mold cavity and the second appearance plate mold cavity are both in communication with an outer periphery of the non-appearance plate mold cavity, and are arranged in a peripheral direction of the non-appearance plate mold cavity.

In some embodiments, a side surface of the non-appearance plate in the thickness direction of the non-appearance plate has at least one gate forming region corresponding to a gate of a mold. The at least one gate forming region is formed adjacent to the first appearance plate. The at least one blocking hole is formed adjacent to the first appearance plate. The at least one blocking hole adjacent to the first appearance plate is spaced apart from the at least one gate forming region adjacent to the first appearance plate in the peripheral direction of the non-appearance plate. In some embodiments, the side surface of the non-appearance plate in the thickness direction of the non-appearance plate has a plurality of gate forming regions corresponding to a plurality of gates of the mold. Some of the plurality of gate forming regions are formed adjacent to the first appearance plate, and the remaining of the plurality of gate forming regions are formed adjacent to the second appearance plate. Some of a plurality of blocking holes are formed adjacent to the first appearance plate, and are spaced apart from some of the plurality of gate forming regions in the peripheral direction of the non-appearance plate. The remaining of the plurality of blocking holes are formed adjacent to the second appearance plate, and are spaced apart from the remaining of the plurality of gate forming regions in the peripheral direction of the non-appearance plate.

In some embodiments, after an appearance part blank is formed through the injection molding by the mold and is de-molded from the mold, a part of a material at the gate of the mold is left on the appearance part blank and is formed into a gate forming portion. The gate forming region of the appearance part is a region where the gate forming portion is located. It can be understood that the appearance part blank may be further processed to cut away or partially cut away the gate forming portion. In an example, the gate forming portion of the appearance part blank may not be processed. That is, the gate forming portion is remained on the appearance part. The embodiment of the present disclosure is not limited in this regard, and the gate forming portion may be provide as desired.

Corresponding to the above structures, in the mold, the mold core has at least one gate located at the non-appearance plate mold cavity. The at least one gate is formed adjacent to the first appearance plate mold cavity. The at least one post structure is disposed adjacent to the first appearance plate mold cavity. The post structure adjacent to the first appearance plate mold cavity is spaced apart from the least one gate adjacent to the first appearance plate mold cavity in the peripheral direction of the non-appearance plate mold cavity. In some embodiments, the mold core has a plurality of gates located at a side wall surface of the non-appearance plate mold cavity in a thickness direction of the non-appearance plate mold cavity. Some of the plurality of gates are formed adjacent to the first appearance plate mold cavity, and the remaining of the plurality of gates are formed adjacent to the second appearance plate mold cavity. Some of the plurality of post structures are disposed adjacent to the first appearance plate mold cavity, and are spaced apart from some of the plurality of gates in the peripheral direction of the non-appearance plate mold cavity. The remaining of the plurality of post structures are disposed adjacent to the second appearance plate mold cavity, and are spaced apart from the remaining of the plurality of gates in the peripheral direction of the non-appearance plate mold cavity.

Since some of the gates of the mold are formed adjacent to the first appearance plate mold cavity, and the remaining of the gates of the mold are formed adjacent to the second appearance plate mold cavity, a part of a material flowing out of some of the gates of the mold flows to the non-appearance plate mold cavity towards a center of the non-appearance plate mold cavity, and the rest part of the material directly flows to the first appearance plate mold cavity through an edge of the non-appearance plate mold cavity. Therefore, the forming of the first appearance plate is more convenient, and flow liners at the first appearance plate can be reduced. Moreover, in order to prevent superfluous materials from flowing towards the first appearance plate mold cavity after the non-appearance plate mold cavity is filled with the material flowing towards the center of the non-appearance plate mold cavity, to avoid converging, in the first appearance plate mold cavity, of the part of the material with the material originally located in the first appearance plate mold cavity, the post structure is provided at a position on the non-appearance plate mold cavity adjacent to the first appearance plate mold cavity. Thus, it is possible to further prevent the flow liners from being generated on the first appearance plate. Therefore, it is beneficial to improve yield of the first appearance plate, thereby lowering cost and satisfying user's usage demands. Furthermore, when the material flows out of the gate of the mold, a part of the material can directly flow towards the first appearance plate mold cavity, which can shorten a path along which the material flows to the first appearance plate mold cavity from the gate. As a result, it is possible to ensure that the material stably flows to the first appearance plate mold cavity from the non-appearance plate mold cavity, thereby reducing the flow liners at the first appearance plate. Therefore, product yield of the appearance part can be at least improved to some extent, and the user's usage demands can be satisfied.

Similarly, a part of the material flowing out of the remaining of the gates of the mold flows to the non-appearance plate mold cavity towards the center of the non-appearance plate mold cavity, and the rest part of the material directly flows to the second appearance plate mold cavity through the edge of the non-appearance plate mold cavity. Therefore, it is beneficial to preferentially form the second appearance plate and to reduce flow liners at the second appearance plate. Moreover, in order to prevent superfluous materials from flowing to the second appearance plate mold cavity after the non-appearance plate mold cavity is filled with the material flowing towards the center of the non-appearance plate mold cavity, to avoid converging, in the second appearance plate mold cavity, of the part of the material with the material originally located in the second appearance plate mold cavity, the post structure is provided at a position on the non-appearance plate mold cavity adjacent to the second appearance plate mold cavity. Thus, it is possible to prevent flow liners from being generated on the second appearance plate. Therefore, it is beneficial to improve yield of the second appearance plate, thereby lowering the cost and satisfying the user's usage demands. Furthermore, when the material flows out of the gate of the mold, a part of the material can directly flow towards the second appearance plate mold cavity, which can shorten a path along which the material flows to the second appearance plate mold cavity from the gate. As a result, it is possible to ensure that the material stably flows to the second appearance plate mold cavity from the non-appearance plate mold cavity, thereby reducing the flow liners at the second appearance plate. Therefore, the product yield of the appearance part can be at least improved to some extent, and the user's usage demands can be satisfied.

In other embodiments, the non-appearance surface of the first appearance plate has at least one gate forming region adapted to correspond to the gate of the mold, and the at least one blocking hole is formed adjacent to the first appearance plate. In some embodiments, the non-appearance plate has no gate forming region adapted to correspond to the gate of the mold. The non-appearance surface of the first appearance plate has the gate forming region adapted to corresponding to the gate of the mold, or each of the non-appearance surface of the first appearance plate and a non-appearance surface of the second appearance plate has the gate forming region adapted to the gate of the mold.

Some of the plurality of blocking holes are formed adjacent to the first appearance plate, and at least one of the remaining of the plurality of blocking holes is formed adjacent to the second appearance plate.

In some embodiments, after the appearance part blank is formed through the injection molding by the mold and is de-molded from the mold, the part of the material at the gate of the mold is left on the appearance part blank and is formed into the gate forming portion. The gate forming region of the appearance part is a region where the gate forming portion is located. It can be understood that the appearance part blank may be further processed to cut away or partially cut away the gate forming portion. In an example, the gate forming portion of the appearance part blank may not be processed. That is, the gate forming portion is remained on the appearance part. The embodiment of the present disclosure is not limited in this regard, and the gate forming portion may be provide as desired.

Corresponding to the above structures, the mold core has at least one gate located at the non-appearance plate mold cavity, and at least one post structure is formed adjacent to the first appearance plate mold cavity. In an example, in the mold, the mold core has a gate located at the first appearance plate mold cavity, or has a gate located at each of the first appearance plate mold cavity and the second appearance plate mold cavity. The mold cavity has no gate located at the non-appearance plate mold cavity. Some of the plurality of post structures are disposed adjacent to the first appearance plate mold cavity, and at least one of the remaining of the plurality of post structures is disposed adjacent to the second appearance plate mold cavity.

In the mold, the gate is located at the first appearance plate mold cavity. In this way, when flowing out of the gate, the material first flows through the first appearance plate mold cavity, and then preferentially forms the first appearance plate mold cavity, thereby reducing the flow liners at the first appearance plate. Thereafter, the material flows to the non-appearance plate mold cavity. On the one hand, the plurality of post structures disposed adjacent to the first appearance plate mold cavity can block a flow of the material to the non-appearance plate mold cavity, and more materials can be preferentially formed in the first appearance plate mold cavity. On the other hand, the plurality of post structures can block the material located in the non-appearance plate mold cavity from flowing back to the first appearance plate mold cavity, to prevent this material from converging, in the non-appearance plate mold cavity, with the material originally located in the first appearance plate mold cavity. Therefore, it is possible to prevent the flow liners from being generated on the first appearance plate. Therefore, the yield of the first appearance plate can be improved, thereby lowering the cost and satisfying the user's usage demands.

In addition, on the one hand, the plurality of post structures disposed adjacent to the second appearance plate mold cavity can block the flow of the material to the non-appearance plate mold cavity, and more materials can be formed in the second appearance plate mold cavity. On the other hand, it is also possible to block the material located in the non-appearance plate mold cavity from flowing back to the second appearance plate mold cavity, to prevent this material from converging, in the second appearance plate mold cavity, with the material originally located in the second appearance plate mold cavity. Therefore, it is possible to prevent the flow liners from being generated on the second appearance plate. Therefore, the yield of the second appearance plate can be improved, thereby lowering the cost and satisfying the user's usage demands.

With the mold for forming the appearance part according to the embodiments of the present disclosure, it is possible to facilitate the material to be formed in the first appearance plate mold cavity preferentially. Thus, it is possible to at least prevent the flow liners from being generated on the first appearance plate to some extent. Therefore, the yield of the appearance part can be improved, thereby lowering the cost and satisfying the user's usage demands.

With the appearance part according to the embodiments of the present disclosure, it is possible to at least prevent the flow liners from being generated on the first appearance plate to some extent. Therefore, the yield of the appearance part can be improved, thereby lowering the cost and satisfying the user's usage demands.

According to some embodiments of the present disclosure, two ends of the first appearance plate in the peripheral direction of the non-appearance plate are connected to two ends of the second appearance plate in the peripheral direction of the non-appearance plate in one-to-one correspondence. Therefore, structural strength of the appearance part can be enhanced.

According to some embodiments of the present disclosure, the plurality of blocking holes is arranged at intervals in the peripheral direction of the non-appearance plate. Therefore, it is possible to at least prevent the flow liners from being generated on the appearance plate to some extent. Therefore, the yield of the appearance part can be improved, thereby lowering the cost and satisfying the user's usage demands.

According to some embodiments of the present disclosure, a wall thickness of the non-appearance plate is smaller than a wall thickness of an end of the first appearance plate connected to the non-appearance plate. Therefore, it is beneficial for more materials to flow to the first appearance plate, thereby ensuring the forming of the first appearance plate. Therefore, it is possible to ensure a stable flow of the material at the first appearance plate, thereby further reducing the flow liners at the first appearance plate.

According to some embodiments of the present disclosure, a wall thickness of the non-appearance plate is smaller than a wall thickness of an end of the second appearance plate connected to the non-appearance plate. Therefore, it is beneficial for more materials to flow to the first appearance plate, thereby ensuring the forming of the second appearance plate. Therefore, it is possible to ensure a stable flow of the material at the second appearance plate, thereby further reducing the flow liners at the second appearance plate.

According to some embodiments of the present disclosure, a minimum distance between the blocking hole adjacent to the first appearance plate and the first appearance plate is smaller than or equal to 20 mm. In some embodiments, a minimum distance between the post structure adjacent to the first appearance plate mold cavity and the first appearance plate mold cavity is smaller than or equal to 20 mm. For example, the minimum distance may be 18 mm, 15 mm, 14 mm, 12 mm, 10 mm, 8 mm, 9 mm, 5 mm, 4 mm, or 0 mm.

According to some embodiments of the present disclosure, a minimum distance between the blocking hole adjacent to the second appearance plate and the second appearance plate is smaller than or equal to 20 mm. In some embodiments, a minimum distance between each of the post structure adjacent to the second appearance plate mold cavity and the second appearance plate mold cavity is smaller than or equal to 20 mm. For example, the minimum distance may be 18 mm, 15 mm, 14 mm, 12 mm, 10 mm, 8 mm, 9 mm, 5 mm, 4 mm, or 0 mm.

According to some embodiments of the present disclosure, a minimum distance between the gate forming region adjacent to the first appearance plate and the first appearance plate is smaller than or equal to 20 mm. In some embodiments, a minimum distance between the gate adjacent to the first appearance plate mold cavity and the first appearance plate mold cavity is smaller than or equal to 20 mm. For example, the minimum distance may be 18 mm, 15 mm, 14 mm, 12 mm, 10 mm, 8 mm, 9 mm, 5 mm, 4 mm, or 0 mm.

According to some embodiments of the present disclosure, a minimum distance between the gate forming region adjacent to the second appearance plate and the second appearance plate is smaller than or equal to 20 mm. In some embodiments, a minimum distance between the gate adjacent to the second appearance plate mold cavity and the second appearance plate mold cavity is smaller than or equal to 20 mm. For example, the minimum distance may be 18 mm, 15 mm, 14 mm, 12 mm, 10 mm, 8 mm, 9 mm, 5 mm, 4 mm, or 0 mm.

In some embodiments, the side surface of the non-appearance plate in the thickness direction of the non-appearance plate has at least one gate forming region. The first appearance plate extends in the peripheral direction of the non-appearance plate. An end of the first appearance plate in the width direction thereof (i.e., the thickness direction of the non-appearance plate) is connected to the outer peripheral wall of the non-appearance plate. The side surface of the first appearance plate in the thickness direction thereof is an appearance surface, and a wall thickness of the other end of the first appearance plate in the width direction of the first appearance plate is minimum.

In some embodiments, during the injection molding, when the material flows, after a hot melt material flows into the mold cavity through the gate, the hot melt material is brought into contact with a cold inner wall of the mold cavity during its flowing. As a result, the material is quickly solidified on the inner wall of the mold cavity to form a thin solidification layer. A quality of an appearance of a spray-free product depends on an arrangement of metal particles in the solidification layer, and the stable flow can allow for a uniform metal particle orientation to obtain a better appearance. According to the embodiments of the present disclosure, since the other end of the first appearance plate mold cavity in the width direction thereof has the minimum wall thickness, i.e., in the width direction of the first appearance plate mold cavity, a thickness of a part (referred to as a large thickness portion) of the first appearance plate mold cavity adjacent to the non-appearance plate mold cavity and in direct communication with the other end of the first appearance plate mold cavity in the width direction of the first appearance plate mold cavity is necessarily greater than a thickness of the other end (referred to as a small thickness portion) of the first appearance plate mold cavity in the width direction of the first appearance plate mold cavity. In this way, in the peripheral direction of the non-appearance plate mold cavity, when the material flows in the appearance plate mold cavity, since the thickness of the large thickness portion is greater than the thickness of the small thickness portion, the material flows easily at the large thickness portion at a higher flow velocity. As a result, the material has a forward protruding form and an obvious front edge flow at the large thickness portion. Moreover, an actual flow direction of the material at each point on its front edge surface is an outward direction perpendicular to a tangent line of the front edge surface. Therefore, the flow direction at each point on the front edge surface is divergent, and does not intersect with each other, thereby avoiding occurrence of curling and rotation. As a result, it is possible to easily prevent the material at the large thickness portion and the material at the small thickness portion from being curled and rotated at the front edge of the material flow to some extent, to further ensure flow stability of the material. Therefore, flow liners at positions of the appearance plate corresponding to the large thickness portion and the small thickness portion can be reduced. In addition, it is possible to at least improve the product yield of the appearance part to some extent and satisfy the user's usage demands.

There are several wall thickness variation relationships for the first appearance plate, and these wall thickness variation relationships will be described below.

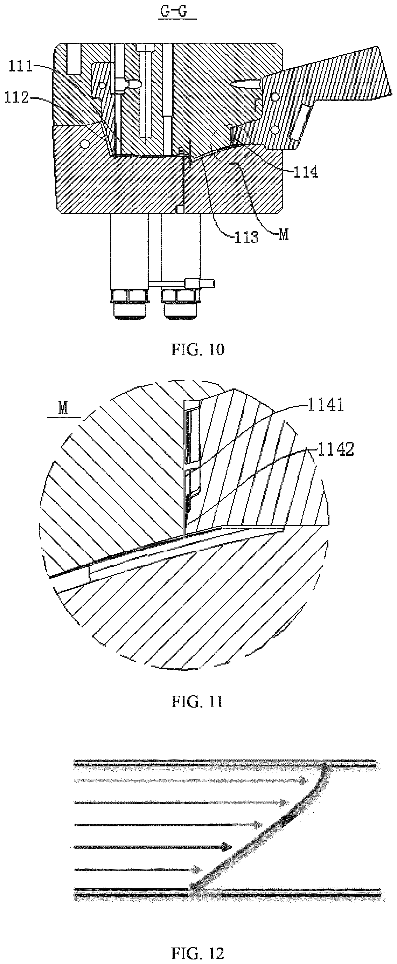

For a first wall thickness variation relationship, the wall thickness of the first appearance plate gradually decreases in a direction from one end to the other end of the first appearance plate in the width direction of the first appearance plate. Correspondingly, in the mold, the thickness of the first appearance plate mold cavity gradually decreases in a direction from one end to the other end of the first appearance plate mold cavity in the width direction of the first appearance plate mold cavity. In this way, in the peripheral direction of the non-appearance plate mold cavity, when the material flows in the first appearance plate mold cavity, depending on the thickness variation of the first appearance plate mold cavity, it is easier for the material to flow at a position where the first appearance plate mold cavity has a large thickness with small flow resistance. As a result, a front edge surface of the material flow may be an inclined surface as illustrated in FIG. 11. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at its front edge can be avoided, and the material has more stable flow. In this manner, it is possible to further reduce the flow liners on the first appearance plate, to further prevent the flow liners from being generated on the appearance surface of the first appearance plate. Therefore, the qualified rate of the first appearance part can be further improved, thereby lowering the cost and satisfying the user's usage demands.

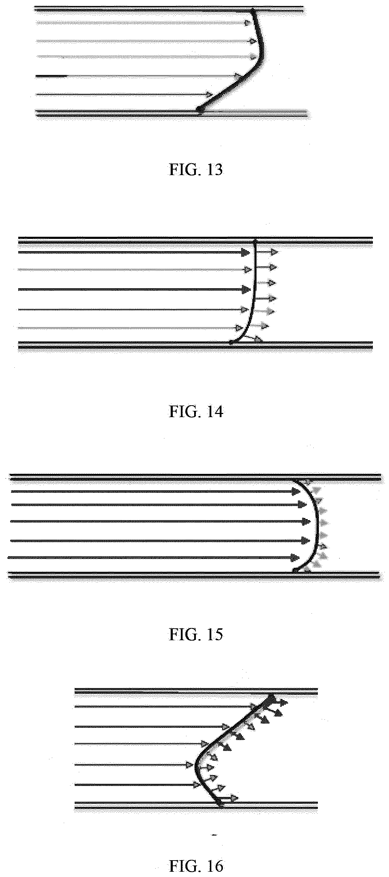

For a second wall thickness variation relationship, the wall thickness of the first appearance plate is first constant and then gradually decreases in the direction from one end to the other end of the first appearance plate in the width direction of the first appearance plate. Correspondingly, in the mold, the thickness of the first appearance plate mold cavity is first constant and then gradually decreases in the direction from one end to the other end of the first appearance plate mold cavity in the width direction of the first appearance plate mold cavity. In this way, in the peripheral direction of the non-appearance plate mold cavity, when the material flows along the first appearance plate mold cavity, depending on the thickness variation of the first appearance plate mold cavity, it is easier for the material to flow at the position where the first appearance plate mold cavity has the large thickness with small flow resistance. As a result, as illustrated in FIG. 14, the front edge surface of the material flow may include a surface substantially parallel to the width direction of the first appearance plate mold cavity at a same thickness and an inclined surface towards an upstream of the material flow at a gradually decreasing thickness. Moreover, the actual flow direction of the material at each point on its front edge surface is an outward direction perpendicular to the tangent line of the front edge surface. Therefore, the flow direction at each point on the front edge surface is divergent, and does not intersect with each other. As a result, the curling and rotation of the material at the front edge can be avoided, and the material has more stable flow. In this manner, it is possible to further reduce the flow liners on the first appearance plate, to further prevent the flow liners from being generated on the appearance surface of the first appearance plate. Therefore, the qualified rate of the first appearance part can be further improved, thereby lowering the cost and satisfying the user's usage demands.

For a third wall thickness variation relationship, the wall thickness of the first appearance plate first gradually increases and then gradually decreases in the direction from one end to the other end of the first appearance plate in the width direction of the first appearance plate. Correspondingly, in the mold, the thickness of the first appearance plate mold cavity first gradually increases and then gradually decreases in the direction from one end to the other end of the first appearance plate mold cavity in the width direction of the first appearance plate mold cavity. In this way, in the peripheral direction of the non-appearance plate mold cavity, when the material flows along the first appearance plate mold cavity, depending on the thickness variation of the first appearance plate mold cavity, it is easier for the material to flow at the position where the first appearance plate mold cavity has the large thickness with small flow resistance. As a result, the front edge surface of the material flow may have a forwarding protruding form as illustrated in FIG. 13. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at the front edge can be avoided, and the material has more stable flow. In this manner, it is possible to further reduce the flow liners on the first appearance plate, to further prevent the flow liners from being generated on the appearance surface of the first appearance plate. Therefore, the qualified rate of the first appearance part can be further improved, thereby lowering the cost and satisfying the user's usage demands.

For a fourth wall thickness variation relationship, in the direction from one end to the other end of the first appearance plate in the width direction of the first appearance plate, the wall thickness of the first appearance plate first gradually increases, then remains constant, and then gradually decreases. Correspondingly, in the mold, in the direction from one end to the other end of the first appearance plate mold cavity in the width direction of the first appearance plate mold cavity, the thickness of the first appearance plate mold cavity first gradually increases, then remains constant, and then gradually decreases. In this way, in the peripheral direction of the non-appearance plate mold cavity, when the material flows along the first appearance plate mold cavity, depending on the thickness variation of the first appearance plate mold cavity, it is easier for the material to flow at the position where the first appearance plate mold cavity has the large thickness with small flow resistance. As a result, the front edge surface of the material flow may have a forward protruding form as illustrated in FIG. 15. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at the front edge can be avoided, and the material has more stable flow. In this manner, it is possible to further reduce the flow liners on the first appearance plate, to further prevent the flow liners from being generated on the appearance surface of the first appearance plate. Therefore, the qualified rate of the first appearance part can be further improved, thereby lowering the cost and satisfying the user's usage demands.

Therefore, compared with a recessed front edge surface illustrated in FIG. 16 in the related art, according to the above embodiments of the present disclosure, it is more conducive to the reduction of the flow liners on the panel side plate 102.

In some embodiments of the present disclosure, a maximum wall thickness of the first appearance plate ranges from 2.5 mm to 3.5 mm. Correspondingly, a maximum thickness of the first appearance plate mold cavity ranges from 2.5 mm to 3.5 mm. Therefore, it is beneficial to ensure fluidity of the material in the first appearance plate mold cavity to ensure that the first appearance plate mold cavity is filled with the material. As a result, it is possible to at least reduce the flow liners on the first appearance plate to some extent. Thus, the product yield can be improved. Moreover, it is also possible to ensure structural strength of the first appearance plate, and avoid heavy product and material wasting due to too large thickness of the first appearance plate.

For example, the maximum wall thickness of the first appearance plate is 2.6 mm, 2.7 mm, 2.8 mm, 2.9 mm, 3.0 mm, 3.1 mm, 3.2 mm, or 3.3 mm.

In some embodiments of the present disclosure, a minimum wall thickness of the first appearance plate ranges from 1.5 mm to 2.5 mm. Correspondingly, a minimum thickness of the first appearance plate mold cavity ranges from 1.5 mm to 2.5 mm. Therefore, it is beneficial to ensure fluidity of the material in the second appearance plate to ensure that the second appearance plate mold cavity is filled with the material. As a result, it is possible to at least reduce the flow liners on the second appearance plate to some extent. Thus, the product yield can be improved. Moreover, it is possible to ensure structural strength of the second appearance plate.

For example, the minimum wall thickness of the first appearance plate is 1.6 mm, 1.7 mm, 1.8 mm, 1.9 mm, 2.0 mm, 2.1 mm, 2.2 mm, or 2.3 mm.

In some embodiments of the present disclosure, a wall thickness of an end of the non-appearance plate connected to the first appearance plate is not greater than a wall thickness of an end of the first appearance plate in the width direction of the appearance plate. Correspondingly, in the mold, a thickness of an end, in communication with the first appearance plate mold cavity, of the non-appearance plate mold cavity is not greater than a thickness of an end of the first appearance plate mold cavity in the width direction of the first appearance plate mold cavity. Therefore, when the material flows out of the gate of the mold adjacent to the first appearance plate mold cavity, more materials can flow directly into the first appearance plate mold cavity easily, which can further ensure the stable flow of the material at the first appearance plate, thereby reducing the flow liners at the first appearance plate.

In some embodiments of the present disclosure, the wall thickness of the end of the non-appearance plate connected to the first appearance plate is smaller than the wall thickness of the end of the first appearance plate in the width direction of the first appearance plate. Therefore, when the material flows out of the gate of the mold adjacent to the first appearance plate mold cavity, more materials can flow directly into the first appearance plate mold cavity easily, which can further ensure the stable flow of the material on the first appearance plate, thereby reducing the flow liners at the first appearance plate.

In some embodiments of the present disclosure, the wall thickness of the end of the non-appearance plate connected to the first appearance plate is smaller than the minimum wall thickness of the first appearance plate. Therefore, when the material flows out of the gate of the mold adjacent to the first appearance plate mold cavity, more materials can flow directly into the first appearance plate mold cavity easily, which can further ensure the stable flow of the material on the first appearance plate, thereby reducing the flow liners at the first appearance plate.

In some embodiments of the present disclosure, the wall thickness of the non-appearance plate is smaller than the wall thickness of the end of the first appearance plate connected to the non-appearance plate. Correspondingly, in the mold, the wall thickness of the non-appearance plate mold cavity is smaller than the wall thickness of the end, in communication with the non-appearance plate mold cavity, of the first appearance plate mold cavity. Therefore, when the material flows out of the gate of the mold adjacent to the first appearance plate mold cavity, more materials can flow directly into the first appearance plate mold cavity easily, which can further ensure the stable flow of the material on the first appearance plate, thereby reducing the flow liners at the first appearance plate.

In some embodiments of the present disclosure, the wall thickness of the non-appearance plate is smaller than the wall thickness of the first appearance plate. That is, the wall thickness of the non-appearance plate is smaller than the minimum wall thickness of the first appearance plate. Correspondingly, in the mold, the thickness of the non-appearance plate mold cavity is smaller than the minimum thickness of the first appearance plate mold cavity. Therefore, when the material flows out of the gate of the mold adjacent to the first appearance plate mold cavity, more materials can flow directly into the first appearance plate mold cavity easily, which can further ensure the stable flow of the material on the first appearance plate, thereby reducing the flow liners at the first appearance plate.

In some embodiments of the present disclosure, the wall thickness of the non-appearance plate is smaller than the wall thickness of the end of the second appearance plate connected to the non-appearance plate. Correspondingly, in the mold, the wall thickness of the non-appearance plate mold cavity is smaller than the wall thickness of the end, in communication with the non-appearance plate mold cavity, of the second appearance plate mold cavity. Therefore, when the material flows out of the gate of the mold adjacent to the second appearance plate mold cavity, more materials can flow directly into the second appearance plate mold cavity easily, which can further ensure the stable flow of the material on the second appearance plate, thereby reducing the flow liners at the second appearance plate.

In some embodiments of the present disclosure, the wall thickness of the non-appearance plate is smaller than the wall thickness of the second appearance plate. That is, the wall thickness of the non-appearance plate is smaller than the minimum wall thickness of the second appearance plate. Therefore, when the material flows out of the gate of the mold adjacent to the second appearance plate mold cavity, more materials can flow directly into the second appearance plate mold cavity easily, which can further ensure the stable flow of the material on the second appearance plate, thereby reducing the flow liners at the second appearance plate.

A household appliance according to the embodiments of the present disclosure includes the appearance part as described above.

With the household appliance according to the embodiments of the present disclosure, by providing the above appearance part, it is possible to at least prevent the flow liners from being generated on the appearance plate to some extent. Therefore, the qualified rate of the appearance part can be improved, thereby lowering the cost and satisfying the user's usage demands.

A description of a specific structure of an appearance part will be provided below taking a control panel as an example.

A core component of the laundry treating device, such as a control panel 10 of a front-load washing machine, is configured to control the washing machine for implementing programs such as washing, dehydrating, and drying, and has dual requirements of function and appearance.

Generally, a manufacturing process for the control panel 10 is mostly implemented through an injection molding and spraying process, and the sprayed control panel 10 has a gorgeous metal appearance effect. However, the spraying process has the defects such as serious pollution, high cost, low qualified rate, unrecyclable unqualified product, and the like, which seriously affects health of environment and production personnel, and does not conform to the green manufacturing concept. In order to overcome the defects in the spraying process, a spraying-free thermoplastic engineering material emerges, and the metal appearance effect of a product can be given by spraying-free injection molding. As a result, the spraying process can be replaced, thereby lowering production cost. Meanwhile, it is possible to avoid emission of pollutants during the spraying.

No matter whether the control panel 10 is manufactured by using a spraying-free material or through the injection molding and spraying process, for a material with poor fluidity, especially for a spraying-free material including metal particles, since there are the metal particles and other substances in the spraying-free material, uneven arrangement of the metal particles may be generated due to an obstruction to the material when flowing during the injection molding. As a result, the injection-molded product may occur light scattering under an irradiation of light, and flow liners thus are visually generated on the product, which results in a flow liner defect on the product. When the flow liners are generated on an appearance surface of the appearance part, the flow liners not only lead to low qualified rate, but also cannot satisfy user's usage demands. A description will be provided below taking the spraying-free material including metal particles as an example. That is, the control panel 10 may be a spray-free piece including a resin matrix and metal particles distributed in the resin matrix. Optionally, the metal particles are aluminum, silver, or copper.

According to the embodiments of the present disclosure, a control panel 10, a laundry treating device, and a panel mold 1 for forming the control panel 10 will be described below. The control panel 10 is an integral injection-molding piece. As a result, a structure of the integral piece not only can ensure structural and performance stability of the control panel 10, but also leads to convenient forming and simple manufacturing. Moreover, redundant assembly parts and connection steps can be removed, and connection reliability of the control panel 10 can be ensured. Furthermore, the integrally formed structure is high in overall strength and stability, is more convenient to be assembled, and is longer in service life. Optionally, the laundry treating device may be a washing machine, clothes dryer, or a washing and drying integrated machine.

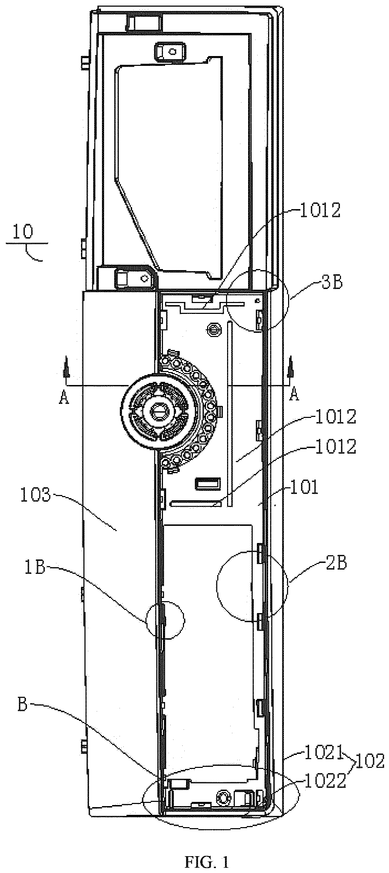

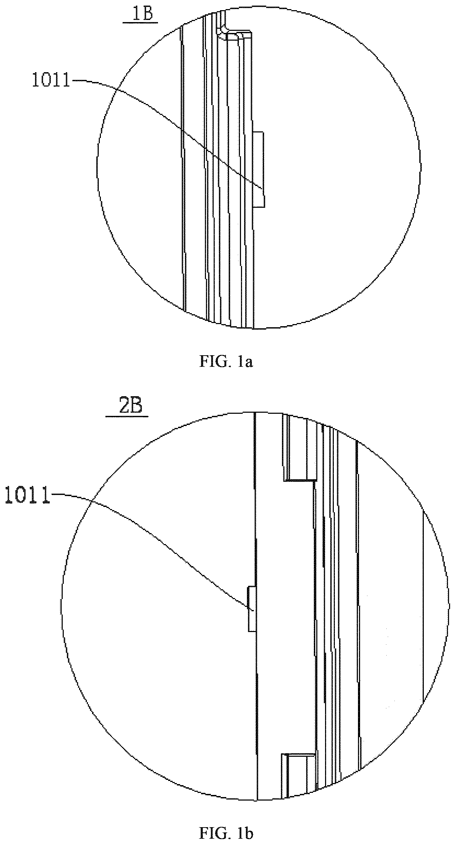

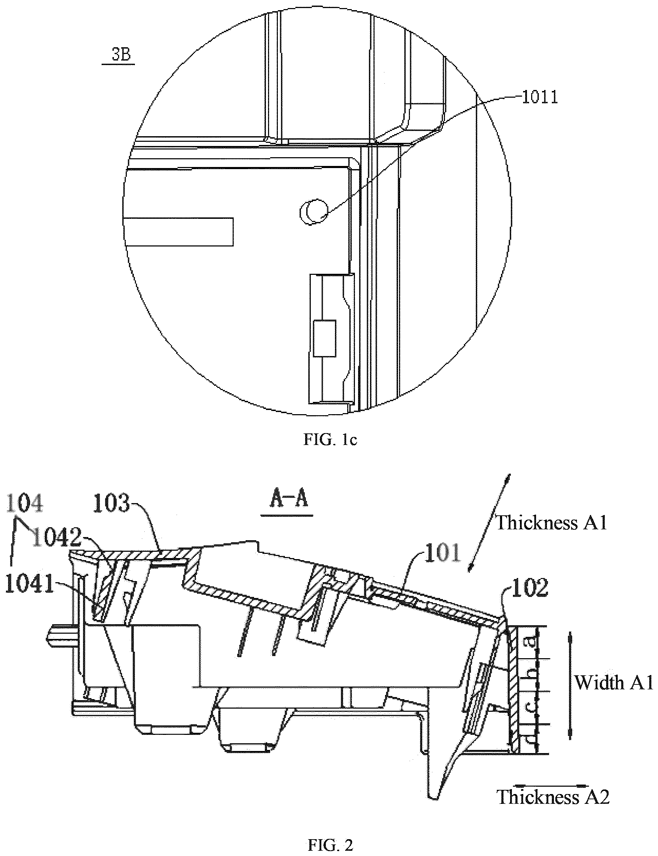

As illustrated in FIG. 1 and FIG. 2, according to embodiments of the present disclosure, a control panel 10 of a laundry treating device includes a panel connection plate 101 and a panel side plate 102.

A surface of the panel connection plate 101 is referred to as a non-appearance surface. That is, when the control panel 10 is applied in the laundry treating device, the surface of the panel connection plate 101 is not exposed.

The panel side plate 102 extends in a peripheral direction of the panel connection plate 101. An end of the panel side plate 102 in a width direction thereof is connected to an outer peripheral wall of the panel connection plate 101. A side surface of the panel side plate 102 facing away from the panel connection plate 101 in a thickness direction of the panel side plate 102 is an appearance surface. It should be noted that the end of the panel side plate 102 in the width direction thereof is an end connected to the panel connection plate 101, and another end of the panel side plate 102 in the width direction thereof is an end away from the panel connection plate 101.

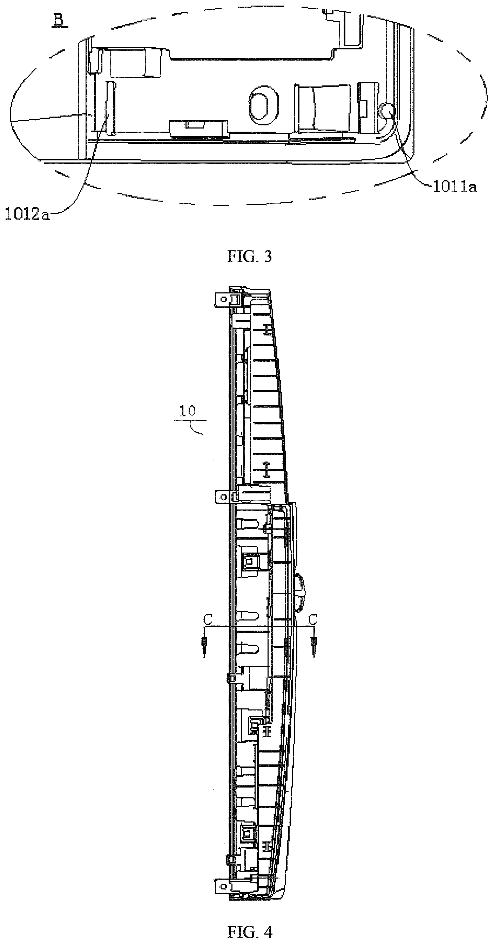

In some embodiments, as illustrated in FIG. 1a, FIG. 1b, FIG. 1c, and FIG. 3, the panel connection plate 101 has at least one panel gate forming region 1011 on a side surface of the panel connection plate 101 in a thickness direction thereof. The at least one panel gate forming region 1011 is adapted to correspond to a panel gate 1111 of the panel mold 1, and is formed adjacent to the panel side plate 102. The at least one panel gate forming region 1011 is located adjacent to the panel side plate 102, and the other end of the panel side plate 102 in the width direction thereof (i.e., an end away from the panel connection plate 101) has a minimum thickness. In this way, it is possible to at least reduce flow liners on the panel side plate 102 to some extent, to at least prevent the flow liners from being generated on an appearance surface of the panel side plate 102 to some extent. Therefore, qualified rate of the control panel 10 can be at least improved to some extent, thereby lowering cost and satisfying the user's usage demands.

In some embodiments, an end, adjacent to the panel connection plate 101, of a side surface of the panel side plate 102 facing away from the appearance surface of the panel side plate 102 has at least one panel gate forming region 1011. The panel gate forming region 1011 is adapted to correspond to the panel gate 1111 of the panel mold 1. The other end of the panel side plate 102 in the width direction thereof (i.e., the end away from the panel connection plate 101) has a minimum wall thickness. Thus, it is possible to at least reduce the flow liners on the panel side plate 102 to some extent, to at least prevent the flow liners from being generated on the appearance surface of the panel side plate 102 to some extent. Therefore, the qualified rate of the control panel 10 can be at least improved to some extent, thereby lowering the cost and satisfying the user's usage demands.

In some embodiments, after a control panel blank is formed through injection molding by the panel mold 1 and is de-molded from the panel mold 1, a part of a material at the panel gate 1111 of the panel mold 1 is left on the control panel blank and is formed into a panel gate forming portion. The panel gate forming region 1011 of the control panel 10 is a region where the panel gate forming portion is located. It can be understood that the control panel blank may be further processed to cut away or partially cut away the panel gate forming portion. In an example, the panel gate forming portion of the control panel blank may not be processed. That is, the panel gate forming portion is remained on the control panel 10. The embodiment of the present disclosure is not limited in this regard, and the panel gate forming portion may be provide as desired.

In order to facilitate explaining the reason why the flow liners on the panel side plate 102 are reduced, a panel mold 1 according to embodiments of the present disclosure will be described below, and the reason why the flow liners on the appearance surface of the panel side plate 102 are reduced is illustrated in principle and in combination with a structure of the panel mold 1.

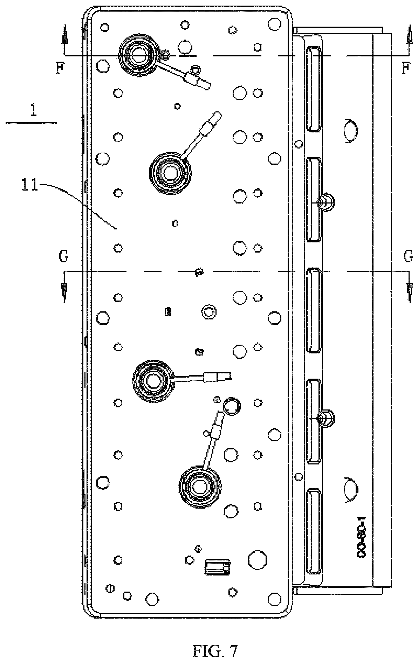

As illustrated in FIG. 7, according to the embodiments of the present disclosure, the panel mold 1 configured to shape the control panel 10 of the laundry treating device includes a panel mold core 11. The panel mold core 11 has a panel mold cavity.

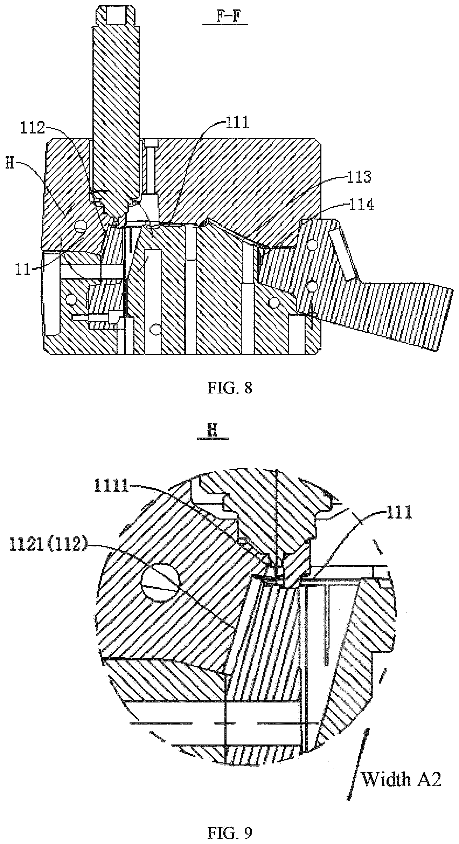

As illustrated in FIG. 8 and FIG. 9, the panel mold cavity includes a panel connection plate mold cavity 111 and a panel side plate mold cavity 112. The panel connection plate mold cavity 111 is configured to shape the panel connection plate 101 as described above. The panel side plate mold cavity 112 is configured to shape the panel side plate 102 as described above. The panel side plate mold cavity 112 extends in a peripheral direction of the panel connection plate mold cavity 111. An end of the panel side plate mold cavity 112 in a width direction thereof is in communication with an outer periphery of the panel connection plate mold cavity 111, and another end of the panel side plate mold cavity 112 in the width direction thereof has a minimum thickness. A side wall surface of the panel side plate mold cavity 112 away from the panel connection plate mold cavity 111 in a thickness direction of the panel side plate mold cavity 112 is configured to shape an appearance surface of the panel side plate 102. It can be understood that the end of the panel side plate mold cavity 112 in the width direction thereof is an end in communication with the panel connection plate mold cavity 111, and the other end of the panel side plate mold cavity 112 in the width direction thereof is an end away from the outer periphery of the panel connection plate mold cavity 111.

In some embodiments, as illustrated in FIG. 9, the panel mold core 11 has at least one panel gate 1111 located on a side wall surface of the panel connection plate mold cavity 111 in a thickness direction of the panel connection plate mold cavity 111. The at least one panel gate 1111 is formed adjacent to the panel side plate mold cavity 112.

In some embodiments, the panel mold core 11 has at least one panel gate 1111 located on another side wall surface of the panel side plate mold cavity 112 in in the thickness direction of the panel side plate mold cavity 112 (i.e., a side wall surface opposite to an appearance surface for forming the panel side plate 102) and the adjacent to the panel connection plate mold cavity 111.

The reason why the flow liners are reduced will be set forth taking the panel gate 1111 being located at the panel connection plate mold cavity 111 as an example. After reading the following description, it will be apparent to those skilled in the art that flow liners can be reduced when the panel gate 111 is located at the panel side plate mold cavity 112.

In some embodiments, during the injection molding, after a hot melt material flows into the panel mold cavity through the panel gate 1111, the hot melt material is brought into contact with a cold inner wall of the panel mold cavity during its flowing. As a result, the material is quickly solidified on the inner wall of the panel mold cavity to form a thin solidification layer. A quality of an appearance of a spray-free product depends on an arrangement of metal particles in the solidification layer, and the stable flow can allow for a uniform metal particle orientation to obtain a better appearance.

According to the embodiments of the present disclosure, at least one panel gate 1111 of the panel mold 1 is located on the side wall surface of the panel connection plate mold cavity 111 in the thickness direction of the panel connection plate mold cavity 111, and at least one of the panel gates 1111 is located adjacent to the panel side plate mold cavity 112. In this way, when the material flows out of the panel gate 1111 of the panel mold 1, a part of the material can directly flow towards the panel side plate mold cavity 112, which can shorten a path along which the material flows to the panel side plate mold cavity 112 from the panel gate 1111. As a result, it is possible to easily ensure that the material stably flows to the panel side plate mold cavity 112 from the panel connection plate mold cavity 111, thereby reducing the flow liners at the panel side plate 102. Therefore, product yield of the control panel 10 can be improved to some extent, and the user's usage demands can be satisfied.

Moreover, since the other end of the panel side plate mold cavity 112 in the width direction thereof has the minimum wall thickness, i.e., in the width direction of the panel side plate mold cavity 112, a thickness of a part (referred to as a large thickness portion) of the panel side plate mold cavity 112 adjacent to the panel connection plate mold cavity 111 and in direct communication with the other end of the panel side plate mold cavity 112 in the width direction of the panel side plate mold cavity 112 is necessarily greater than the thickness of the other end (referred to as a small thickness portion) of the panel side plate mold cavity 112 in the width direction of the panel side plate mold cavity 112. In this way, in the peripheral direction of the panel connection plate mold cavity 111, when the material flows in the panel side plate mold cavity 112, since the thickness of the large thickness portion is greater than the thickness of the small thickness portion, the material flows easily at the large thickness portion at a higher flow velocity. As a result, the material has a forward protruding form and an obvious front edge flow at the large thickness portion. Moreover, an actual flow direction of the material at each point on its front edge surface is an outward direction perpendicular to a tangent line of the front edge surface. Therefore, the flow direction at each point on the front edge surface is divergent, and does not intersect with each other. As a result, curling and rotation can be avoided, which can easily prevent the material at the large thickness portion and the material at the small thickness portion from being curled and rotated at the front edge of the material flow to some extent, to further ensure flow stability of the material. Therefore, flow liners at positions of the panel side plate 102 corresponding to the large thickness portion and the small thickness portion can be reduced. In addition, it is possible to at least improve the product yield of the control panel 10 to some extent and satisfy the user's usage demands.

There are several wall thickness variation relationships for the panel side plate 102, and these wall thickness variation relationships will be described below.

For a first wall thickness variation relationship, the wall thickness of the panel side plate 102 gradually decreases in a direction from one end to the other end of the panel side plate 102 in the width direction of the panel side plate 102. Correspondingly, in the panel mold 1, the thickness of the panel side plate mold cavity 112 gradually decreases in a direction from one end to the other end of the panel side plate mold cavity 112 in the width direction of the panel side plate mold cavity 112. In this way, in the peripheral direction of the panel connection plate mold cavity 111, when the material flows in the panel side plate mold cavity 112, depending on the thickness variation of the panel side plate mold cavity 112, it is easier for the material to flow at a position where the panel side plate mold cavity 112 has a large thickness with small flow resistance. As a result, a front edge surface of the material flow may be an inclined surface as illustrated in FIG. 12. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at its front edge can be avoided, and the material has more stable flow. In this manner, it is possible to further reduce the flow liners on the panel side plate 102, to further prevent the flow liners from being generated on the appearance surface of the panel side plate 102. Therefore, the qualified rate of the control panel 10 can be further improved, thereby lowering the cost and satisfying the user's usage demands.

For a second wall thickness variation relationship, the wall thickness of the panel side plate 102 is first constant and then gradually decreases in the direction from one end to the other end of the panel side plate 102 in the width direction of the panel side plate 102. Correspondingly, in the panel mold 1, the thickness of the panel side plate mold cavity 112 is first constant and then gradually decreases in the direction from one end to the other end of the panel side plate mold cavity 112 in the width direction of the panel side plate mold cavity 112. In this way, in the peripheral direction of the panel connection plate mold cavity 111, when the material flows along the panel side plate mold cavity 112, depending on the thickness variation of the panel side plate mold cavity 112, it is easier for the material to flow at the position where the panel side plate mold cavity 112 has the large thickness with small flow resistance. As a result, as illustrated in FIG. 14, the front edge surface of the material flow may include a surface substantially parallel to the width direction of the panel side plate mold cavity 112 at a same thickness and an inclined surface towards an upstream of the material flow at a gradually decreasing thickness. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at the front edge can be avoided, and the material has more stable flow. In this manner, it is possible to further reduce the flow liners on the panel side plate 102, to further prevent the flow liners from being generated on the appearance surface of the panel side plate 102. Therefore, the qualified rate of the control panel 10 can be further improved, thereby lowering the cost and satisfying the user's usage demands.

For a third wall thickness variation relationship, the wall thickness of the panel side plate 102 first gradually increases and then gradually decreases in the direction from one end to the other end of the panel side plate 102 in the width direction of the panel side plate 102. Correspondingly, in the panel mold 1, the thickness of the panel side plate mold cavity 112 first gradually increases and then gradually decreases in the direction from one end to the other end of the panel side plate mold cavity 112 in the width direction of the panel side plate mold cavity 112. In this way, in the peripheral direction of the panel connection plate mold cavity 111, when the material flows along the panel side plate mold cavity 112, depending on the thickness variation of the panel side plate mold cavity 112, it is easier for the material to flow at the position where the panel side plate mold cavity 112 has the large thickness with small flow resistance. As a result, the front edge surface of the material flow may have a forwarding protruding form as illustrated in FIG. 13. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at the front edge can be avoided, and the material has more stable flow. In this manner, it is possible to further reduce the flow liners on the panel side plate 102, to further prevent the flow liners from being generated on the appearance surface of the panel side plate 102. Therefore, the qualified rate of the control panel 10 can be further improved, thereby lowering the cost and satisfying the user's usage demands.

For a fourth wall thickness variation relationship, in the direction from one end to the other end of the panel side plate 102 in the width direction of the panel side plate 102, the wall thickness of the panel side plate 102 first gradually increases, then remains constant, and then gradually decreases. Correspondingly, in the panel mold 1, in the direction from one end to the other end of the panel side plate mold cavity 112 in the width direction of the panel side plate mold cavity 112, the thickness of the panel side plate mold cavity 112 first gradually increases, then remains constant, and then gradually decreases. In this way, in the peripheral direction of the panel connection plate mold cavity 111, when the material flows along the panel side plate mold cavity 112, depending on the thickness variation of the panel side plate mold cavity 112, it is easier for the material to flow at the position where the panel side plate mold cavity 112 has the large thickness with small flow resistance. As a result, the front edge surface of the material flow may have a forward protruding form as illustrated in FIG. 15. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at the front edge can be avoided, and the material has more stable flow. In this manner, it is possible to further reduce the flow liners on the panel side plate 102, to further prevent the flow liners from being generated on the appearance surface of the panel side plate 102. Therefore, the qualified rate of the control panel 10 can be further improved, thereby lowering the cost and satisfying the user's usage demands.

Therefore, compared with a recessed front edge surface illustrated in FIG. 16 in the related art, according to the above embodiments of the present disclosure, it is more conducive to the reduction of the flow liners on the panel side plate 102.

For explanation, provided below is that the larger the wall thickness is, the faster a flow velocity of the material is.

When the material is injected into the panel mold 1 under a predetermined condition, a temperature of the material is sharply decreased due to contact with a cold wall surface of the panel mold cavity, and generates the solidification layer. In addition, a flow area of the panel mold cavity is reduced as a thickness of the solidification layer increases. As a result, the thickness of the solidification layer has an important influence on convection resistance. A relationship between the fluidity s and the thickness h of the panel mold cavity satisfies formula I.

$$s = \int_0^k \frac{z^2}{\eta} z = \frac{h^3}{3\eta_{rep}}$$

（Formula I）

where $\eta_{rep}$ represents viscosity of the material.

According to the fluidity formula, the fluidity s is proportional to a cube of the thickness h. For example, when the thickness is reduced by fifty percent, the fluidity will be reduced to one eighth, which means that the flow resistance is increased to eight times. As a result, the thicker the panel mold cavity, the lower the flow resistance, the better the fluidity, and the faster the flow velocity.

With the panel mold 1 for forming the control panel 10 of the household appliance according to the embodiments of the present disclosure, the other end of the control panel mold cavity 112 in the width direction of the control panel mold cavity 112 has the minimum thickness. In this way, it is possible to at least reduce the flow liners on the panel side plate 102 to some extent, to at least prevent the flow liners from being generated on the appearance surface of the panel side plate 102 to some extent. Therefore, the qualified rate of the control panel 10 can be at least improved to some extent, thereby lowering the cost and satisfying the user's usage demands.

With the control panel 10 of the laundry treating device according to the embodiments of the present disclosure, the other end of the panel side plate 102 in the width direction of the panel side plate 102 has the minimum wall thickness. In this way, it is possible to at least reduce the flow liners on the panel side plate 102 to some extent, to at least prevent the flow liners from being generated on the appearance surface of the panel side plate 102 to some extent. Therefore, the qualified rate of the control panel 10 can be at least improved to some extent, thereby lowering the cost and satisfying the user's usage demands.

In some embodiments of the present disclosure, a maximum wall thickness of the panel side plate 102 ranges from 2.5 mm to 3.5 mm. Correspondingly, a maximum thickness of the panel side plate mold cavity 112 ranges from 2.5 mm to 3.5 mm. Therefore, it is beneficial to ensure the fluidity of the material in the panel side plate mold cavity 112 to ensure that the panel side plate mold cavity 112 is filled with the material. As a result, it is possible to at least reduce the flow liners on the panel side plate 102 to some extent. Thus, the product yield can be improved. Moreover, it is also possible to ensure structural strength of the panel side plate 102, and avoid heavy product and material wasting due to too large thickness of the panel side plate 102.

For example, the maximum wall thickness of the panel side plate 102 is 2.6 mm, 2.7 mm, 2.8 mm, 2.9 mm, 3.0 mm, 3.1 mm, 3.2 mm, 3.3 mm, or 3.4 mm.

In some embodiments of the present disclosure, a minimum wall thickness of the panel side plate 102 ranges from 1.5 mm to 2.5 mm. Correspondingly, a minimum thickness of the panel side plate mold cavity 112 ranges from 1.5 mm to 2.5 mm. Therefore, it is beneficial to ensure the fluidity of the material in the panel side plate 102 to ensure that the panel side plate 102 is filled with the material. As a result, it is possible to at least reduce the flow liners on the panel side plate 102 to some extent. Thus, the product yield can be improved. Moreover, it is possible to ensure the structural strength of the panel side plate 102.

For example, the minimum wall thickness of the panel side plate 102 is 1.6 mm, 1.7 mm, 1.8 mm, 1.9 mm, 2.0 mm, 2.1 mm, 2.2 mm, 2.3 mm, or 2.4 mm.

In some embodiments of the present disclosure, as illustrated in FIG. 2, the panel side plate 102 is divided into four equal sections in the width direction of the panel side plate 102. In the direction from one end to the other end of the panel side plate 102 in the width direction of the panel side plate 102, the four sections are sequentially referred to as a section a, a section b, a section c, and a section d.

Optionally, a wall thickness of the section a > a wall thickness of the section b > a wall thickness of the section c > a wall thickness of the section d. The wall thickness of the section a ranges from 2.8 mm to 3.5 mm. The wall thickness of the section b ranges from 2.5 mm to 3.0 mm. The wall thickness of the section c ranges from 2.5 mm to 2.8 mm. The wall thickness of the section d ranges from 1.5 mm to 2.5 mm.

Optionally, the wall thickness of the section b > the wall thickness of the section a > the wall thickness of the section c > the wall thickness of the section d. The wall thickness of the section a ranges from 2.5 mm to 2.8 mm. The wall thickness of the section b ranges from 2.8 mm to 3.5 mm. The wall thickness of the section c ranges from 2.5 mm to 2.8 mm. The wall thickness of the section d ranges from 1.5 mm to 2.5 mm.

Optionally, the wall thickness of the section a = the wall thickness of the section b = the wall thickness of the section c > the wall thickness of the section d. The wall thickness of the section a ranges from 2.5 mm to 3.5 mm. The wall thickness of the section d ranges from 1.5 mm to 2.5 mm.

Optionally, the wall thickness of the section a > the wall thickness of the section b = the wall thickness of the section c > the wall thickness of the section d. The wall thickness of the section a ranges from 2.5 mm to 3.5 mm. The wall thickness of the section d ranges from 1.5 mm to 2.5 mm.

In some embodiments of the present disclosure, a wall thickness of an end of the panel connection plate 101 connected to the panel side plate 102 is not greater than a wall thickness of an end of the panel side plate 102 in the width direction of the panel side plate 102. Correspondingly, in the panel mold 1, a thickness of an end, in communication with the panel side plate mold cavity 112, of the panel connection plate mold cavity 111 is not greater than a thickness of an end of the panel side plate mold cavity 112 in the width direction of the panel side plate mold cavity 112. Therefore, when the material flows out of the panel gate 1111 of the panel mold 1 adjacent to the panel side plate mold cavity 112, more materials can flow directly into the panel side plate mold cavity 112 easily, which can further ensure the stable flow of the material on the panel side plate 102, thereby reducing the flow liners at the panel side plate 102.

In some embodiments of the present disclosure, the wall thickness of the end of the panel connection plate 101 connected to the panel side plate 102 is smaller than the wall thickness of the end of the panel side plate 102 in the width direction of the panel side plate 102. Correspondingly, in the panel mold 1, the thickness of the end, in communication with the panel side plate mold cavity 112, of the panel connection plate mold cavity 111 is smaller than the thickness of the end of the panel side plate mold cavity 112 in the width direction of the panel side plate mold cavity 112. Therefore, when the material flows out of the panel gate 1111 of the panel mold 1 adjacent to the panel side plate mold cavity 112, more materials can flow directly into the panel side plate mold cavity 112 easily, which can further ensure the stable flow of the material on the panel side plate 102, thereby reducing the flow liners at the panel side plate 102.

In some embodiments of the present disclosure, the wall thickness of the panel connection plate 101 is smaller than the wall thickness of the panel side plate 102. That is, the wall thickness of the panel connection plate 101 is smaller than the minimum wall thickness of the panel side plate 102. Correspondingly, in the panel mold 1, the thickness of the panel connection plate mold cavity 111 is smaller than the minimum thickness of the panel side plate mold cavity 112. Therefore, when the material flows out of the panel gate 1111 of the panel mold 1 adjacent to the panel side plate mold cavity 112, more materials can flow directly into the panel side plate mold cavity 112 easily, which can further ensure the stable flow of the material on the panel side plate 102, thereby reducing the flow liners at the panel side plate 102.

In some embodiments of the present disclosure, the panel connection plate 101 is a connection plate of a constant wall thickness. Thus, the structure of the panel mold 1 can be simplified.

According to some embodiments of the present disclosure, in the panel gate forming region 1011 on the panel connection plate 101, a minimum distance between the panel gate forming region 1011 adjacent to the panel side plate 102 and the panel side plate 102 is smaller than or equal to 20 mm. Correspondingly, in the panel mold 1, the panel mold core has at least one panel gate 1111 located on the side wall surface of the panel connection plate mold cavity 111 in the thickness direction of the panel connection plate mold cavity 111, and a minimum distance between the panel gate 1111 adjacent to the panel side plate mold cavity 112 and the panel side plate mold cavity 112 is smaller than or equal to 20 mm. Optionally, the distance may be 18 mm, 16 mm, 12 mm, 10 mm, 8 mm, 5 mm, or 0 mm. In this way, it is possible to allow more materials to flow directly into the panel side plate mold cavity 112 easily, to further ensure the stable flow of material on the panel side plate 102, thereby reducing the flow liners at the panel side plate 102.

In some embodiments of the present disclosure, a minimum distance between the panel gate forming region 1011 located at the panel side plate 102 and the panel connection plate 101 is smaller than or equal to 10 mm. Correspondingly, in the panel mold 1, the panel mold core has at least one panel gate 1111 located on the other side wall surface of the panel side plate mold cavity 112 in the thickness direction of the panel side plate mold cavity 112 and adjacent to the panel connection plate mold cavity 111, and a minimum distance between the panel gate 1111 and the panel connection plate mold cavity 111 is smaller than or equal to 10 mm. For example, the minimum distance may be 5 mm, 2 mm, or 0 mm. Therefore, it is beneficial that more materials can flow directly into the panel side plate mold cavity 112 easily, to further ensure the stable flow of the material on the panel side plate 102, thereby reducing the flow liners at the panel side plate 102.

In some embodiments of the present disclosure, as illustrated in FIG. 1, FIG. 1a, FIG. 1b, and FIG. 1c, the outer peripheral wall of the panel connection plate 101 includes a first side wall surface and a second side wall surface that are arranged in the peripheral direction of the panel connection plate 101. An angle is formed between the first side wall surface and the second side wall surface. The panel side plate 102 includes a first side plate body 1021 and a second side plate body 1022 that are connected to each other. An angle is formed between the first side plate body 1021 and the second side plate body 1022. The first side plate body 1021 is connected to the first side wall surface, and the second side plate body 1022 is connected to the second side wall surface. One of the panel gate forming regions 1011a is formed adjacent to a connection between the first side plate body 1021 and the second side plate body 1022 (for example, a minimum distance between the panel gate forming region 1011 located adjacent to the connection between the first side plate body 1021 and the second side plate body 1022 and the first side plate body 1021 is smaller than or equal to 20 mm, for example, 0 mm, and a minimum distance between the panel gate forming region 1111 located adjacent to the connection between the first side plate body 1021 and the second side plate body 1022 and the second side plate body 1022 is smaller than or equal to 20 mm, for example, 0 mm).

In some embodiments, in as illustrated in FIG. 9, in the panel mold 1, the panel side plate mold cavity 112 includes a first side plate body mold cavity 1121 and a second side plate body mold cavity. The first side plate body mold cavity 1121 and the second side plate body mold cavity are arranged in the peripheral direction of the panel connection plate mold cavity 111 and in communication with each other. The first side plate body mold cavity 1121 is configured to shape the first side plate body 1021. The second side plate body mold cavity is configured to shape the second side plate body 1022. An angle is formed between the first side plate body mold cavity 1121 and the second side plate body mold cavity. Each of the first side plate body mold cavity 1121 and the second side plate body mold cavity is in communication with the panel connection plate mold cavity 111. One of panel gates 1111 is formed adjacent to a position where the first side plate body mold cavity 1121 is in communication with the second side plate body mold cavity. Therefore, during the injection molding, the material flowing out of the panel gate 1111 can flow to the panel connection plate mold cavity 111, the first side plate body mold cavity 1121, and the second side plate body mold cavity, respectively. Thus, it is possible to prevent the material in the panel connection plate mold cavity 111, the material in the first side plate body mold cavity 1121, and the material in the second side plate body mold cavity from converging with each other at a corner to generate the flow liners. Therefore, it is beneficial for more materials to converge with each other at the panel connection plate mold cavity 111, thereby further avoiding the generation of the flow liners at the panel side plate 102.

In some embodiments of the present disclosure, a plurality of panel gate forming regions 1011 is formed at a position on the panel connection plate 101 adjacent to the first side plate body 1021. The plurality of panel gate forming regions 1011 is arranged at intervals in a length direction of the first side plate body 1021. The panel gates 1111 may be opened sequentially in a predetermined order as the material flows in the panel mold cavity. In an example, a panel gate 1111 at the connection between the first side plate body 1021 and the second side plate body 1022, i.e., a corner panel gate 1111, may be first opened, and other panel gates are sequentially opened in the length direction of the first side plate body 1021 and a direction away from the corner panel gate 1111, thereby assisting in ensuring that a flow speed of the front edge of the material at a position where the panel side plate 102 has the large wall thickness remains constantly fastest, and the front edges of the melt materials do not converge with each other.

In some embodiments of the present disclosure, as illustrated in FIG. 1 and FIG. 2, the control panel 10 includes a panel top plate 103. The panel top plate 103 is connected to the outer peripheral wall of the panel connection plate 101. The panel top plate 103 and the panel side plate 102 are sequentially arranged in the peripheral direction of the panel connection plate 101. Correspondingly, in the panel mold 1, the panel mold cavity includes a panel top plate mold cavity 113. The panel top plate mold cavity 113 is configured to shape the panel top plate 103, and is in communication with the outer periphery of the panel connection plate mold cavity 111. The panel top plate mold cavity 113 and the panel side plate mold cavity 112 are sequentially arranged in the peripheral direction of the panel connection plate mold cavity 111. Thus, the structure is simple.

In some embodiments of the present disclosure, at least one panel gate forming region 1011 is formed at a position on the panel connection plate 101 adjacent to the panel top plate 103 (for example, a minimum distance between the panel gate forming region 1011 and the panel top plate 103 is not greater than 20 mm, optionally, is 10 mm or 0 mm). When the plurality of panel gate forming regions 1011 is formed at the position on the panel connection plate 101 adjacent to the panel top plate 103, the plurality of panel gate forming regions 1011 is arranged at intervals in a length direction of the panel top plate 103. As a result, more materials can enter the panel top plate mold cavity 113 easily to reduce the flow liners at the panel top plate 103.

In some embodiments of the present disclosure, as illustrated in FIG. 1, one side surface of the panel top plate 103 in a thickness direction thereof is referred to as an appearance surface. A plurality of panel blocking holes 1012 is formed on the panel connection plate 101 and arranged at intervals. The plurality of panel blocking holes 1012 penetrates the panel connection plate 101 in the thickness direction of the panel connection plate 101. Some of the plurality of panel gate forming regions 1011 are formed adjacent to the panel side plate 102, and the remaining of the plurality of panel gate forming regions 1011 are formed adjacent to the panel top plate 103. Some of the plurality of panel blocking holes 1012 are formed adjacent to the panel side plate 102 (for example, a minimum distance between each of the panel blocking holes 1012 and the panel side plate 102 is not greater than 20 mm), and the remaining of the plurality of panel blocking holes 1012 are formed adjacent to the panel top plate 103 (for example, a minimum distance between each of the panel blocking holes 1012 and the panel top plate 103 is not greater than 20 mm). Some of the plurality of panel blocking holes 1012 are spaced apart from some of the plurality of panel gate forming regions 1011 in the peripheral direction of the panel connection plate 11, and the remaining of the plurality of panel blocking holes 1012 are spaced apart from the remaining of the plurality of panel gate forming regions 1011 in the peripheral direction of the panel connection plate 11.

Correspondingly, in the panel mold 1, a plurality of panel post structures is provided in the panel connection plate mold cavity 111 and arranged at intervals. The plurality of panel post structures is configured to shape the panel blocking holes 1012, and extends across the panel connection plate mold cavity 111 in the thickness direction of the panel connection plate mold cavity 111. Some of the plurality of panel gates 1111 are formed adjacent to the panel side plate mold cavity 112, and the remaining of the plurality of panel gates 1111 are formed adjacent to the panel top plate mold cavity 113. Some of the plurality of panel post structures are formed adjacent to the panel side plate mold cavity 112, and are spaced apart from some of the plurality of panel gates 1111 in the peripheral direction of the panel connection plate mold cavity 111. The remaining of the plurality of panel post structures are disposed adjacent to the panel top plate mold cavity 113, and are spaced apart from the remaining of the plurality of panel gates 1111 in the peripheral direction of the panel connection plate mold cavity 111.

Since some of the panel gates 1111 of the panel mold 1 are located adjacent to the panel side plate mold cavity 112, and the remaining of the panel gates 1111 of the panel mold 1 are formed adjacent to the panel top plate mold cavity 113, a part of the material flowing out of some of the panel gate 1111 of the panel mold 1 flows to the panel connection plate mold cavity 111 towards a center of the panel connection plate mold cavity 111, and the rest part of the material directly flows to the panel side plate mold cavity 112 through an edge of the panel connection plate mold cavity 111. In order to prevent superfluous materials from flowing towards the panel side plate mold cavity 112 after the panel connection plate mold cavity 111 is filled with the material flowing towards the center of the panel connection plate mold cavity 111, to prevent the part of the material from converging, in the panel side plate mold cavity 112, with the material originally located in the panel side plate mold cavity 112. Therefore, by providing the panel post structure at a position on the panel connection plate mold cavity 111 adjacent to the panel side plate mold cavity 112, it is possible to further prevent the flow liners from being generated on the panel side plate 102.

Similarly, a part of the material flowing out of the remaining of the panel gates 1111 of the panel mold 1 flows to the panel connection plate mold cavity 111 towards the center of the panel connection plate mold cavity 111, and the rest part of the material directly flows to the panel top plate mold cavity 113 through the edge of the panel connection plate mold cavity 111. In order to prevent superfluous materials from flowing to the panel top plate mold cavity 113 after the panel connection plate mold cavity 111 is filled with the material flowing towards the center of the panel connection plate mold cavity 111, to prevent the part of the material from converging, in the panel top plate mold cavity 113, with the material originally located in the panel top plate mold cavity 113. Therefore, by providing the panel post structure at a position on the panel connection plate mold cavity 111 adjacent to the panel top plate mold cavity 113, it is possible to further prevent the flow liners from being generated on the panel top plate 103.

In some embodiments of the present disclosure, a minimum distance between the panel gate forming region 1011 adjacent to the panel top plate 103 and the panel top plate 103 is smaller than or equal to 20 mm. Correspondingly, in the panel mold 1, a minimum distance between a panel gate 1111 adjacent to the panel top plate mold cavity 113 and the panel top plate mold cavity 113 is smaller than or equal to 20 mm. Optionally, the minimum distance between the panel gate forming region 1011 adjacent to the panel top plate 103 and the panel top plate 103 is 10 mm, 8 mm, 3 mm, or 0 mm.

In some embodiments of the present disclosure, a minimum distance between the blocking hole adjacent to the panel top plate and the panel top plate is smaller than or equal to 20 mm. Correspondingly, a minimum distance between the panel post structure adjacent to the panel top plate mold cavity 113 and the panel top plate mold cavity 113 is smaller than or equal to 20 mm. For example, the minimum distance between the blocking hole adjacent to the panel top plate and the panel top plate is 10 mm, 8 mm, 3 mm, or 0 mm.

In some embodiments of the present disclosure, a minimum distance between the panel blocking hole adjacent to the panel side plate and the panel side plate is smaller than or equal to 20 mm. Correspondingly, in the mold, a minimum distance between the panel post structure adjacent to the panel side plate mold cavity 112 and the panel side plate mold cavity 112 is smaller than or equal to 20 mm. For example, the minimum distance between the panel blocking hole adjacent to the panel side plate and the panel side plate is 10 mm, 8 mm, 3 mm, or 0 mm.

In some embodiments of the present disclosure, the outer peripheral wall of the panel connection plate 101 includes a first side wall surface, a second side wall surface, and a third side wall surface that are sequentially arranged in the peripheral direction of the panel connection plate 101. The third side wall surface is opposite to the first side wall surface. An angle is formed between the second side wall surface and the first side wall surface. The panel side plate 102 includes a first side plate body 1021 and a second side plate body 1022 that are connected to each other. An angle is formed between the first side plate body 1021 and the second side plate body 1022. The first side plate body 1021 is connected to the first side wall surface. The second side plate body 1022 is connected to the second side wall surface. The panel top plate 103 is connected to the third side wall surface. An end of the panel top plate 103 adjacent to the second side wall surface is connected to the second side plate body 1022. As illustrated in FIG. 3, one of the panel gate forming regions 1011a is formed adjacent to a connection between the second side plate body 1022 and the first side plate body 1021, and one of the panel blocking holes 1012a is formed adjacent to a connection between the second side plate body 1022 and the panel top plate 103.

Correspondingly, in the panel mold 1, in the peripheral direction of the panel connection plate mold cavity 111, the panel side plate mold cavity 112 includes a first side plate body mold cavity 1121 and a second side plate body mold cavity that are in communication with each other. The first side plate body mold cavity 1121 is configured to shape the first side plate body 1021. The second side plate body mold cavity is configured to shape the second side plate body 1022. An angle is formed between the first side plate body mold cavity 1121 and the second side plate body mold cavity. Each of the first side plate body mold cavity 1121 and the second side plate body mold cavity is in communication with the panel connection plate mold cavity 111. An end of the panel top plate mold cavity 113 adjacent to the second side plate body mold cavity is in communication with the second side plate body 1022 mold cavity. One of the panel gate 1111 is formed adjacent to a position where the first side plate body mold cavity 1121 is in communication with the second side plate body mold cavity, and one of the panel post structures is located adjacent to a position where the second side plate body mold cavity is in communication with the panel top plate mold cavity 113.

During the injection molding, one of the panel gates 1111 is formed adjacent to the position where the first side plate body mold cavity 1121 is in communication with the second side plate body mold cavity. Therefore, when the material flows out of this panel gate, it is more beneficial that the material can flow to the panel connection plate mold cavity 111, the first side plate body mold cavity 1121, and the second side plate body 1022 mold cavity, respectively. Thus, it is possible to prevent the material in the panel connection plate mold cavity 111, the material in the first side plate body mold cavity 1121, and the material in the second side plate body mold cavity from converging with each other at the corner to generate the flow liners, thereby further avoiding the generation of the flow liners at the panel side plate 102. In addition, one of the panel post structures is disposed adjacent to the position where the second side plate body mold cavity is in communication with the panel top plate mold cavity 113. Thus, it is possible to prevent the material flowing through the panel connection plate mold cavity 111 from flowing to the second side plate body mold cavity and the panel top plate mold cavity 113, to prevent the material originally located in the second side plate body mold cavity and the material originally located in the panel top plate mold cavity 113 from converging, in the second side plate body mold cavity and the panel top plate mold cavity 113, with the material flowing through the panel connection plate mold cavity 111. Therefore, the flow liners on both the panel side plate 102 and the panel top plate 103 can be further reduced.

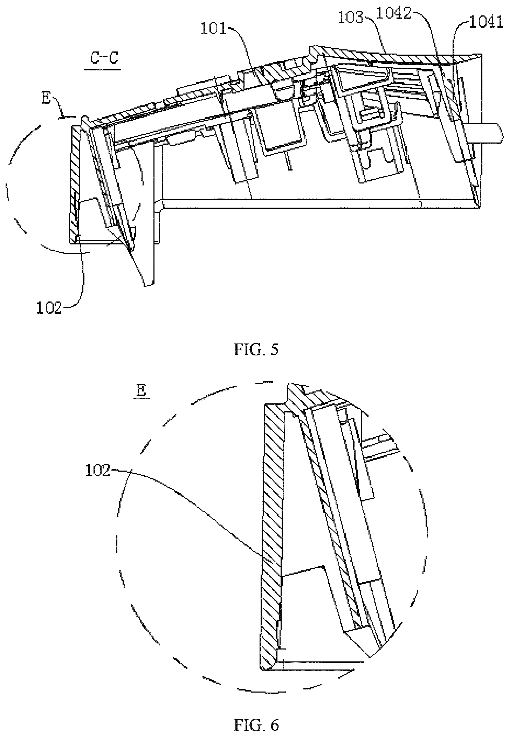

In some embodiments of the present disclosure, as illustrated in FIG. 2 and FIG. 5, a side surface of the panel top plate 103 in the thickness direction thereof is refers to as the appearance surface, and a panel connection rib 104 is provided on the other side surface of the panel top plate 103 in the thickness direction of the panel top plate 103. The panel connection rib 104 includes a panel connection rib body 1041 and a panel connection portion 1042. The panel connection portion 1042 is connected between the panel connection rib body 1041 and the panel top plate 103.

Correspondingly, in the panel mold 1, the panel mold cavity includes a panel connection rib mold cavity 114. A side wall surface of the panel top plate mold cavity 113 in a thickness direction thereof is configured to shape an appearance surface of the panel top plate 103. The panel connection rib mold cavity 114 is located on the other side wall surface of the panel top plate mold cavity 113 in the thickness direction of the panel top plate mold cavity 113, and is in communication with the panel top plate mold cavity 113. The panel connection rib mold cavity 114 includes a panel connection rib body mold cavity 1141 and a panel connection portion mold cavity 1142 that are in communication with each other. The panel connection portion mold cavity 1142 is communicated between the panel connection rib body mold cavity 1141 and the panel connection plate mold cavity 111. Therefore, by providing the panel connection rib 104, structural strength of the panel top plate 103 can be enhanced.

Optionally, a thickness of the panel connection portion 1042 is smaller than a thickness of an end of the panel connection rib body 1041 connected to the panel connection portion 1042. In the panel mold 1, a thickness of the panel connection portion mold cavity 1142 is smaller than a thickness of an end, in communication with the panel connection portion mold cavity 1142, of the panel connection rib body mold cavity 1141. In some embodiments, during the injection molding, since no panel gate 1111 is formed at a wall surface of the panel connection rib mold cavity 114, when the material flows in the panel mold cavity, the material first flows through the panel top plate mold cavity 113, and then flows to the panel connection rib mold cavity 114 through the panel top plate mold cavity 113. Moreover, by setting the thickness of the panel connection portion mold cavity 1142 smaller than a thickness of the panel connection rib body mold cavity 1141, it is possible to at least prevent the unstable flow field from being formed at a position where the panel connection rib mold cavity 114 is in communication with the panel top plate mold cavity 113 to some extent, to at least avoid the material converging due to a backflow of the material in the panel connection rib body mold cavity 1141 to the panel top plate mold cavity 113 through the panel connection portion mold cavity 1142 to some extent, thereby preventing the flow liners from being generated at the connection of the panel top plate 103 to the panel connection rib 104.

Optionally, the thickness of the panel connection portion 1042 is smaller than the thickness of the panel connection rib body 1041. Therefore, it is possible to at least prevent the unstable flow field from being formed at the position where the panel connection rib mold cavity 114 is in communication with the panel top plate mold cavity 113 to some extent, to at least avoid the material converging due to the backflow of the material in the panel connection rib body mold cavity 1141 to the panel top plate mold cavity 113 through the panel connection portion mold cavity 1142 to some extent, thereby preventing the flow liners from being generated at the connection of the panel top plate 103 to the panel connection rib 104.

Optionally, a part of a surface of the panel connection portion 1042 facing towards the panel top plate 103 is recessed away from the panel top plate 103 to form a panel through hole. The panel through hole penetrates the panel connection portion 1042 in the thickness direction of the panel connection portion 1042. Correspondingly, in the panel mold 1, the panel connection portion mold cavity 1142 is provided with a panel post structure for forming the panel through hole. The panel post structure extends across the panel connection portion mold cavity 1142 in the thickness direction of the panel connection portion mold cavity 1142. In this way, since no panel gate 1111 is formed at the panel connection rib mold cavity 114, when the material flows in the panel mold cavity, the material first flows through the panel top plate mold cavity 113, and then flows to the panel connection rib mold cavity 114 through the panel top plate mold cavity 113. Moreover, by providing the panel post structure, the panel post structure can reduce a flow area of a material flowing across the position where the panel connection rib mold cavity 114 is in communication with the panel top plate mold cavity 113. As a result, it is possible to at least prevent the unstable flow field from being formed at the position where the panel connection rib mold cavity 114 is in communication with the panel top plate mold cavity 113 to some extent, to at least avoid the material converging due to the backflow of the material in the panel connection rib body mold cavity 1141 to the panel top plate mold cavity 113 through the panel connection portion mold cavity 1142 to some extent, thereby preventing the flow liners from being generated at the connection of the panel top plate 103 to the panel connection rib 104.

In some embodiments of the present disclosure, the thickness of the panel connection plate 101 is smaller than a thickness of an end of the panel top plate 103 connected to the panel connection plate 101. Correspondingly, in the panel mold 1, the thickness of the panel connection plate mold cavity 111 is smaller than a thickness of an end, in communication with the panel connection plate mold cavity 111, of the panel top plate mold cavity 113. Therefore, when the material flows out of a panel gate 1111 of the panel mold 1 adjacent to the panel top plate mold cavity 113, it is more beneficial for more materials to directly flow to the panel top plate mold cavity 113, to further ensure that the material flows stably to the panel top plate mold cavity 113 from the panel connection plate mold cavity 111, thereby reducing the flow liners at the panel top plate 103.

In some embodiments of the present disclosure, the thickness of the panel connection plate 101 is smaller than a thickness of the panel top plate 103. Correspondingly, in the panel mold 1, the thickness of the panel connection plate mold cavity 111 is smaller than a thickness of the panel top plate mold cavity 113. Therefore, when the material flows out of the panel gate 1111 of the panel mold 1 adjacent to the panel top plate mold cavity 113, it is more beneficial for more materials to directly flow to the panel top plate mold cavity 113, to further ensure that the material flows stably to the panel top plate mold cavity 113 from the panel connection plate mold cavity 111, thereby reducing an obstruction to the material flow and the flow liners at the panel top plate 103.

In some embodiments of the present disclosure, a wall thickness of the panel top plate 103 gradually decreases in a direction away from the panel connection plate 101; or the wall thickness of the panel top plate 103 is constant and then gradually decreases in the direction away from the panel connection plate 101; or the wall thickness of the panel top plate 103 gradually increases and then gradually decreases in the direction away from the panel connection plate 101; or in the direction away from the panel connection plate 101, the wall thickness of the panel top plate 103 gradually increases, then remains constant, and then gradually decreases. In this way, it is possible to further reduce the flow liners on the panel top plate 103, to further prevent the flow liners from being generated on the appearance surface of the panel top plate 103. Therefore, it is possible to further improve the qualified rate of the control panel 10, thereby lowering the cost and satisfying the user's usage demands.

A laundry treating device according to the embodiments of the present disclosure includes the control panel 10 of the laundry treating device as described above.

With the laundry treating device according to the embodiments of the present disclosure, by providing the control panel 10, the other end of the panel side plate 102 in the width direction thereof has the minimum wall thickness, and the at least one panel gate forming region 1011 is formed adjacent to the panel side plate 102. In this way, it is possible to at least reduce the flow liners on the panel side plate 102 to some extent, to at least prevent the flow liners from being generated on the appearance surface of the panel side plate 102 to some extent. Therefore, the qualified rate of the control panel 10 can be at least improved to some extent, thereby lowering the cost and satisfying the user's usage demands.

A description of a specific structure of an appearance part will be provided below taking a dispenser handle as an example.

In general, a dispenser handle of a laundry treating device such as a front-load washing machine, is configured to open and close a dispenser box of the washing machine, and has dual requirements of function and appearance.

A manufacturing process for the dispenser handle 40 is mostly implemented through an injection molding and spraying process, and the sprayed dispenser handle 40 has a gorgeous metal appearance effect. However, the spraying process has the defects such as serious pollution, high cost, low qualified rate, unrecyclable unqualified product, and the like, which seriously affects health of environment and production personnel, and does not conform to the green manufacturing concept. In order to overcome the defects in the spraying process, a spraying-free thermoplastic engineering material emerges, and the metal appearance effect of a product can be given by spraying-free injection molding. As a result, the spraying process can be replaced, thereby lowering production cost. Meanwhile, it is possible to avoid emission of pollutants during the spraying.

No matter whether the dispenser handle 40 is manufactured by using a spraying-free material or through the injection molding and spraying process, for a material with poor fluidity, especially for a spraying-free material including metal particles, since there are the metal particles and other substances in the spraying-free material, uneven arrangement of the metal particles may be generated due to an obstruction to the material when flowing during the injection molding. As a result, the injection-molded product may occur light scattering under an irradiation of light, and flow liners thus are visually generated on the product, which results in a flow liner defect on the product. When the flow liners are generated on an appearance surface of the appearance part, the flow liners not only lead to low qualified rate, but also cannot satisfy user's usage demands. A description will be provided below taking the spraying-free material including metal particles as an example. That is, the dispenser handle 40 may be a spray-free piece including a resin matrix and metal particles distributed in the resin matrix. Optionally, the metal particles are aluminum, silver, or copper.

According to the embodiments of the present disclosure, a dispenser handle 40, a dispenser, a laundry treating device, and a handle mold 4 will be described below. Optionally, the laundry treating device may be a washing machine, clothes dryer, or a washing and drying integrated machine.

In some embodiments, the dispenser handle 40 is an integral injection-molding piece, i.e., the handle mold 4 may be configured to form the dispenser handle 40. As a result, a structure of the integral piece not only can ensure structural and performance stability of the dispenser handle 40, but also leads to convenient forming and simple manufacturing. Moreover, redundant assembly parts and connection steps can be removed, and connection reliability of the dispenser handle 40 can be ensured. Furthermore, the integrally formed structure is high in overall strength and stability, is more convenient to be assembled, and is longer in service life.

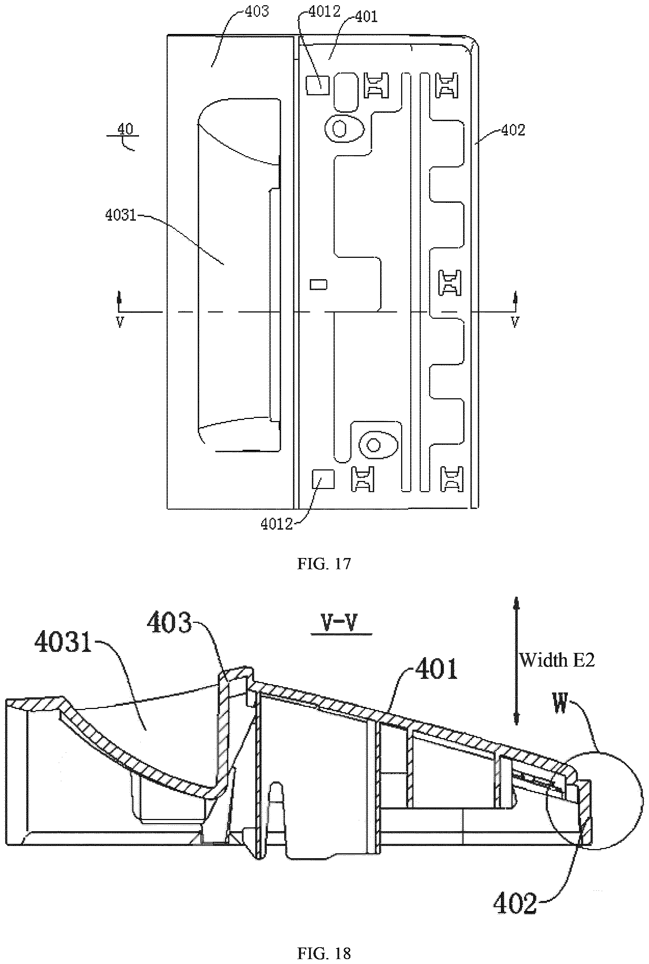

As illustrated in FIG. 17 and FIG. 18, according to the embodiments of the present disclosure, the dispenser handle 40 of the laundry treating device may include a handle connection plate 401 and a handle side plate 402. The dispenser handle 40 has a gripping portion 4031 for opening or closing the dispenser box through the gripping portion 4031 to facilitate user's operation.

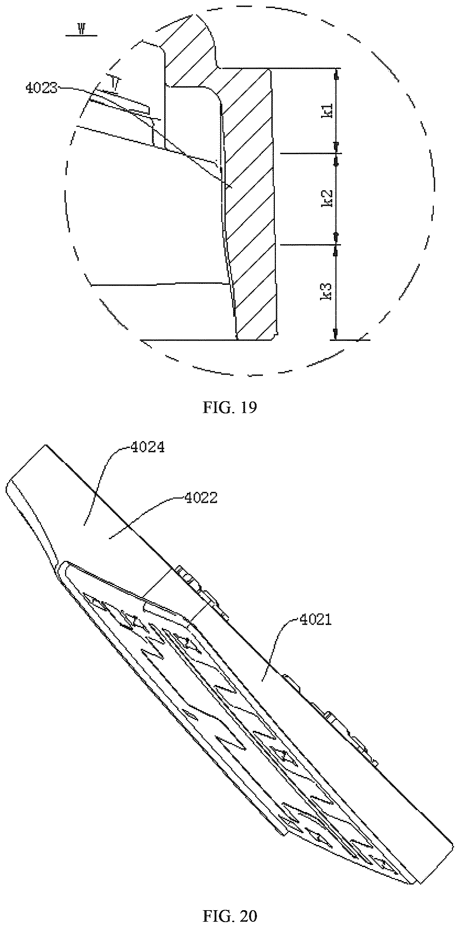

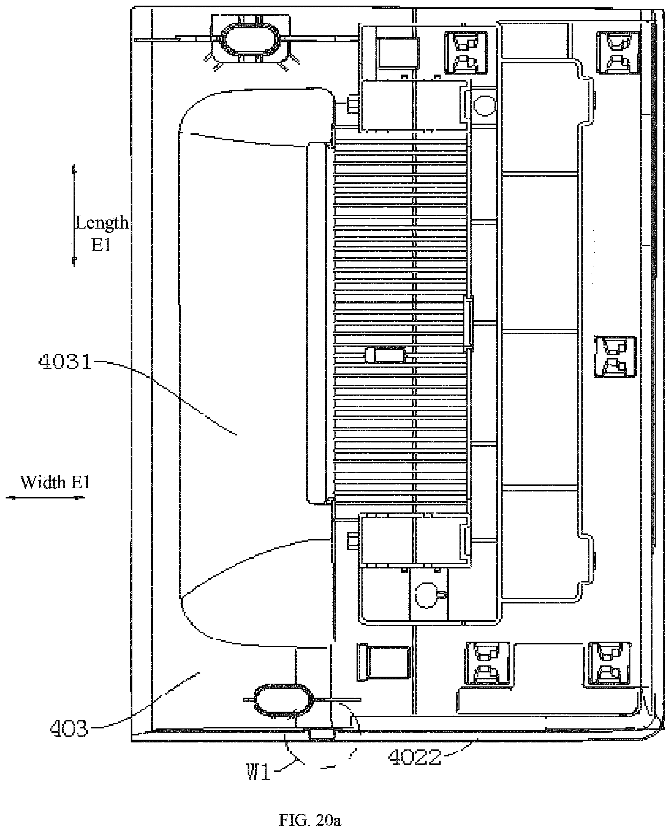

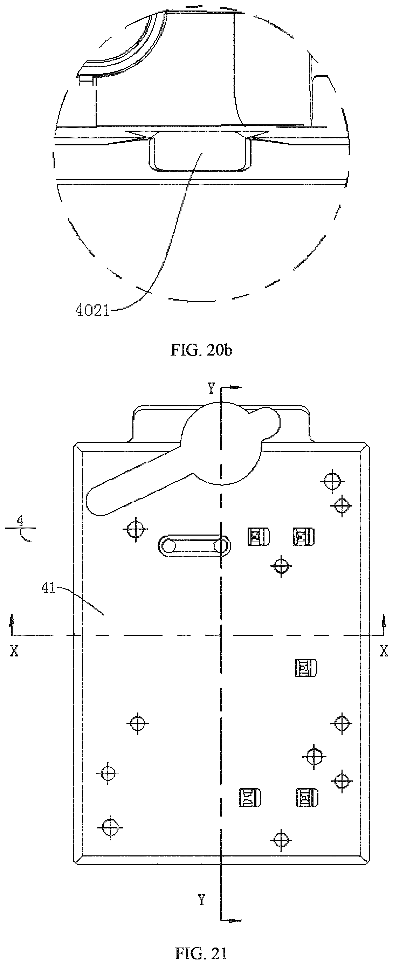

As illustrated in FIG. 17 and FIG. 20, the handle side plate 402 extends in a peripheral direction of the handle connection plate 401. An angle is formed between the handle side plate 402 and the handle connection plate 401. An end of the handle side plate 402 in a width direction thereof is connected to an outer peripheral wall of the handle connection plate 401. It can be understood that a surface of an end of the handle side plate 402 in the width direction thereof, i.e., a surface of an end of the handle side plate 402 facing away from the handle connection plate 401 in a thickness direction of the handle side plate 402, is referred to as an appearance surface, i.e., an outer peripheral wall of the handle side plate 402 is referred to as the appearance surface. A surface of the handle connection plate 401 and an inner peripheral wall of the handle side plate 402 are referred to as the non-appearance surface. An end surface of another end of the handle side plate 402 in the width direction thereof, i.e., an end surface of an end of the handle side plate 402 away from the handle connection plate 401, is referred to as a non-appearance surface. The appearance surface means that the surface is exposed when the dispenser handle 40 is applied in the laundry treating device. The non-appearance surface means that the surface is not exposed when the dispenser handle 40 is applied in the laundry treating device.

The handle side plate 402 has a handle variable wall thickness region 4023. An end of the handle variable wall thickness region 4023 away from the handle connection plate 401 has a minimum wall thickness.

In some embodiments, as illustrated in FIG. 20a and FIG. 20b, the end surface of the other end of the handle side plate 402 in the width direction thereof has at least one handle gate forming region 4021 adapted to correspond to a handle gate of a handle mold 4.

In some examples, a side surface of the handle connection plate 401 in a thickness direction thereof has the handle gate forming region 4021.

In some embodiments, after the dispenser handle 40 is formed through injection molding by the handle mold 4 and is de-molded from the handle mold 4, a part of a material at the handle gate of the handle mold 4 is left on the dispenser handle 40 and is formed into a handle gate forming portion. The handle gate forming region 4021 is a region where the handle gate forming portion is located. It can be understood that the dispenser handle 40 may be further processed to cut away or partially cut away the handle gate forming portion. In an example, the handle gate forming portion of the dispenser handle 40 may not be processed. That is, the handle gate forming portion is remained on the dispenser handle 40. The embodiment of the present disclosure is not limited in this regard, and the handle gate forming portion may be provide as desired.

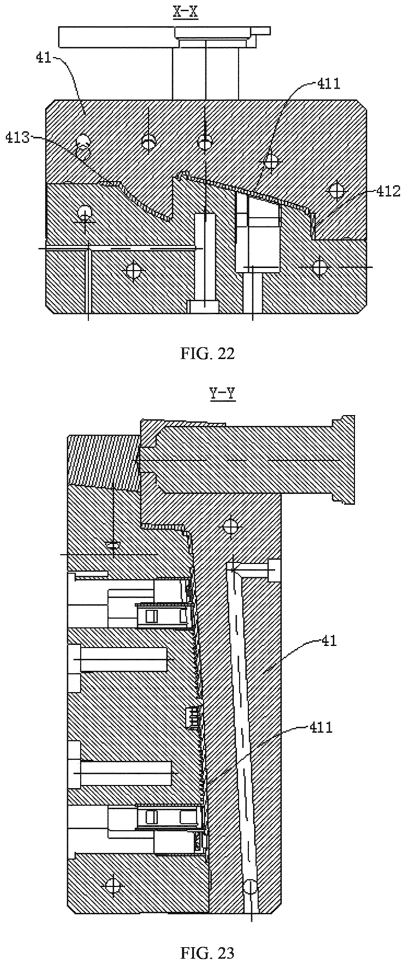

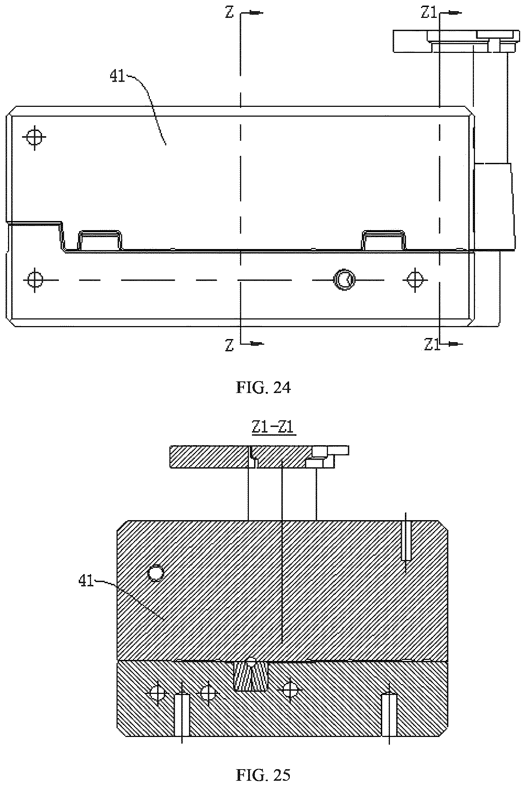

Corresponding to the above structures, as illustrated in FIG. 21, FIG. 24, and FIG. 25, according to the embodiments of the present disclosure, the handle mold 4 includes a handle mold core 41. The handle mold core 41 has a handle mold cavity. In some embodiments, as illustrated in FIG. 22 and FIG. 23, the handle mold cavity includes a handle side plate mold cavity 412 and a handle connection plate mold cavity 411. The handle side plate mold cavity 412 is configured to shape the handle side plate 402, and the handle connection plate mold cavity 411 is configured to shape the handle connection plate 401.

The handle side plate mold cavity 412 extends in a peripheral direction of the handle connection plate mold cavity 411. An angle is formed between the handle side plate mold cavity 412 and the handle connection plate mold cavity 411. An end of the handle side plate mold cavity 412 in a width direction thereof is in communication with an outer periphery of the handle connection plate mold cavity 411. A side wall surface of the handle side plate mold cavity 412 in a thickness direction thereof is configured to shape an appearance surface of the handle side plate 402. The handle side plate mold cavity 412 has a handle variable thickness region 4123, and an end of the handle variable thickness region 4123 away from the handle connection plate mold cavity 411 has a minimum thickness. It can be understood that the end of the handle side plate mold cavity 412 in the width direction thereof is an end in communication with the handle connection plate mold cavity 411, and the other end of the handle side plate mold cavity 412 in the width direction thereof is an end away from the handle connection plate mold cavity 411.

In some examples, the handle mold core has a handle gate located on a wall surface of the other end of the handle side plate mold cavity 412 in the width direction of the handle side plate mold cavity 412.

In some examples, the handle mold core has a handle gate located on a side wall surface of the handle connection plate mold cavity 412 in the thickness direction of the handle connection plate mold cavity 412.

With the handle mold 4 for forming the dispenser handle 40 according to the embodiments of the present disclosure, the end of the handle variable thickness region 4123 away from the handle connection plate mold cavity 411 has the minimum thickness. Thus, it is possible to facilitate ensuring the stability of the flow of material, thereby reducing flow liners at the handle side plate 402. Therefore, it is possible to at least improve product yield to some extent, thereby satisfying the user's usage demands.

With the dispenser handle 40 of the laundry treating device according to the embodiments of the present disclosure, the end of the handle variable wall thickness region 4023 away from the handle connection plate 401 has the minimum thickness. Thus, it is possible to facilitate reducing the flow liners at the handle side plate 402. Therefore, it is possible to at least improve the product yield to some extent, thereby satisfying the user's usage demands.

According to some embodiments of the present disclosure, as illustrated in FIG. 20, the handle side plate 402 has a handle constant wall thickness region 4024. The handle constant wall thickness region 4024 extends across the handle side plate 402 in the width direction of the handle side plate 402. That is, the handle constant wall thickness region 4024 extends to both ends of the handle side plate 402 in the width direction of the handle side plate 402, and has a constant wall thickness at any position.

As illustrated in FIG. 19, the handle gate forming region 4021 is formed at the handle constant wall thickness region 4024. Other region of the handle side plate 402 rather than the handle constant wall thickness region 4024 are a handle variable wall thickness region 4023. A wall thickness of the handle constant wall thickness region 4024 is not smaller than (i.e., equal to or greater than) a maximum wall thickness of the handle variable wall thickness region 4023. Further, the end of the handle variable wall thickness region 4023 away from the handle connection plate 401 has a minimum wall thickness. That is, in the width direction of the handle side plate 402, the wall thickness of the end of the handle variable wall thickness region 4023 away from the handle connection plate 401 is minimum. In this way, it is possible to at least reduce flow liners on the handle side plate 402 to some extent, to at least prevent the flow liners from being generated on the appearance surface of the handle side plate 402 to some extent. Therefore, a qualified rate of the handle side plate 402 can be at least improved to some extent, thereby lowering cost and satisfying the user's usage demands.

Correspondingly, in the handle mold 4, the handle side plate mold cavity 412 has a handle constant thickness region. The handle gate is located at the handle constant thickness region. The handle constant thickness region extends across the handle side plate mold cavity 412 in the width direction of the handle side plate mold cavity 412. Other region of the handle side plate mold cavity 412 rather than the handle constant thickness region is the handle variable thickness region 4123. A thickness of the handle constant thickness region is not smaller than (i.e., equal to or greater than) a maximum thickness of the handle variable thickness region 4123. The end of the handle variable thickness region 4123 away from the handle connection plate mold cavity 411 has a minimum thickness. That is, in the width direction of the handle side plate mold cavity 412, the other end of the handle variable thickness region 4123 in a width direction thereof, i.e., the end away from the handle connection plate mold cavity 411, has a minimum thickness.

In some embodiments, during the injection molding, when the material flows, after the hot melt material flows into the handle mold cavity through the handle gate, the hot melt material is brought into contact with a cold inner wall of the handle mold cavity during its flowing. As a result, the material is quickly solidified on the inner wall of the handle mold cavity to form a thin solidification layer. A quality of an appearance of a spray-free product depends on an arrangement of metal particles in the solidification layer, and the stable flow can allow for a uniform metal particle orientation to obtain a better appearance. According to the embodiments of the present disclosure, the handle gate is located at the handle constant thickness region, and the thickness of the handle constant thickness region is not smaller than the maximum thickness of the handle variable thickness region 4123. In this way, when the material flows out of the handle gate of the handle mold 4, the material can directly flow to the handle constant thickness region and is full with handle constant thickness region. Thereafter, most of the material flows towards the handle variable thickness region 4123 from two sides of the handle constant thickness region along the handle side plate mold cavity 412, respectively.

Moreover, since the end of the handle variable thickness region 4123 away from the handle connection plate mold cavity 411 has the minimum thickness, i.e., in the width direction of the handle side plate mold cavity 412, a thickness of a part (referred to as a large thickness portion) of the handle variable thickness region 4123 adjacent to the handle connection plate mold cavity 411 and in direct communication with a minimum thickness portion of the handle variable thickness region 4123 is necessarily greater than the thickness of the end of the handle variable thickness region 4123 away from the handle connection plate mold cavity 411. In this way, in the peripheral direction of the handle connection plate mold cavity 411, when the material flows, it is easier for the material to flow at the large thickness portion at a higher flow velocity. As a result, the material has a forward protruding form and obvious front edge flow at the large thickness portion. Moreover, an actual flow direction of the material at each point on the front edge surface is an outward direction perpendicular to a tangent line of the front edge surface. Therefore, the flow direction at each point on the front edge surface is divergent, and does not intersect with each other, thereby avoiding occurrence of curling and rotation. As a result, it is possible to prevent the material at the large thickness portion and the material at the small thickness portion from being curled and rotated at the front edge to some extent, to further ensure the flow stability of the material. Therefore, flow liners at positions on the handle side plate 402 corresponding to the large thickness portion and the small thickness portion can be reduced. In addition, it is possible to at least improve the product yield to some extent and satisfy the user's usage demands.

There are several variation relationships for the handle variable wall thickness region 4023 of the handle side plate 402, and these variation relationships will be described below.

For a first variation relationship, a wall thickness of the handle variable wall thickness region 4023 gradually decreases in a direction from one end to the other end of the handle side plate 402 in the width direction of the handle side plate 402. Correspondingly, in the handle mold 4, a thickness of the handle variable thickness region 4123 gradually decreases in a direction from one end to the other end of the handle side plate mold cavity 412 in the width direction of the handle side plate mold cavity 412. In this way, in the peripheral direction of the handle connection plate mold cavity 411, when the material flows in the handle side plate mold cavity 412, depending on the thickness variation of the handle variable thickness region 4123, it is easier for the material to flow at a position where the handle variable thickness region 4123 has a large thickness with small flow resistance. As a result, a front edge surface of the material flow may be an inclined surface as illustrated in FIG. 12. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at its front edge can be avoided, and the material has more stable flow. In this manner, it is possible to further reduce the flow liners at the handle side plate 402, to further prevent the flow liners from being generated on the appearance surface of the handle side plate 402. Therefore, the qualified rate of the product can be improved, thereby lowering the cost and satisfying the user's usage demands.

For a second variation relationship, the wall thickness of the handle variable wall thickness region 4023 is first constant and then gradually decreases in the direction from one end to the other end of the handle side plate 402 in the width direction of the handle side plate 402. Correspondingly, in the handle mold 4, the thickness of the handle variable thickness region 4123 is first constant and then gradually decreases in the direction from one end to the other end of the handle side plate mold cavity 412 in the width direction of the handle side plate mold cavity 412. In this way, in the peripheral direction of the handle connection plate mold cavity 411, when the material flows, depending on the thickness variation of the handle variable thickness region 4123, it is easier for the material to flow at the position where the handle variable thickness region 4123 has the large thickness with small flow resistance. As a result, as illustrated in FIG. 14, the front edge surface of the material flow may include a surface substantially parallel to the width direction of the handle side plate mold cavity 412 at a same thickness and an inclined surface towards an upstream of the material flow at a gradually decreasing thickness position. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at the front edge can be avoided, and the material has more stable flow. In this manner, it is possible to further reduce the flow liners at the handle side plate 402, to further prevent the flow liners from being generated on the appearance surface of the handle side plate 402. Therefore, the qualified rate of the product can be improved, thereby lowering the cost and satisfying the user's usage demands.

For a third variation relationship, the wall thickness of the handle variable wall thickness region 4023 gradually increases and then gradually decreases in the direction from one end to the other end of the handle side plate 402 in the width direction of the handle side plate 402. Correspondingly, in the handle mold 43, the thickness of the handle variable wall thickness region 4123 gradually increases and then gradually decreases in the direction from one end to the other end of the handle side plate mold cavity 412 in the width direction of the handle side plate mold cavity 412. In this way, in the peripheral direction of the handle connection plate mold cavity 411, when the material flows, depending on the thickness variation of the handle variable thickness region 4123, it is easier for the material to flow at the position where the handle variable thickness region 4123 has the large thickness with small flow resistance. As a result, the front edge surface of the material flow may have a forwarding protruding form as illustrated in FIG. 13. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at the front edge can be avoided, and the material has more stable flow. In this manner, it is possible to further reduce the flow liners at the handle side plate 402, to further prevent the flow liners from being generated on the appearance surface of the handle side plate 402. Therefore, the qualified rate of the product can be improved, thereby lowering the cost and satisfying the user's usage demands.

For a fourth variation relationship, in the direction from one end to the other end of the handle side plate 402 in the width direction of the handle side plate 402, the wall thickness of the handle variable wall thickness region 4023 first gradually increases, then remains constant, and then gradually decreases. Correspondingly, in the handle mold 4, in the direction from one end to the other end of the handle side plate mold cavity 412 in the width direction of the handle side plate mold cavity 412, the thickness of the handle variable thickness region 4123 first gradually increases, then remains constant, and then gradually decreases. In this way, in the peripheral direction of the handle connection plate mold cavity 411, when the material flows, depending on the thickness variation of the handle variable thickness region 4123, it is easier for the material to flow at the position where the handle variable thickness region 4123 has the large thickness with small flow resistance. As a result, the front edge surface of the material flow may have a forward protruding form as illustrated in FIG. 15. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at its front edge can be avoided, and the material has more stable flow. In this manner, it is possible to further reduce the flow liners at the handle side plate 402, to further prevent the flow liners from being generated on the appearance surface of the handle side plate 402. Therefore, the qualified rate of the product can be improved, thereby lowering the cost and satisfying the user's usage demands.

Therefore, compared with a recessed front edge surface illustrated in FIG. 16 in the related art, according to the above embodiments of the present disclosure, it is more conducive to the reduction of the flow liners on the handle side plate 402.

For explanation, provided below is that the larger the wall thickness is, the faster a flow velocity of the material is.

When the material is injected into the handle mold 4 under a predetermined condition, a temperature of the material is sharply decreased due to contact with a cold wall surface of the handle mold cavity, and generates the solidification layer. In addition, a flow area of the handle mold cavity is reduced as a thickness of the solidification layer increases. As a result, the thickness of the solidification layer has an important influence on convection resistance. A relationship between the fluidity s and the thickness h of the handle mold cavity satisfies formula I.

$$s = \int_0^k \frac{z^2}{\eta} z = \frac{h^3}{3\eta_{rep}}$$

（Formula I）

where $\eta_{rep}$ represents viscosity of the material.

According to the fluidity formula, the fluidity s is proportional to a cube of the thickness h. For example, when the thickness is reduced by fifty percent, the fluidity will be reduced to one eighth, which means that the flow resistance is increased to eight times. As a result, the thicker the mold cavity, the lower the flow resistance, the better the fluidity, and the faster the flow velocity.

With the handle mold 4 for forming the dispenser handle 40 according to the embodiments of the present disclosure, the handle gate is located at the handle constant thickness region, and the thickness of the handle constant thickness region is not smaller than the maximum thickness of the handle variable thickness region 4123. Moreover, the thickness of the end of the handle variable thickness region 4123 away from the handle connection plate mold cavity 411 is minimum. Thus, it is possible to facilitate ensuring the stability of the flow of material, thereby reducing the flow liners at the handle side plate 402. Therefore, it is possible to at least improve the product yield to some extent, thereby satisfying the user's usage demands.

With the dispenser handle 40 of the laundry treating device according to the embodiments of the present disclosure, the handle gate forming region 4021 is formed on the handle constant wall thickness region 4024, the wall thickness of the handle constant wall thickness region 4024 is not smaller than the maximum wall thickness of the handle variable wall thickness region 4023, and the wall thickness of the end of the handle variable wall thickness region 4023 away from the handle connection plate 401 is minimum. Thus, it is beneficial to reduce the flow liners at the handle side plate 402. Therefore, the product yield can be at least improved to some extent, thereby satisfying the user's usage demands.

In some embodiments of the present disclosure, the maximum wall thickness of the handle variable wall thickness region 4023 ranges from 3.0 mm to 3.5 mm, i.e., the maximum thickness of the handle variable thickness region 4123 ranges from 3.0 mm to 3.5 mm. Therefore, it is beneficial to ensure fluidity of the material on the handle variable thickness region 4123 to ensure that the handle side plate 402 is filled with the material. As a result, it is possible to at least reduce the flow liners at the handle side plate 402 to some extent, thereby improving the product yield. Moreover, structural strength of the handle side plate 402 can be ensured. In addition, it is also possible to ensure the structural strength of the handle side plate 402, and avoid heavy product and material wasting due to too large wall thickness of the handle side plate 402.

For example, the maximum wall thickness of the handle variable wall thickness region 4023 is 3.1 mm, 3.2 mm, 3.3 mm, 3.4 mm, or 3.5 mm.

In some embodiments of the present disclosure, a minimum wall thickness of the handle variable wall thickness region 4023 ranges from 1.8 mm to 2.2 mm, i.e., a minimum thickness of the handle variable thickness region 4123 ranges from 1.8 mm to 2.2 mm. Therefore, it is beneficial to ensure the fluidity of the material on the handle variable thickness region 4123, to ensure that the handle side plate 402 is filled with the material. As a result, it is possible to at least reduce the flow liners at the handle side plate 402 to some extent, thereby improving the product yield. Moreover, the structural strength of the handle side plate 402 can be ensured.

For example, the minimum wall thickness of the handle variable wall thickness region 4023 is 1.9 mm, 2.0 mm, or 2.1 mm.

In some embodiments of the present disclosure, as illustrated in FIG. 19, the handle side plate 402 is divided into three equal sections in the width direction of the handle side plate 402. In the direction from one end to the other end of the handle side plate 402 in the width direction of the handle side plate 402, the three sections are sequentially referred to as a section k1, a section k2, and a section k3.

Optionally, a wall thickness of the section k1 > a wall thickness of the section k2 > a wall thickness of the section k3. The wall thickness of the section k1 ranges from 3.0 mm to 3.5 mm. The wall thickness of the section k2 ranges from 2.4 mm to 3.0 mm. The wall thickness of the section k3 ranges from 1.8 mm to 2.4 mm.

Optionally, the wall thickness of the section k2 > the wall thickness of the section k1 > the wall thickness of the section k3. The wall thickness of the section k1 ranges from 2.4 mm to 3.0 mm. The wall thickness of the section k2 ranges from 3.0 mm to 3.5 mm. The wall thickness of the section k3 ranges from 1.8 mm to 3.0 mm.

In some embodiments of the present disclosure, a wall thickness of an end of the handle connection plate 401 connected to the handle side plate 402 is not greater than a wall thickness of the end of the handle side plate 402 in the width direction of the handle side plate 402. Correspondingly, in the mold, a thickness of an end, in communication with the handle side plate mold cavity 412, of the handle connection plate mold cavity 411 is not greater than a thickness of the end of the handle side plate mold cavity 412 in the width direction of the handle side plate mold cavity 412. Therefore, more materials can flow directly into the handle side plate mold cavity 412 easily, to further ensure the stable flow of the material, and reduce the obstruction to the material flow, thereby reducing the flow liners at the handle side plate 402.

In some embodiments of the present disclosure, the wall thickness of the end of the handle connection plate 401 connected to the handle side plate 402 is smaller than the wall thickness of the end of the handle side plate 402 in the width direction of the handle side plate 402. Therefore, more materials can flow directly into the handle side plate mold cavity 412 easily, to further ensure the stable flow of the material, and reduce the obstruction to the material flow, thereby reducing the flow liners at the handle side plate 402.

In some embodiments of the present disclosure, the wall thickness of the handle connection plate 401 is smaller than the wall thickness of the handle side plate 402. That is, the thickness of the handle connection plate mold cavity 411 is smaller than the thickness of the handle side plate mold cavity 412, i.e., the minimum thickness. Therefore, more materials can flow directly into the handle side plate mold cavity 412 easily, to further ensure the stable flow of the material, and reduce the obstruction to the material flow, thereby reducing the flow liners at the handle side plate 402.

In some embodiments of the present disclosure, as illustrated in FIG. 17 and FIG. 18, the dispenser handle 40 includes a handle plate 403. The handle plate 403 is connected to the outer peripheral wall of the handle connection plate 401. An end of the handle plate 403 in the peripheral direction of the handle connection plate 401 is connected to an end of the handle side plate 402 in the peripheral direction of the handle connection plate 401. A surface of the other end of the handle plate 403 away from the handle side plate 402 in the width direction of the handle side plate 402 is referred to as an appearance surface, and the handle plate 403 has a gripping portion 4031 disposed on the appearance surface of the handle plate 403. Therefore, the structure is simple. Further, by providing the gripping portion 4031, it is convenient for the user to grip the gripping portion 4031.

In some embodiments, the gripping portion 4031 may be formed as a groove. Therefore, the structure is simple, and processing and manufacturing are facilitated.

In some embodiments of the present disclosure, as illustrated in FIG. 17, a plurality of handle blocking holes 4012 is formed on the handle connection plate 401 and arranged at intervals. The handle connection plate 401 has no handle gate forming region 4021 adapted to correspond to the handle gate of the handle mold 4. Some of the plurality of handle blocking holes 4012 are formed adjacent to the handle side plate 402 (for example, a minimum distance between each of some of the plurality of handle blocking holes 4012 and the handle side plate 402 is not greater than 20 mm, such as 10 mm, 5 mm, or 0 mm), and the remaining of the plurality of handle blocking holes 4012 are formed adjacent to the handle plate 403 (for example, a minimum distance between each of the remaining of the plurality of handle blocking holes 4012 and the handle plate 403 is not greater than 20 mm, such as 10 mm, 5 mm, or 0 mm).

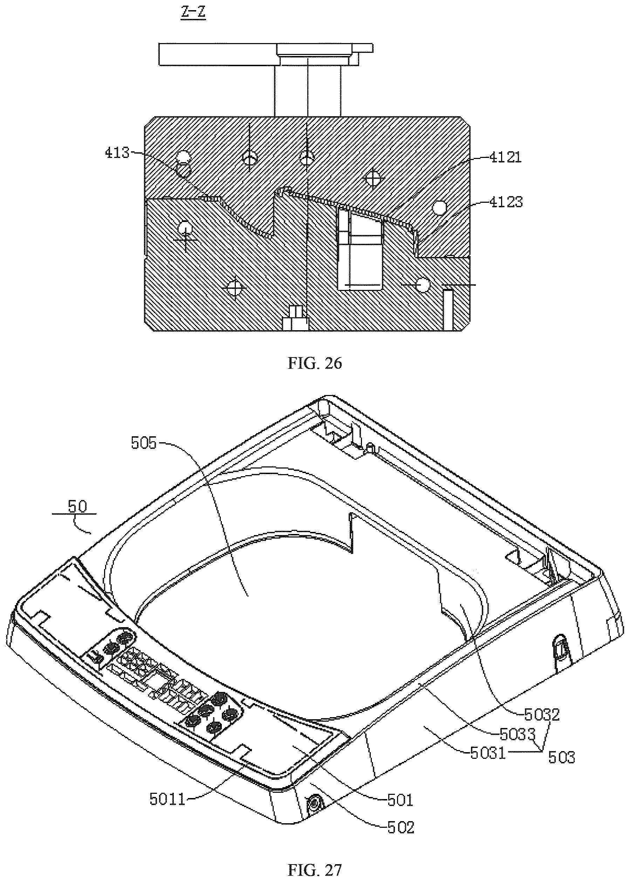

In some embodiments, as illustrated in FIG. 22 and FIG. 26, the handle mold cavity includes a handle plate mold cavity 413. The handle plate mold cavity 413 is in communication with the outer periphery of the handle connection plate mold cavity 411. An end of the handle plate mold cavity 413 in the peripheral direction of the handle connection plate mold cavity 411 is in communication with an end of the handle side plate mold cavity 412 in the peripheral direction of the handle connection plate mold cavity 411. A wall surface of the other end of the handle plate mold cavity 413 away from the handle side plate mold cavity 412 in the width direction of the handle side plate mold cavity 412 is configured to shape the appearance surface of the handle plate 403. The handle mold core 41 has no handle gate located at the handle connection plate mold cavity 411. A handle post structure for forming the handle blocking hole 4012 is provided in the handle connection plate mold cavity 411. The handle post structure extends across the handle connection plate mold cavity 411 in a thickness direction of the handle connection plate mold cavity 411. Some of a plurality of handle post structures are arranged adjacent to the handle side plate mold cavity 412 (for example, a minimum distance between each of some of the plurality of handle post structures and the handle side plate mold cavity 412 is not greater than 20 mm, such as is 10 mm, 8 mm, 5 mm, or 0 mm), and the remaining of the plurality of handle post structures are arranged adjacent to the handle plate mold cavity 413 (for example, a minimum distance between each of the remaining of the plurality of handle post structures and the handle plate mold cavity 413 is not greater than 20 mm, such as is 10 mm, 8 mm, 5 mm, or 0 mm).

In the handle mold 4, the handle gate is located at the wall surface of the handle side plate mold cavity 412 away from the handle connection plate mold cavity 411. In this way, when flowing out of the handle gate, the material first flows through the handle side plate mold cavity 412, and then flows to the handle connection plate mold cavity 411 and the handle plate mold cavity 413. On the one hand, the plurality of handle post structures arranged adjacent to the handle side plate mold cavity 412 can block a flow of the material to the handle connection plate mold cavity 411, and more materials can be preferentially formed in the handle side plate mold cavity 412. On the other hand, the plurality of handle post structures can block the material located in the handle connection plate mold cavity 411 from flowing back to the handle side plate mold cavity 412, to prevent this material from converging, in the handle side plate mold cavity 412, with the material originally located in the handle side plate mold cavity 412. Therefore, it is possible to further prevent the flow liners from being generated on the handle side plate 402. That is, the handle blocking holes 4012 formed at the handle connection plate 401 can prevent the flow liners from being generated on the handle side plate 402.

Moreover, the material in the handle side plate mold cavity 412 can further flow to the handle plate mold cavity 413. On the one hand, the plurality of handle post structures arranged adjacent to the handle plate mold cavity 413 can block the flow of the material to the handle connection plate mold cavity 411, and more materials can be preferentially formed in the handle plate mold cavity 413. On the other hand, the plurality of handle post structures arranged adjacent to the handle plate mold cavity 413 can block the material located in the handle connection plate mold cavity 411 from flowing back to the handle plate mold cavity 413, to prevent this material from converging, in the handle plate mold cavity 413, with the material originally located in the handle plate mold cavity 413. Therefore, it is possible to further prevent the flow liners from being generated on the handle plate 403. That is, the handle blocking holes 4012 formed at the handle connection plate 401 can prevent the flow liners from being generated on the handle side plate 402.

In some embodiments of the present disclosure, as illustrated in FIG. 17, FIG. 18, and FIG. 20, the handle connection plate 401 is of a square shape. The handle side plate 402 includes a first handle side plate body 4021 and a second handle side plate body 4022. The first handle side plate body 4021 and the handle plate 403 are connected to two side walls of the handle connection plate 401 in a width direction of the handle connection plate 401, respectively. The second handle side plate body 4022 is connected to a side wall of the handle connection plate 401 in a length direction of the handle connection plate 401. An end surface of an end of the second handle side plate body 4022 in a length direction thereof is connected to the first handle side plate body 4021. An end of the second handle side plate body 4022 away from the first handle side plate body in a width direction of the second handle side plate body 4022 is connected to the handle plate 403, and the handle gate forming region 4021 is located on the second handle side plate body 4022. Correspondingly, in the mold, the handle connection plate mold cavity 411 is formed into a square shape. The handle side plate mold cavity 412 includes a first handle side plate body mold cavity 4121 and a second handle side plate body mold cavity. The first handle side plate body mold cavity 4121 and the handle plate mold cavity 413 are in communication with two sides of the handle connection plate mold cavity 411 in the width direction of the handle connection plate mold cavity 411, respectively. The second handle side plate body mold cavity is in communication with a side of the handle connection plate mold cavity 411 in the length direction of the handle connection plate mold cavity 411. An end of the second handle side plate body mold cavity in the length direction of the second handle side plate body mold cavity is in communication with the first handle side plate body mold cavity 4121. An end, away from the first handle side plate body mold cavity, of the second handle side plate body mold cavity in a width direction thereof is in communication with the handle plate mold cavity mold cavity 413. The handle gate is located in the second handle side plate body mold cavity. Since the handle gate is located in the second handle side plate body 4022 mold cavity, and the second handle side plate body mold cavity is located between the first handle side plate body mold cavity 4121 and the handle plate mold cavity 413, during the injection molding, it is easier for the material to flow from both sides of the second handle side plate body mold cavity to the first handle side plate body mold cavity 4121 and the handle plate 403 mold cavity, respectively. Therefore, it is more beneficial to improve a forming speed of the material.

In some embodiments of the present disclosure, a side of the dispenser handle 40 opposite to the second handle side plate body 4022 is opened. Correspondingly, in the mold, the opened side corresponds to an entity structure. In addition, and the handle gate is located in the second handle side plate body mold cavity. Thus, it is possible to prevent the material in the first handle side plate body mold cavity 4121 from converging, at the entity structure, with the material in the handle plate mold cavity 413, thereby avoiding the flow liner defect.

In some embodiments of the present disclosure, in the peripheral direction of the handle connection plate 401, a size of the handle constant wall thickness region 4024 ranges from 10 mm to 50 mm. For example, a length of the handle constant wall thickness region 4024 is 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, or 49 mm.

In some embodiments of the present disclosure, in the peripheral direction of the handle connection plate 401, the handle gate forming region 4021 is located at a center of the end of the handle constant wall thickness region 4024 away from the handle connection plate 401. Correspondingly, in the mold, in the peripheral direction of the handle connection plate mold cavity 411, the handle gate is located at a center of the handle constant thickness region. Thus, the handle constant thickness region is more conveniently and preferentially filled with the material.

A dispenser of a laundry treating device according to embodiments of the present disclosure includes the dispenser handle 40 as described above and a dispenser box. The dispenser handle 40 can open and close the dispenser box.

With the dispenser of the laundry treating device according to the embodiments of the present disclosure, the handle gate forming region 4021 is formed at the handle constant wall thickness region 4024, the wall thickness of the handle constant wall thickness region 4024 is not smaller than the maximum wall thickness of the handle variable wall thickness region 4023, and the wall thickness of the end of the handle variable wall thickness region 4023 away from the handle connection plate 401 is minimum. As a result, it is possible to facilitate reducing the flow liners at the handle side plate 402. Thus, the product yield can be at least improved to some extent, thereby satisfying the user's usage demands.

A laundry treating device according to embodiments of the present disclosure includes the dispenser as described above.

With the laundry treating device according to the embodiments of the present disclosure, by providing the above dispenser, the handle gate forming region 4021 is formed at the handle constant wall thickness region 4024, the wall thickness of the handle constant wall thickness region 4024 is not smaller than the maximum wall thickness of the handle variable wall thickness region 4023, and the wall thickness of the end of the handle variable wall thickness region 4023 away from the handle connection plate 401 is minimum. As a result, it is possible to facilitate reducing the flow liners at the handle side plate 402. Thus, the product yield can be at least improved to some extent, thereby satisfying the user's usage demands.

A specific description of a structure of an appearance part will be provided below taking a worktop as an example.

A worktop 50 used in a laundry treating device such as a top-load washing machine is an important component of the top-load washing machine, and has dual requirements of function and appearance.

Generally, a manufacturing process for the worktop 50 is mostly implemented through an injection molding and spraying process, and the sprayed worktop 50 has a gorgeous metal appearance effect. However, the spraying process has the defects such as serious pollution, high cost, low qualified rate, unrecyclable unqualified product, and the like, which seriously affects health of environment and production personnel, and does not conform to the green manufacturing concept. In order to overcome the defects in the spraying process, a spraying-free thermoplastic engineering material emerges, and the metal appearance effect of a product can be given by spraying-free injection molding. As a result, the spraying process can be replaced, thereby lowering production cost. Meanwhile, it is possible to avoid emission of pollutants during the spraying.

No matter whether the worktop 50 is manufactured by using a spraying-free material or through the injection molding and spraying process, for a material with poor fluidity, especially for a spraying-free material including metal particles, since there are the metal particles and other substances in the spraying-free material, uneven arrangement of the metal particles may be generated due to an obstruction to the material when flowing during the injection molding. As a result, the injection-molded product may occur light scattering under an irradiation of light, and flow liners thus are visually generated on the product, which results in a flow liner defect on the product. When the flow liners are generated on an appearance surface of the product, the flow liners not only lead to low qualified rate, but also cannot satisfy user's usage demands. A description will be provided below taking the spraying-free material including metal particles as an example. That is, the worktop 50 may be a spray-free piece including a resin matrix and metal particles distributed in the resin matrix. Optionally, the metal particles are aluminum, silver, or copper.

According to the embodiments of the present disclosure, a worktop 50 of a laundry treating device, a laundry treating device, and a worktop mold 5 for forming the worktop 50 will be described below. The worktop 50 is an integral injection-molding piece. As a result, a structure of the integral piece not only can ensure structural and performance stability of the worktop 50, but also leads to convenient forming and simple manufacturing. Moreover, redundant assembly parts and connection steps can be removed, and connection reliability of the worktop 50 can be ensured. Furthermore, the integrally formed structure is high in overall strength and stability, is more convenient to be assembled, and is longer in service life. Optionally, the laundry treating device may be a washing machine, clothes dryer, or a washing and drying integrated machine.

In some embodiments, as illustrated in FIG. 27, the worktop 50 of the laundry treating device has a laundry feeding port 505. When the worktop 50 is mounted in the laundry treating device, the laundry feeding port 505 is directly opposite to an opening of an inter tub of the laundry treating device. As a result, the laundry is conveniently placed into the inner tub or taken away from the inner tub.

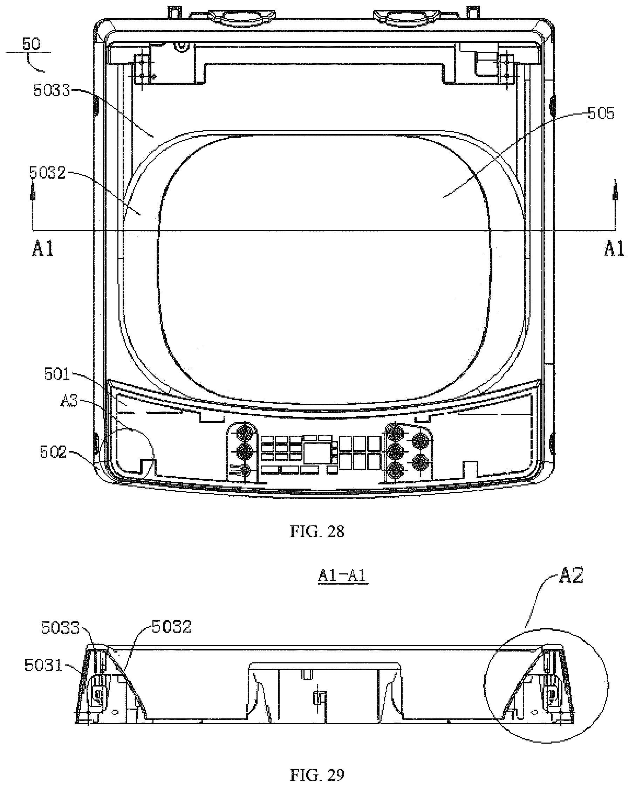

As illustrated in FIG. 27 and FIG. 28, according to the embodiments of the present disclosure, the worktop 50 of the laundry treating device includes a worktop connection plate 501 and a worktop side plate 502.

A surface of the worktop connection plate 501 is a non-appearance surface. That is, when the worktop 50 is applied in the laundry treating device, the surface of the worktop connection plate 501 is not exposed.

As illustrated in FIG. 27, FIG. 28, and FIG. 37g, the worktop side plate 502 extends in a peripheral direction of the worktop connection plate 501. An angle is formed between the worktop side plate 502 and the worktop connection plate 501. One end of the worktop side plate 502 in a width direction thereof is connected to an outer peripheral wall of the worktop connection plate 501. An end surface of the other end of the worktop side plate 502 in the width direction thereof has at least one worktop gate forming region 5021 adapted to correspond to a worktop gate of a worktop mold 5. It can be understood that for the end and the other end of the worktop side plate 102 in the width direction thereof, the end of the worktop side plate 502 in the width direction thereof is an end connected to the worktop connection plate 501, the other end of the worktop side plate 502 in the width direction thereof is an end away from the worktop connection plate 501, and the worktop gate forming region 5021 is formed at the end surface of the other end of the worktop side plate 502 in a width direction of the worktop side plate 502.

In some embodiments, after the worktop 50 is formed through injection molding by the worktop mold 5 and the worktop 50 is de-molded from the worktop mold 5, a part of a material at the worktop gate of the worktop mold 5 is left on the worktop 50 and is formed into a worktop gate forming portion. The worktop gate forming region 5021 of the worktop 50 is a region where the worktop gate forming portion is located. It can be understood that the worktop 50 may be further processed to cut away or partially cut away the worktop gate forming portion. In an example, the worktop gate forming portion of the worktop 50 may not be processed. That is, the worktop gate forming portion is remained on the worktop 50. The embodiment of the present disclosure is not limited in this regard, and the worktop gate forming portion may be provide as desired.

A side surface of the worktop side plate 502 facing away from the worktop connection plate 501 in a thickness direction of the worktop side plate 502 is referred to as an appearance surface. That is, an outer peripheral wall of the worktop side plate 502 is referred to as the appearance surface, and an inner peripheral wall of the worktop side plate 502 is referred to as the non-appearance surface. The end surface of the other end of the worktop side plate 502 in the width direction thereof, i.e., the end surface of the end away from the worktop connection plate 501, is referred to as the non-appearance surface. The appearance surface means that the surface is exposed when the worktop 50 is applied in the laundry treating device. The non-appearance surface means that the surface is not exposed when the worktop 50 is applied in the laundry treating device.

The worktop side plate 502 has a worktop constant wall thickness region 5024. The worktop constant wall thickness region 5024 extends across the worktop side plate 502 in the width direction of the worktop side plate 502. That is, the worktop constant wall thickness region 5024 extends to both ends of the worktop side plate 502 in the width direction of the worktop side plate 502, and has a constant wall thickness at any position.

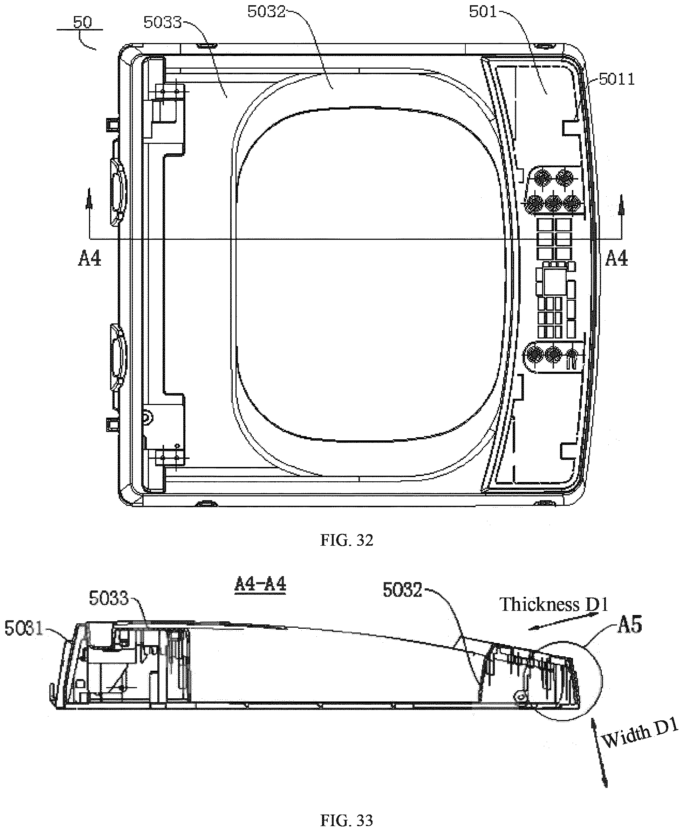

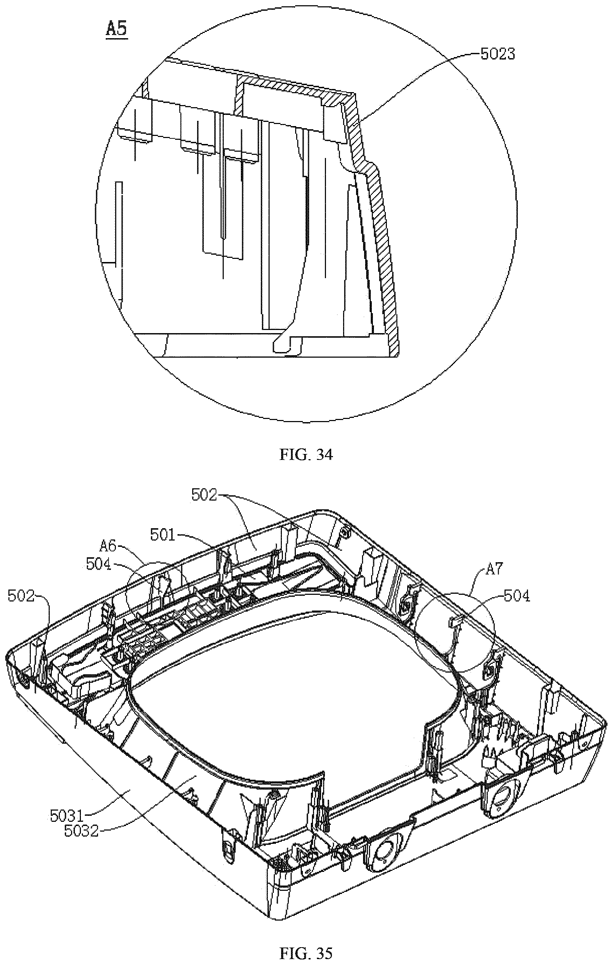

As illustrated in FIG. 33 and FIG. 34, the worktop gate forming region 5021 is formed at the worktop constant wall thickness region 5024. That is, the worktop gate forming region 5021 is located at the end of the worktop constant wall thickness region 5024 away from the worktop connection plate 501. Other region of the worktop side plate 502 rather than the worktop constant wall thickness region 5024 is a worktop variable wall thickness region 5023. A wall thickness of the worktop constant wall thickness region 5024 is not smaller than (i.e., is equal to or greater than) a maximum wall thickness of the worktop variable wall thickness region 5023. Further, an end of the worktop variable wall thickness region 5023 away from the worktop connection plate 501 has a minimum wall thickness. That is, in the width direction of the worktop side plate 502, the wall thickness of the end of the worktop variable wall thickness region 5023 away from the worktop connection plate 501 is minimum. In this way, it is possible to at least reduce flow liners on the worktop side plate 502 to some extent, to at least prevent the flow liners from being generated on an appearance surface of the worktop side plate 502 to some extent. Therefore, a qualified rate of the worktop side plate 502 can be at least improved to some extent, thereby lowering cost and satisfying the user's usage demands.

In order to facilitate explaining the reason why the flow liners on the worktop side plate 502 are reduced, the worktop mold 5 for forming the worktop 50 according to the embodiments of the present disclosure will be described below, and the reason why the flow liners on the appearance surface of the worktop side plate 502 are reduced are illustrated in principle and in combination with a structure of the worktop mold 5.

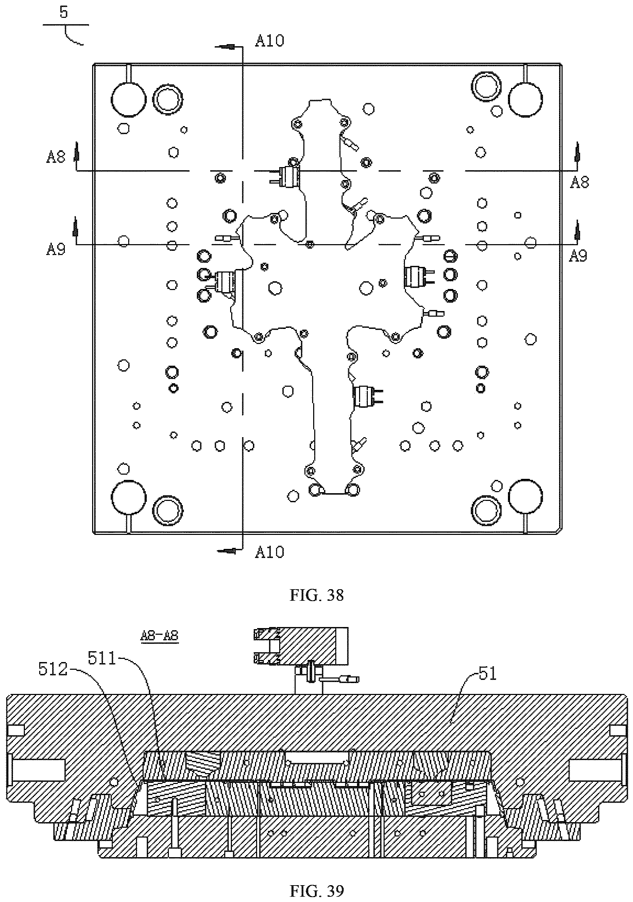

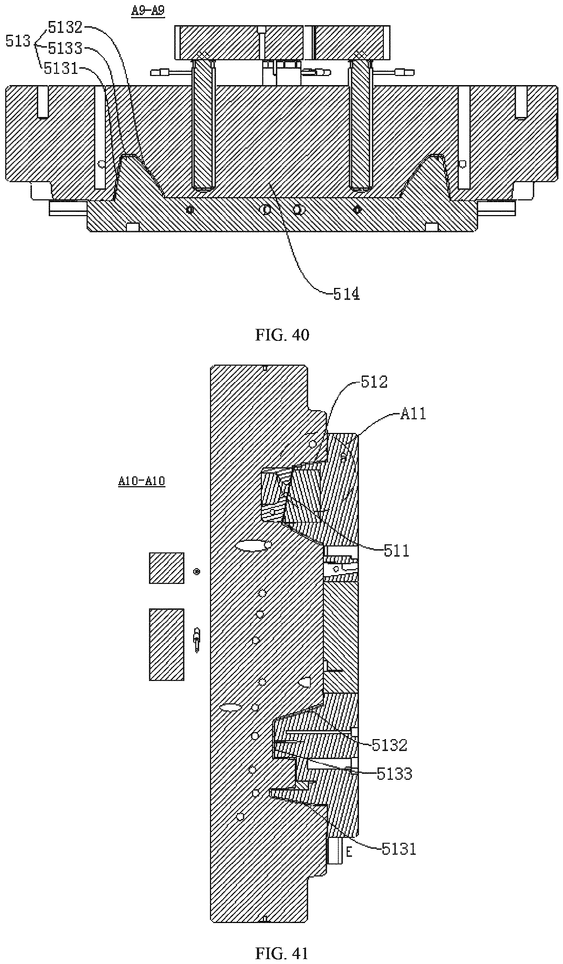

As illustrated in FIG. 38 and FIG. 40, according to the embodiments of the present disclosure, the worktop mold 5 for forming the worktop 50 includes a worktop mold core 51. The worktop mold core 51 has a worktop mold cavity. A column 514 for forming the laundry feeding port 505 is provided in the worktop mold cavity.

In some embodiments, as illustrated in FIG. 39, the worktop mold cavity includes a worktop side plate mold cavity 512 and a worktop connection plate mold cavity 511. The worktop side plate mold cavity 512 is configured to shape the worktop side plate 502, and the worktop connection plate mold cavity 511 is configured to shape the worktop connection plate 501.

The worktop side plate mold cavity 512 extends in a peripheral direction of the worktop connection plate mold cavity 511. An angle is formed between the worktop side plate mold cavity 512 and the worktop connection plate mold cavity 511. An end of the worktop side plate mold cavity 512 in a width direction thereof is in communication with an outer periphery of the worktop connection plate mold cavity 511. The worktop mold core 51 has a worktop gate located on a wall surface of the other end of the worktop side plate mold cavity 512 in a width direction of the worktop side plate mold cavity 512. A side wall surface of the worktop side plate mold cavity 512 in a thickness direction thereof is configured to shape an appearance surface of the worktop side plate 502. It can be understood that the end of the worktop side plate mold cavity 512 in the width direction thereof is an end in communication with the worktop connection plate mold cavity 511, and the other end of the worktop side plate mold cavity 512 in the width direction thereof is an end away from the worktop connection plate mold cavity 511.

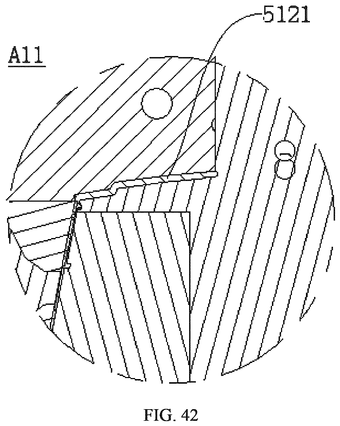

The worktop side plate mold cavity 512 has a worktop constant thickness region. The worktop gate is located at the worktop constant thickness region. The worktop constant thickness region extends across the worktop side plate mold cavity 512 in the width direction of the worktop side plate mold cavity 512. Other region of the worktop side plate mold cavity 512 rather than the worktop constant thickness region is a worktop variable thickness region 5121. As illustrated in FIG. 41 and FIG. 42, a thickness of the worktop constant thickness region is not smaller than (i.e., is equal to or greater than) a maximum thickness of the worktop variable thickness region 5121, and an end of the worktop variable thickness region 5121 away from the worktop connection plate mold cavity 511 has a minimum thickness. That is, in the width direction of the worktop side plate mold cavity 512, the other end of the worktop variable thickness region 5121 in a width direction thereof, i.e., an end away from the worktop connection plate mold cavity 511, has a minimum thickness.

In some embodiments, during the injection molding, when the material flows, after the hot melt material flows into the worktop mold cavity through the worktop gate, the hot melt material is brought into contact with a cold inner wall of the worktop mold cavity during its flowing. As a result, the material is quickly solidified on the inner wall of the worktop mold cavity to form a thin solidification layer. A quality of an appearance of a spray-free product depends on an arrangement of metal particles in the solidification layer, and the stable flow can allow for a uniform metal particle orientation to obtain a better appearance. According to the embodiments of the present disclosure, the worktop gate of the mold is located at the worktop constant thickness region, and the thickness of the worktop constant thickness region is not smaller than the maximum thickness of the worktop variable thickness region 5121. In this way, when the material flows out of the worktop gate of the worktop mold 5, the material can directly flow to the worktop constant thickness region and is full with worktop constant thickness region. Then, most of the material flows towards the worktop variable thickness region 5121 from two sides of the worktop constant thickness region along the worktop side plate mold cavity 512, respectively. Thus, it is possible to facilitate the material to be formed at the worktop side plate mold cavity 512 preferentially. Therefore, it is possible to at least reduce the flow liners at the worktop side plate mold cavity 512 to some extent, to prevent the flow liners from being generated on an appearance surface of the worktop side plate mold cavity 512. Therefore, the qualified rate of the product can be improved, thereby lowering the cost and satisfying the user's usage demands.

Moreover, since the end of the worktop variable thickness region 5121 away from the worktop connection plate mold cavity 511 has the minimum thickness, i.e., in the width direction of the worktop side plate mold cavity 512, a thickness of a part (referred to as a large thickness portion) of the worktop variable thickness region 5121 adjacent to the worktop connection plate mold cavity 511 and in direct communication with the minimum thickness portion of the worktop variable thickness region 5121 is necessarily greater than the thickness of the end of the worktop variable thickness region 5121 away from the worktop connection plate mold cavity 511. In this way, in the peripheral direction of the worktop connection plate mold cavity 511, when the material flows, it is easier for the material to flow at the large thickness portion at a higher flow velocity. As a result, the material has a forward protruding form and obvious front edge flow at the large thickness portion. Moreover, an actual flow direction of the material at each point on the front edge surface is an outward direction perpendicular to a tangent line of the front edge surface. Therefore, the flow direction at each point on the front edge surface is divergent, and does not intersect with each other, thereby avoiding occurrence of curling and rotation. As a result, it is possible to prevent the material at the large thickness portion and the material at the small thickness portion from being curled and rotated at the front edge to some extent, to further ensure the flow stability of the material. Therefore, the flow liners at positions on the worktop side plate 502 corresponding to the large thickness portion and the small thickness portion can be reduced. In addition, it is possible to at least improve the product yield to some extent and satisfy the user's usage demands.

There are several variation relationships for the worktop variable wall thickness region 5023 of the worktop side plate 502, and these variation relationships will be described below.

For a first variation relationship, a wall thickness of the worktop variable wall thickness region 5023 gradually decreases in a direction from one end to the other end of the worktop side plate 502 in the width direction of the worktop side plate 502. Correspondingly, in the worktop mold 5, a thickness of the worktop variable thickness region 5121 gradually decreases in a direction from one end to the other end of the worktop side plate mold cavity 512 in the width direction of the worktop side plate mold cavity 512. In this way, in the peripheral direction of the worktop connection plate mold cavity 511, when the material flows in the worktop side plate mold cavity 512, depending on the thickness variation of the worktop variable thickness region 5121, it is easier for the material to flow at a position where the worktop variable thickness region 5121 has the large thickness with small flow resistance. As a result, a front edge surface of the material flow may be an inclined surface as illustrated in FIG. 12. Moreover, an actual flow direction of the material at each point on its front edge surface is an outward direction perpendicular to a tangent line of the front edge surface. Therefore, the flow direction at each point on the front edge surface is divergent, and does not intersect with each other. As a result, the curling and rotation of the material at its front edge can be avoided, and the material has more stable flow. In this manner, it is possible to further reduce the flow liners at the worktop side plate 502, to further prevent the flow liners from being generated on the appearance surface of the worktop side plate 502. Therefore, the qualified rate of the product can be improved, thereby lowering the cost and satisfying the user's usage demands.

For a second variation relationship, the wall thickness of the worktop variable wall thickness region 5023 is first constant and then gradually decreases in the direction from one end to the other end of the worktop side plate 502 in the width direction of the worktop side plate 502. Correspondingly, in the worktop mold 5, the thickness of the worktop variable thickness region 5121 is first constant and then gradually decreases in the direction from one end to the other end of the worktop side plate mold cavity 512 in the width direction of the worktop side plate mold cavity 512. In this way, in the peripheral direction of the worktop connection plate mold cavity 511, when the material flows, depending on the thickness variation of the worktop variable thickness region 5121, it is easier for the material to flow at the position where the worktop variable thickness region 5121 has the large thickness with small flow resistance. As a result, as illustrated in FIG. 14, the front edge surface of the material flow may include a surface substantially parallel to the width direction of the worktop side plate mold cavity 512 at a same thickness and an inclined surface towards an upstream of the material flow at a gradually decreasing thickness position. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at the front edge can be avoided, and the material has more stable flow. In this manner, it is possible to further reduce the flow liners at the worktop side plate 502, to further prevent the flow liners from being generated on the appearance surface of the worktop side plate 502. Therefore, the qualified rate of the product can be improved, thereby lowering the cost and satisfying the user's usage demands.

For a third variation relationship, the wall thickness of the worktop side plate 502 gradually increases and then gradually decreases in the direction from one end to the other end of the worktop side plate 502 in the width direction of the worktop side plate 502. Correspondingly, in the worktop mold 53, the thickness of the worktop side plate mold cavity 512 gradually increases and then gradually decreases in the direction from one end to the other end of the worktop side plate mold cavity 512 in the width direction of the worktop side plate mold cavity 512. In this way, in the peripheral direction of the worktop connection plate mold cavity 511, when the material flows, depending on the thickness variation of the worktop variable thickness region 5121, it is easier for the material to flow at the position where the worktop variable thickness region 5121 has the large thickness with small flow resistance. As a result, the front edge surface of the material flow may have a forwarding protruding form as illustrated in FIG. 13. Moreover, the actual flow direction of the material at each point on its front edge surface is the outward direction perpendicular to the tangent line of the front edge surface. Therefore, the flow direction at each point on the front edge surface is divergent, and does not intersect with each other. As a result, the curling and rotation of the material at the front edge can be avoided, and the material has more stable flow. In this manner, it is possible to further reduce the flow liners at the worktop side plate 502, to further prevent the flow liners from being generated on the appearance surface of the worktop side plate 502. Therefore, the qualified rate of the product can be improved, thereby lowering the cost and satisfying the user's usage demands.

For a fourth variation relationship, in the direction from one end to the other end of the worktop side plate 502 in the width direction of the worktop side plate 502, the wall thickness of the worktop variable wall thickness region 5023 first gradually increases, then remains constant, and then gradually decreases. Correspondingly, in the worktop mold 5, in the direction from one end to the other end of the worktop side plate mold cavity 512 in the width direction of the worktop side plate mold cavity 512, the thickness of the worktop variable thickness region 5121 first gradually increases, then remains constant, and then gradually decreases. In this way, in the peripheral direction of the worktop connection plate mold cavity 511, when the material flows, depending on the thickness variation of the worktop variable thickness region 5121, it is easier for the material to flow at the position where the worktop variable thickness region 5121 has the large thickness with small flow resistance. As a result, the front edge surface of the material flow may have a forward protruding form as illustrated in FIG. 15. As a result, the curling and rotation of the material at its front edge can be avoided, and the material has more stable flow. In this manner, it is possible to further reduce the flow liners at the worktop side plate 502, to further prevent the flow liners from being generated on the appearance surface of the worktop side plate 502. Therefore, the qualified rate of the product can be improved, thereby lowering the cost and satisfying the user's usage demands.

Therefore, compared with a recessed front edge surface illustrated in FIG. 16 in the related art, according to the above embodiments of the present disclosure, it is more conducive to the reduction of the flow liners on the worktop side plate 502.

For explanation, provided below is that the larger the wall thickness is, the faster a flow velocity of the material is.

When the material is injected into the worktop mold 5 under a predetermined condition, a temperature of the material is sharply decreased due to contact with a cold wall surface of the worktop mold cavity, and generates the solidification layer. In addition, a flow area of the worktop mold cavity is reduced as a thickness of the solidification layer increases. As a result, the thickness of the solidification layer has an important influence on convection resistance. A relationship between the fluidity s and the thickness h of the worktop 50 mold cavity satisfies formula I.

$$s = \int_0^k \frac{z^2}{\eta} z = \frac{h^3}{3\eta_{rep}}$$

（Formula I）

where $\eta_{rep}$ represents viscosity of the material.

According to the fluidity formula, the fluidity s is proportional to a cube of the thickness h. For example, when the thickness is reduced by fifty percent, the fluidity will be reduced to one eighth, which means that the flow resistance is increased to eight times. As a result, the thicker the mold cavity, the lower the flow resistance, the better the fluidity, and the faster the flow velocity.

With the worktop mold 5 for forming the worktop 50 according to the embodiments of the present disclosure, the worktop gate is located at the worktop constant thickness region, and the thickness of the worktop constant thickness region is not smaller than the maximum thickness of the worktop variable thickness region 5121. Thus, it is possible to facilitate ensuring the stability of the flow of material, thereby reducing the flow liners at the worktop side plate 502. Therefore, it is possible to at least improve the product yield to some extent, thereby satisfying the user's usage demands.

With the worktop 50 of the laundry treating device according to the embodiments of the present disclosure, the worktop gate forming region 5021 is formed on the worktop constant wall thickness region 5024, and the wall thickness of the worktop constant wall thickness region 5024 is not smaller than the maximum wall thickness of the worktop variable wall thickness region 5023. Thus, it is beneficial to reduce the flow liners at the worktop side plate 502. Therefore, the product yield can be at least improved to some extent, thereby satisfying the user's usage demands.

In some embodiments of the present disclosure, the maximum wall thickness of the worktop variable wall thickness region 5023 ranges from 2.5 mm to 3.5 mm, i.e., in the worktop mold 5, the maximum thickness of the worktop variable thickness region 5121 ranges from 2.5 mm to 3.5 mm. Therefore, it is beneficial to ensure fluidity of the material on the worktop variable thickness region 5121 to ensure that the worktop side plate 502 is filled with the material. As a result, it is possible to at least reduce the flow liners at the worktop side plate 502 to some extent, thereby improving the product yield. Moreover, structural strength of the worktop side plate 502 can be ensured. Meanwhile, it is also possible to ensure the structural strength of the worktop side plate 502, and avoid heavy product and material wasting due to too large wall thickness of the worktop side plate 502.

For example, the maximum wall thickness of the worktop variable wall thickness region 5023 is 2.6 mm, 2.7 mm, 2.8 mm, 2.9 mm, 3.0 mm, 3.1 mm, 3.2 mm, 3.3 mm, 3.4 mm, or 3.5 mm.

In some embodiments of the present disclosure, a minimum wall thickness of the worktop variable wall thickness region 5023 ranges from 1.5 mm to 2.5 mm, i.e., in the worktop mold 5, a minimum thickness of the worktop variable thickness region 5121 ranges from 1.5 mm to 2.5 mm. Therefore, it is beneficial to ensure the fluidity of the material on the worktop variable thickness region 5121, to ensure that the worktop side plate 502 is filled with the material. As a result, it is possible to at least reduce the flow liners at the worktop side plate 502 to some extent, thereby improving the product yield. Moreover, the structural strength of the worktop side plate 502 can be ensured.

For example, the minimum wall thickness of the worktop variable wall thickness region 5023 is 1.6 mm, 1.7 mm, 1.8 mm, 1.9 mm, 2.0 mm, 2.1 mm, 2.2 mm, 2.3 mm, or 2.4 mm.

In some examples, the wall thickness of the worktop variable wall thickness region 5023 gradually decreases from 2.8mm to 1.6mm in the direction from one end to the other end of the worktop side plate 502 in the width direction of the worktop side plate 502.

In some embodiments of the present disclosure, a wall thickness of the end of the worktop connection plate 501 connected to the worktop side plate 502 is not greater than a wall thickness of the end of the worktop side plate 502 in the width direction of the worktop side plate 502. Correspondingly, in the worktop mold 5, a thickness of an end, in communication with the worktop side plate mold cavity 512, of the worktop connection plate mold cavity 511 is not greater than a thickness of the end of the worktop side plate mold cavity 512 in the width direction of the worktop side plate mold cavity 512. Therefore, more materials can flow directly into the worktop side plate mold cavity 512 easily, to further ensure the stable flow of the material, and reduce the obstruction to the material flow, thereby reducing the flow liners at the worktop side plate 502.

In some embodiments of the present disclosure, the wall thickness of the end of the worktop connection plate 501 connected to the worktop side plate 502 is smaller than the wall thickness of the end of the worktop side plate 502 in the width direction of the worktop side plate 502. Correspondingly, in the worktop mold 5, the thickness of the end, in communication with the worktop side plate mold cavity 512, of the worktop connection plate mold cavity 511 is smaller than the thickness of the end of the worktop side plate mold cavity 512 in the width direction of the worktop side plate mold cavity 512. Therefore, more materials can flow directly into the worktop side plate mold cavity 512 easily, to further ensure the stable flow of the material and reduce the obstruction to the material flow, thereby reducing the flow liners at the worktop side plate 502.

In some embodiments of the present disclosure, a wall thickness of the worktop connection plate 501 is smaller than a wall thickness of an end of the worktop side plate 502 connected to the worktop connection plate 501. Correspondingly, in the worktop mold 5, a thickness of the worktop connection plate mold cavity 511 is smaller than a thickness of an end, in communication with the worktop connection plate mold cavity 511, of the worktop side plate mold cavity 512. Therefore, more materials can flow directly into the worktop side plate mold cavity 512 easily, to further ensure the stable flow of the material and reduce the obstruction to the material flow, thereby reducing the flow liners at the worktop side plate 502.

In some embodiments of the present disclosure, the wall thickness of the worktop connection plate 501 is smaller than the wall thickness of an end of the worktop side plate 502. That is, the wall thickness of the worktop connection plate 501 is smaller than a minimum wall thickness of the worktop side plate 502. Therefore, more materials can flow directly into the worktop side plate mold cavity 512 easily, to further ensure the stable flow of the material and reduce the obstruction to the material flow, thereby reducing the flow liners at the worktop side plate 502.

In some embodiments of the present disclosure, the wall thickness of the worktop connection plate 501 ranges from 0.8 mm to 2.2 mm. For example, the wall thickness of the worktop connection plate 501 is 0.9 mm, 1.0 mm, or 1.1 mm.

In the worktop mold 5, the thickness of the worktop connection plate mold cavity 511 ranges from 0.8 mm to 2.2 mm. For example, the thickness of the worktop connection plate mold cavity 511 is 0.9 mm or 1.0 mm. Therefore, more materials can preferentially flow and is formed in the worktop side plate mold cavity 512, thereby improving appearance attractiveness of the worktop side plate 502.

In some embodiments of the present disclosure, the worktop 50 includes a feeding table 503. The feeding table 503 is connected to the outer peripheral wall of the worktop connection plate 501. The worktop side plate 502 and the feeding table 503 are arranged in the peripheral direction of the worktop connection plate 501. Two ends of the worktop side plate 502 in the peripheral direction of the worktop connection plate 501 are connected to two corresponding ends of the feeding table 503 in the peripheral direction of the worktop connection plate 501. The feeding table 503 has the above laundry feeding port 505. Each of an inner peripheral wall of the laundry feeding port 505, an outer peripheral surface of the feeding table 503, and a top surface of the feeding table 503 is an appearance surface. Therefore, the structure is simple. Further, by providing the laundry feeding port 505, it is possible for the laundry to be conveniently placed into an inner tub or are taken away from the inner tub.

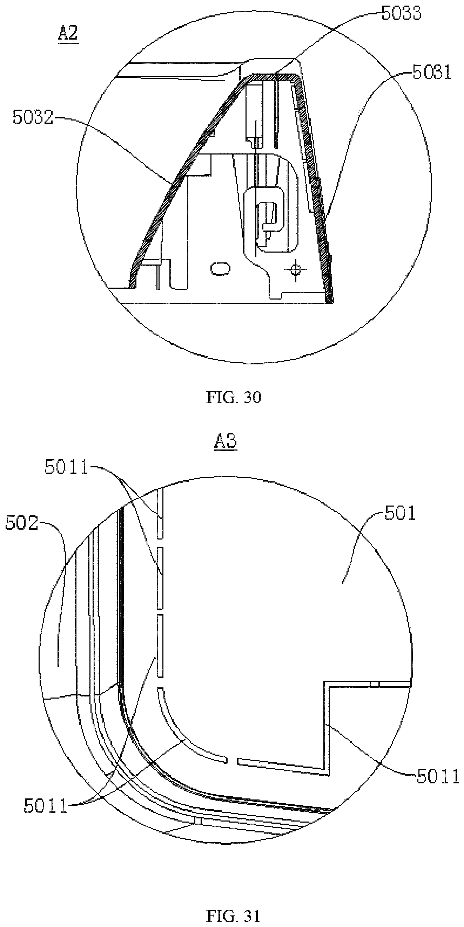

In some embodiments of the present disclosure, as illustrated in FIG. 31, a plurality of worktop blocking holes 5011 is formed on the worktop connection plate 501 and arranged at intervals. The plurality of worktop blocking holes 5011 penetrates the worktop connection plate 501 in a thickness direction of the worktop connection plate 501. The worktop connection plate 501 has no worktop gate forming region 5021 adapted to correspond to the worktop gate of the worktop mold 5. Some of the plurality of worktop blocking holes 5011 are formed adjacent to the worktop side plate 502 (for example, a minimum distance between the worktop blocking hole 5011 adjacent to the worktop side plate 502 and the worktop side plate 502 is not greater than 20 mm, and preferably is 10 mm, 5 mm, or 0 mm), and the remaining of the plurality of worktop blocking holes 5011 are formed adjacent to the feeding table 503 (for example, a minimum distance between the worktop blocking hole 5011 adjacent to the feeding table 503 and the feeding table 503 is not greater than 20 mm, preferably is 10 mm, 5 mm, or 0 mm). For example, the plurality of worktable blocking holes 5011 is arranged at intervals in a peripheral direction of the worktable connection plate 501.

Correspondingly, as illustrated in FIG. 40, the worktop mold cavity includes a feeding table mold cavity 513. The feeding table mold cavity 513 is in communication with the outer periphery of the worktop connection plate mold cavity 511. The feeding table mold cavity 513 and the worktop side plate mold cavity 512 are arranged in the peripheral direction of the worktop connection plate mold cavity 511. Two ends, in the peripheral direction of the worktop connection plate mold cavity 511, of the worktop side plate mold cavity 512 are both in communication with the feeding table mold cavity 513. A column 514 for forming the laundry feeding port 505 is arranged in the feeding table mold cavity 513. The

36

worktop mold core 51 has no worktop gate located at the worktop connection plate mold cavity 511. A worktop post structure for forming the worktop blocking hole 5011 is provided in the worktop connection plate mold cavity 511. The worktop 50 post structure extends across the worktop connection plate mold cavity 511 in a thickness direction of the worktop connection plate mold cavity 511. Some of a plurality of worktop 50 post structures are arranged adjacent to the worktop side plate mold cavity 512 (for example, a minimum distance between the worktop 50 post structure adjacent to the worktop side plate mold cavity 512 and the worktop side plate mold cavity 512 is not greater than 20 mm, preferably is 10 mm, 5 mm, or 0 mm), and the remaining of the plurality of worktop 50 post structures are arranged adjacent to the feeding table mold cavity 513 (for example, a minimum distance between the worktop 50 post structure adjacent to the feeding table mold cavity 513 and the feeding table mold cavity 513 is not greater than 20 mm, preferably is 10 mm, 5 mm, or 0 mm).

In the worktop mold 5, the worktop gate is located at a wall surface of the worktop side plate mold cavity 512 away from the worktop connection plate mold cavity 511. In this way, when flowing out of the worktop gate, the material first flows through the worktop side plate mold cavity 512, and then flows to the worktop connection plate mold cavity 511 and the feeding table mold cavity 513. On the one hand, the plurality of worktop post structures arranged adjacent to the worktop side plate mold cavity 512 can block a flow of the material to the worktop connection plate mold cavity 511, and more materials can be preferentially formed in the worktop side plate mold cavity 512. On the other hand, the plurality of worktop post structures can block the material located in the worktop connection plate mold cavity 511 from flowing back to the worktop side plate mold cavity 512, to prevent this material from converging, in the worktop side plate mold cavity 512, with the material originally located in the worktop side plate mold cavity 512. Therefore, it is possible to further prevent the flow liners from being generated on the worktop side plate 502.

Moreover, the material in the worktop side plate mold cavity 512 can further flow to the feeding table mold cavity 513. On the one hand, the plurality of worktop 50 post structures arranged adjacent to the feeding table mold cavity 513 can block the flow of the material to the worktop connection plate mold cavity 511, and more materials can be preferentially formed in the feeding table mold cavity 513. On the other hand, it is also possible to block the material located in the worktop connection plate mold cavity 511 from flowing back to the feeding table mold cavity 513, to prevent this material from converging, in the feeding table mold cavity 513, with the material originally located in the feeding table mold cavity 513. Therefore, it is possible to further prevent the flow liners from being generated on the feeding table 503.

In some embodiments of the present disclosure, as illustrated in FIG. 27 to FIG. 30, the feeding table 503 includes a U-shaped outer peripheral side plate 5031, an annular enclosing plate 5032, and a U-shaped top plate 5033. Two ends of the outer peripheral side plate 5031 in a peripheral direction thereof are connected to two ends of the worktop side plate 502 in the peripheral direction of the worktop connection plate 501 in one-to-one correspondence, respectively. The enclosing plate 5032 is located at an inner side of the outer peripheral side plate 5031. A part of an upper end of an outer peripheral wall of the enclosing plate 5032 is connected to the outer peripheral wall of the worktop connection plate 501. The laundry feeding port 503 is defined by the enclosing plate 5032. The top plate 5033 is connected between the rest part of the upper end of the outer peripheral wall of the enclosing plate 5032 and an upper end of an inner peripheral wall of the outer peripheral side plate 5031. End surfaces of two ends of the top plate 5033 in the peripheral direction of the top plate 5033 are located at two radial sides of the enclosing plate 5032 and are connected to the worktop connection plate 501. Therefore, each of the inner peripheral wall of the enclosing plate 5032, the outer peripheral surface of the outer peripheral side plate 5031, and the top surface of the top plate 5033 is an appearance surface.

Correspondingly, in the worktop mold 5, the feeding table mold cavity 513 includes a U-shaped outer peripheral side plate mold cavity 5131, an annular enclosing plate mold cavity 5132, and a U-shaped top plate mold cavity 5133. Two ends of the outer peripheral side plate mold cavity 5131 in a peripheral direction thereof are in communication with two ends of the worktop side plate mold cavity 512 in the peripheral direction of the worktop connection plate mold cavity 511 in one-to-one correspondence, respectively. The enclosing plate mold cavity 5132 is located on an inner periphery of the outer peripheral side plate mold cavity 5131. A part of an outer periphery of an axial end of the enclosing plate mold cavity 5132 is in direct communication with the outer periphery of the worktop connection plate mold cavity 511. An outer peripheral wall of the column 514 severs as an inner peripheral wall of the enclosing plate mold cavity 5132. The top plate mold cavity 5133 is communicated between the rest part of the outer periphery of the axial end of the enclosing plate mold cavity 5132 and an upper end of the inner periphery of the outer peripheral side plate mold cavity 5131. Two ends of the top plate mold cavity 5133 in a peripheral direction of the top plate mold cavity 5133 are located at two radial sides of the enclosing plate mold cavity 5132 and are both in communication with the worktop connection plate mold cavity 511.

In some embodiments of the present disclosure, in a direction from one end of the outer peripheral side plate 5031 connected to the top plate 5033 to the other end of the outer peripheral side plate 5031, i.e., in the width direction of the worktop side plate 502, an end of the outer peripheral side plate 5031 away from the top plate 5033 has a minimum wall thickness.

There are several wall thickness variation relationships for the outer peripheral side plate 5031, and these wall thickness variation relationships will be described below. In a first wall thickness variation relationship, in the direction from one end of the outer peripheral side plate 5031 connected to the top plate 5033 to the other end of the outer peripheral side plate 5031, a wall thickness of the outer peripheral side plate 5031 gradually decreases. In a second wall thickness variation relationship, in the direction from one end of the outer peripheral side plate 5031 connected to the top plate 5033 to the other end of the outer peripheral side plate 5031, the wall thickness of the outer peripheral side plate 5031 first remains constant and then gradually decreases. In a third wall thickness variation relationship, in the direction from one end of the outer peripheral side plate 5031 connected to the top plate 5033 to the other end of the outer peripheral side plate 5031, the wall thickness of the outer peripheral side plate 5031 gradually increases and then gradually decreases. In a fourth wall thickness variation relationship, in the direction from one end of the outer peripheral side plate 5031 connected to the top plate 5033 to the other end of the outer peripheral side plate 5031, the wall thickness of the outer peripheral side plate 5031 first gradually increases, then remains constant, and then gradually decreases. As a result, compared with the worktop connection plate 501, the outer peripheral side plate 5031 is preferentially formed, thus facilitating a final convergence of the material in the worktop connection plate mold cavity 511. Therefore, it is possible to avoid the convergence of the material on the outer peripheral side plate 5031, which in turn prevents the flow liners from being generated on the outer peripheral side plate 5031.

In some embodiments of the present disclosure, a maximum wall thickness of the outer peripheral side plate 5031 ranges from 2.5 mm to 3.5 mm, i.e., a maximum thickness of the outer peripheral side plate 5031 ranges from 2.5 mm to 3.5 mm. Therefore, it is beneficial to ensure fluidity of the material on the outer peripheral side plate 5031, to ensure that the outer peripheral side plate 5031 is filled with the material. Thus, it is possible to at least reduce the flow liners on the outer peripheral side plate 5031 to some extent, thereby improving the product yield. Moreover, it is possible to ensure structural strength of the worktop 50, and avoid heavy product and material wasting due to too large wall thickness of the outer peripheral side plate 5031.

For example, the maximum wall thickness of the outer peripheral side plate 5031 is 2.6 mm, 2.7 mm, 2.8 mm, 2.9 mm, 3.0 mm, 3.1 mm, 3.2 mm, 3.3 mm, 3.4 mm, or 3.5 mm.

In some embodiments of the present disclosure, a minimum wall thickness of the outer peripheral side plate 5031 ranges from 1.5 mm to 2.5 mm, i.e., a minimum thickness of the outer peripheral side plate 5031 ranges from 1.5 mm to 2.5 mm. Therefore, it is beneficial to ensure the fluidity of the material on the outer peripheral side plate 5031, to ensure that the outer peripheral side plate 5031 is filled with the material. Thus, it is possible to at least reduce the flow liners on the outer peripheral side plate 5031 to some extent, thereby improving the product yield. Moreover, it is possible to ensure the structural strength of the worktop 50.

For example, the minimum wall thickness of the outer peripheral side plate 5031 is 1.6 mm, 1.7 mm, 1.8 mm, 1.9 mm, 2.0 mm, 2.1 mm, 2.2 mm, 2.3 mm, or 2.4 mm.

In some examples, the wall thickness of the outer peripheral side plate 5031 gradually decreases from 2.8mm to 1.6mm in the direction from one end of the outer peripheral side plate 5031 connected to the top plate 5033 to the other end of the outer peripheral side plate 5031.

In some embodiments of the present disclosure, the wall thickness of the outer peripheral side plate 5031 is same as the wall thickness of the worktop variable wall thickness region 5023, and the wall thickness variation relationship of the outer peripheral side plate 5031 is also same as that of the worktop variable wall thickness region 5023. Correspondingly, in the worktop mold 5, the outer peripheral side plate mold cavity 5131 and the worktop variable wall thickness region 5123 have the same thickness and same wall thickness variation relationship.

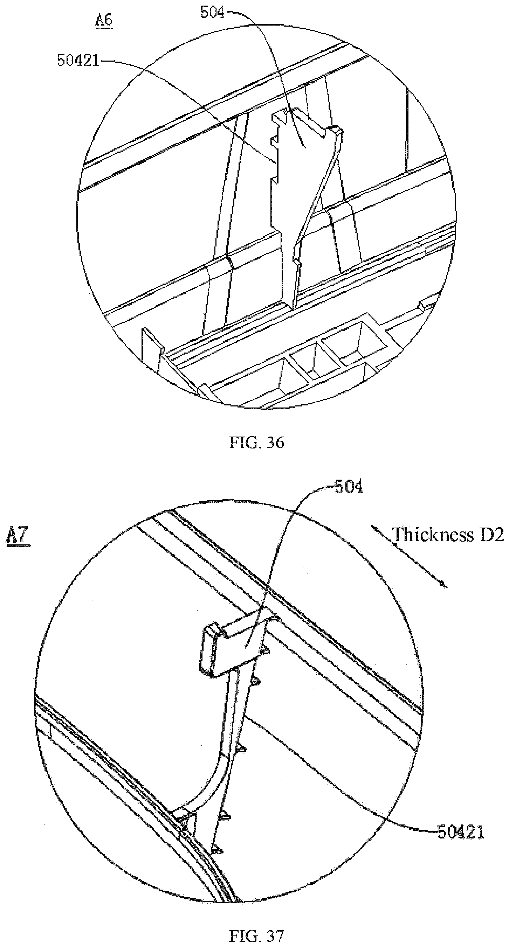

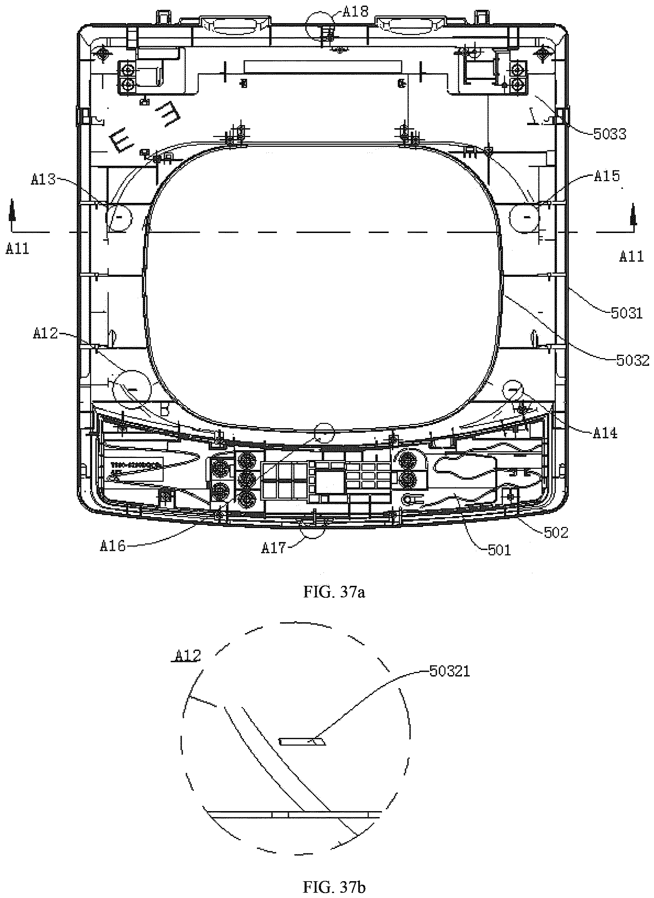

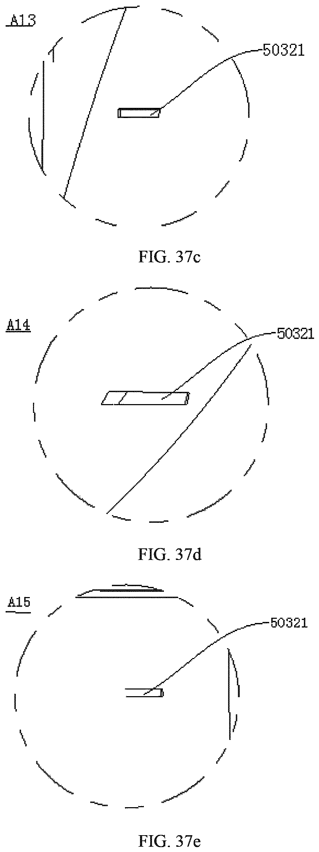

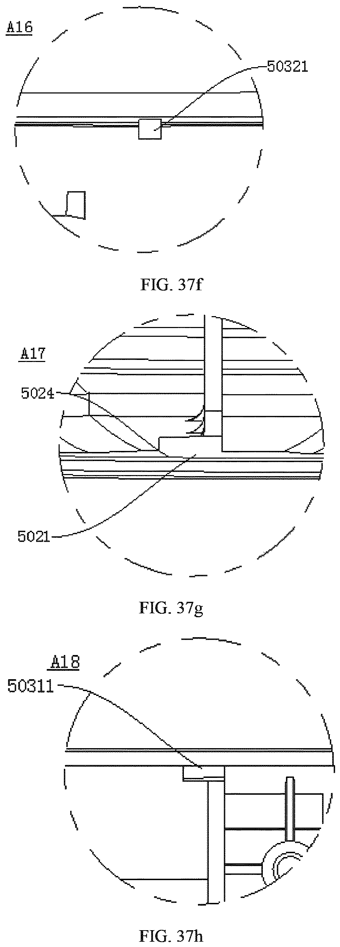

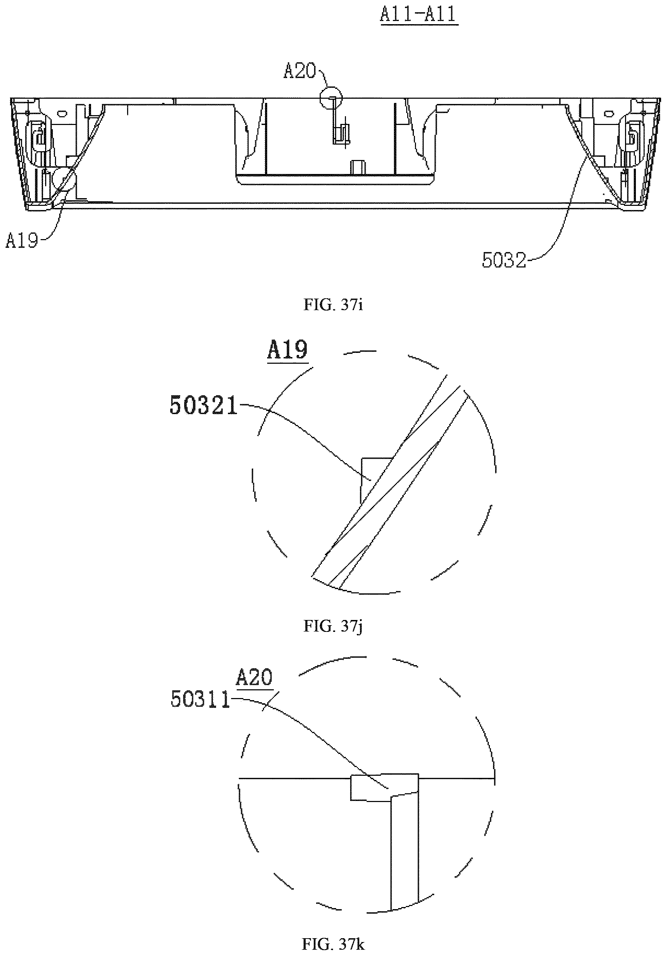

In some embodiments of the present disclosure, as illustrated in FIG. 37k and FIG. 37h, an outer peripheral side plate gate forming region 50311 is formed at an end of the outer peripheral side plate 5031 away from the top plate 5033. Correspondingly, in the worktop mold 5, the worktop mold core has an outer peripheral side plate gate located at an end of the outer peripheral side plate mold cavity 5131 away from the top plate mold cavity 5133. Therefore, the forming of the outer peripheral side plate 5031 is facilitated, and the flow liners at the outer peripheral side plate 5031 can be reduced.

In some embodiments of the present disclosure, a wall thickness of the top plate 5033 ranges from 2.3 mm to 3.3 mm. Correspondingly, in the worktop mold 5, a thickness of the top plate mold cavity 5133 ranges from 2.3 mm to 3.3 mm. For example, the wall thickness of the top plate 5033 is 2.4 mm, 2.5 mm, 2.6 mm, 2.7 mm, 2.8 mm, 2.9 mm, 3.0 mm, 3.1 mm, or 3.2 mm. Therefore, structural strength of the top plate 5033 can be ensured, and forming of the top plate 5033 is facilitated.

In some embodiments of the present disclosure, the top plate 5033 is designed to have a constant wall thickness. Thus, the structure of the mold can be simplified.

Optionally, the wall thickness of the top plate 5033 is not smaller than the maximum wall thickness of the outer peripheral side plate 5031 and is not smaller than a wall thickness of the enclosing plate 5032. Therefore, the forming of the top plate 5033 is more convenient.

In some embodiments of the present disclosure, the enclosing plate 5032 is an enclosing plate 5032 of a constant wall thickness. That is, the enclosing plate mold cavity 5132 is designed to have a constant thickness. Thus, the structure of the mold can be simplified.

Optionally, the wall thickness of the enclosing plate 5032 ranges from 1.6 mm to 2.8 mm. Therefore, structural strength of the enclosing plate 5032 can be ensured, and rapid filling of the fluid can also be ensured.

In other embodiments of the present disclosure, as illustrated in FIG. 37b to FIG. 37f, the enclosing plate 5032 is an enclosing plate 5032 of a variable wall thickness. An enclosing plate gate forming region 50321 is formed on a non-appearance surface of the enclosing plate 5032. The enclosing plate gate forming region 50321 is adapted to correspond to an enclosing plate gate of the worktop mold 5. At least one enclosing plate gate forming region 50321 is formed at an end of the enclosing plate 5032 away from the top plate 5033. The enclosing plate 5032 has an enclosing plate constant wall thickness region. The enclosing plate constant wall thickness region extends across the enclosing plate 5032 in an axial direction of the enclosing plate 5032. That is, the enclosing plate constant wall thickness region extends to two axial ends of the enclosing plate in an axial direction of the enclosing plate 5032, and a wall thickness of the enclosing plate constant wall thickness region at any position thereon is constant.

The enclosing plate gate forming region 50321 is formed at the enclosing plate constant wall thickness region. Other region of the enclosing plate 5032 rather than the enclosing plate constant wall thickness region is the enclosing plate variable wall thickness region. A wall thickness of the enclosing plate constant wall thickness region is not smaller than (i.e., equal to or greater than) a maximum wall thickness of the enclosing plate variable wall thickness region. An end of the enclosing plate variable wall thickness region away from the top plate 5033 has a minimum wall thickness. In this way, it is possible to at least reduce the flow liners at the enclosing plate 5032 to some extent, to at least prevent the flow liners from being generated on an appearance surface of the enclosing plate 5032 to some extent. Thus, it is possible to at least improve the qualified rate of the enclosing plate 5032 to some extent, thereby lowering the cost and satisfying the user's usage demands. The principle of the reduction of the flow liners at the enclosing plate 5032 is same as that of the worktop side plate 502, and details thereof will be omitted here.

In some embodiments of the present disclosure, in a direction from the end of the enclosing plate 5032 adjacent to the top plate 5033 to the end of the enclosing plate 5032 away from the top plate 5033, the wall thickness of the enclosing plate variable wall thickness region gradually decreases. In this way, it is possible to further reduce the flow liners at the enclosing plate 5032, to further prevent the flow liners from being generated on the appearance surface of the enclosing plate 5032. Therefore, the qualified rate of the product can be further improved to some extent, thereby lowering the cost and satisfying the user's usage demands.

In some embodiments of the present disclosure, in the direction from the end of the enclosing plate 5032 adjacent to the top plate 5033 to the end of the enclosing plate 5032 away from the top plate 5033, the wall thickness of the enclosing plate variable wall thickness region first remains constant and then gradually decreases. In this way, it is possible to further reduce the flow liners at the enclosing plate 5032, to further prevent the flow liners from being generated on the appearance surface of the enclosing plate 5032. Therefore, the qualified rate of the product can be further improved to some extent, thereby lowering the cost and satisfying the user's usage demands.

In some embodiments of the present disclosure, in the direction from the end of the enclosing plate 5032 adjacent to the top plate 5033 to the end of the enclosing plate 5032 away from the top plate 5033, the wall thickness of the enclosing plate variable wall thickness region first gradually increases and then gradually decreases. In this way, it is possible to further reduce the flow liners at the enclosing plate 5032, to further prevent the flow liners from being generated on the appearance surface of the enclosing plate 5032. Therefore, the qualified rate of the product can be further improved to some extent, thereby reducing the cost and satisfying the user's usage demands.

In some embodiments of the present disclosure, in the direction from the end of the enclosing plate 5032 adjacent to the top plate 5033 to the end of the enclosing plate 5032 away from the top plate 5033, the wall thickness of the enclosing plate variable wall thickness region first gradually increases, then remains constant, and then gradually decreases. In this way, it is possible to further reduce the flow liners at the enclosing plate 5032, to further prevent the flow liners from being generated on the appearance surface of the enclosing plate 5032. Therefore, the qualified rate of the product can be further improved to some extent, thereby reducing the cost and satisfying the user's usage demands.

In some embodiments of the present application, a size of the enclosing plate constant wall thickness region ranges from 10 mm to 50 mm in a peripheral direction of the enclosing plate 5032. For example, a length of the enclosing plate constant wall thickness region is 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, or 49 mm.

In some embodiments of the present application, in the peripheral direction of the enclosing plate 5032, the enclosing plate gate forming region 50321 is located at a center of an end of the enclosing plate 5032 constant wall thickness region away from the top plate. Correspondingly, in the worktop mold 5, in a peripheral direction of the enclosing plate mold cavity 5132, the enclosing plate gate is located at a center of the enclosing plate constant thickness region. Thus, it is easier for the material to preferentially fill the whole enclosing plate constant thickness region.

In some embodiments of the present disclosure, as illustrated in FIG. 35 to FIG. 37, a reinforcing rib is provided on at least one of the inner peripheral wall of the outer peripheral side plate 5031, the inner peripheral wall of the worktop side plate 502, and the outer peripheral wall of the enclosing plate 5032. Each of the inner peripheral wall of the outer peripheral side plate 5031, a surface of the worktop side plate 502 facing towards the feeding table 503, and the outer peripheral wall of the enclosing plate 5032 is a non-appearance surface. That is, the reinforcing rib may be provided only on the inner peripheral wall of the outer peripheral side plate 5031, only on the surface of the worktop side plate 502 facing towards the feeding table 503, or only on the outer peripheral wall of the enclosing plate 5032. Alternatively, the reinforcing ribs may be provided respectively on both the inner peripheral wall of the outer peripheral side plate 5031 and the surface of the worktop side plate 502 facing towards the feeding table 503, or respectively on both the inner peripheral wall of the outer peripheral side plate 5031 and the outer peripheral wall of the enclosing plate 5032, or respectively on both the surface of the worktop side plate 502 facing towards the feeding table 503 and the outer peripheral wall of the enclosing plate 5032. Optionally, the reinforcing ribs may be provided on the inner peripheral wall of the outer peripheral side plate 5031, the surface of the worktop side plate 502 facing towards the feeding table 503, and the outer peripheral wall of the enclosing plate 5032, respectively. By providing the reinforcing rib, the structural strength of the worktop 50 can be enhanced.

Correspondingly, in the worktop mold 5, the worktop mold cavity includes a reinforcing rib mold cavity. The reinforcing rib mold cavity is in communication with at least one of an inner periphery of the peripheral side plate mold cavity 5131, an inner periphery of the worktop side plate mold cavity 512, and an outer periphery of the enclosing plate mold cavity 5132.

In some embodiments of the present disclosure, a component provided with the reinforcing rib is referred to as a carrier member. At least one reinforcing rib provided on the carrier member is referred to as a worktop connection rib 504. The worktop connection rib 504 includes a worktop connection rib body and a worktop connection portion. The worktop connection portion is connected between the worktop connection rib body and the carrier member. Correspondingly, in the worktop mold 5, a structure in communication with the reinforcing rib mold cavity is referred to as a carrier member mold cavity. At least one reinforcing rib mold cavity in communication with the carrier member mold cavity is referred to as a worktop connection rib mold cavity. A side wall surface of the carrier member mold cavity (for example, the worktop side plate mold cavity 512) in a thickness direction thereof is configured to shape an appearance surface of the carrier member. The worktop connection rib mold cavity is located on the other side wall surface of the carrier member mold cavity in the thickness direction of the carrier member mold cavity, and is in communication with the carrier member mold cavity. The worktop connection rib mold cavity includes a worktop connection rib body mold cavity and a worktop connection portion mold cavity that are in communication with each other. The worktop connection portion mold cavity is communicated between the worktop connection rib body mold cavity and the carrier member mold cavity.

Optionally, a thickness of the worktop connection portion is smaller than a thickness of an end of the worktop connection rib body connected to the worktop connection portion. In the worktop mold 5, a thickness of the worktop connection portion mold cavity is smaller than a thickness of an end, in communication with the worktop connection portion mold cavity, of the worktop connection rib body mold cavity. In some embodiments, during the injection molding, since no gate is formed at a wall surface of the worktop connection rib 504 mold cavity, when the material flows in the worktop 50 mold cavity, the material first flows through the carrier member mold cavity, and then flows to the worktop connection rib mold cavity through the carrier member mold cavity. Moreover, the thickness of the worktop connection portion mold cavity is smaller than a thickness of the worktop connection rib body mold cavity. As a result, it is possible to at least prevent the unstable flow field from being formed at a position where the worktop connection rib mold cavity is in communication with the carrier member mold cavity to some extent. Thus, it is possible to at least avoid the material converging due to a backflow of a material in the worktop connection rib body mold cavity to the carrier member mold cavity through the worktop connection portion mold cavity to some extent, thereby preventing the flow liners from being generated at a connection of the carrier member mold cavity to the worktop connection rib 504.

Optionally, the thickness of the worktop connection portion is smaller than the thickness of the worktop connection rib body. Therefore, it is possible to at least prevent the unstable flow field from being formed at the position where the worktop connection rib 504 mold cavity is in communication with the carrier member mold cavity to some extent. Thus, it is possible to at least avoid the material converging due to the backflow of the material in the worktop connection rib body mold cavity to the carrier member mold cavity through the worktop connection portion mold cavity to some extent, thereby preventing the flow liners from being generated at the connection of the carrier member mold cavity to the worktop connection rib 504.

Optionally, a part of a surface of the worktop connection portion facing towards the carrier member is recessed away from the carrier member to form a worktop through hole 50421. The worktop through hole 50421 penetrates the worktop connection portion in a thickness direction of the worktop connection portion. Correspondingly, in the worktop mold 5, the worktop connection portion mold cavity has a worktop post structure for forming the worktop through hole 50421. The worktop post structure extends across the worktop connection portion mold cavity in the thickness direction of the worktop connection portion mold cavity. In this way, since no gated is formed at the worktop connection rib mold cavity, when flowing in the worktop mold cavity, the material first flows through the carrier member mold cavity, and then flows to the worktop connection rib mold cavity through the carrier member mold cavity. Moreover, by providing the worktop post structure, the worktop post structure can reduce a flow area of the material flowing across the position where the worktop connection rib mold cavity is in communication with the carrier member mold cavity. As a result, it is possible to at least prevent the unstable flow field from being formed at the position where the worktop connection rib mold cavity is in communication with the carrier member mold cavity to some extent. Therefore, it is possible to at least avoid the material converging due to the backflow of the material in the worktop connection rib body mold cavity to the carrier member mold cavity through the worktop connection portion mold cavity to some extent, thereby preventing the flow liners from being generated at the connection of the carrier member to the worktop connection rib 504.

In some embodiments of the present disclosure, the thickness of the worktop connection portion is smaller than a thickness of the carrier member. Correspondingly, in the worktop mold 5, the thickness of the worktop connection portion mold cavity is smaller than a thickness of the carrier member mold cavity. Therefore, it is more beneficial to the material to preferentially form the carrier member.

In some embodiments of the present disclosure, the wall thickness of the worktop constant wall thickness region 5024 ranges from 2.3 to 3.2 mm, thereby facilitating rapid filling of the material.

In some embodiments of the present disclosure, in the peripheral direction of the worktop connection plate 501, a size of the worktop constant wall thickness region 5024 ranges from 10 mm to 50 mm. For example, a length of the worktop constant wall thickness region 5024 is 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, or 49 mm.

In some embodiments of the present disclosure, in the peripheral direction of the worktop connection plate 501, the worktop gate forming region 5021 is located at the center of the end of the worktop constant wall thickness region 5024 away from the worktop connection plate 501. Correspondingly, in the worktop mold 5, in the peripheral direction of the worktop connection plate mold cavity 51, the worktop gate is located at the center of the worktop 50 constant thickness region. Thus, the worktop 50 constant thickness region is more conveniently and preferentially filled with the material.

A laundry treating device according to embodiments of the present disclosure includes the worktop 50 as described above.

With the laundry treating device according to the embodiments of the present disclosure, by providing the worktop 50, the worktop gate forming region 5021 is formed at the worktop constant wall thickness region 5024, and the wall thickness of the worktop constant wall thickness region 5024 is not smaller than the maximum wall thickness of the worktop variable wall thickness region 5023. As a result, it is possible to facilitate reducing the flow liners at the worktop side plate 502 to some extent. Thus, the product yield can be at least improved to some extent, thereby satisfying the user's usage demands.

In the description of the present disclosure, it is to be understood that, terms such as "center", "longitudinal", "lateral", "length", "width", "thickness", "over", "below", "front", "back", "left", "right", "vertical", "horizontal", "top", "bottom", "in", "out", "clockwise", "counterclockwise", "axial", "radial", "peripheral", etc., is based on the orientation or position relationship shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure. In the description of the present disclosure, "first feature" and "second feature" may include one or more of the features.

In the description of the present disclosure, "plurality" means two or more. In the description of the present disclosure, the first feature being "on" or "under" the second feature may include the scenarios that the first feature is in direct contact with the second feature, or the first and second features, instead of being in direct contact with each other, are in contact with each other through another feature therebetween. In the description of the present disclosure, the first feature being "on", "above", and "over" the second feature may mean that the first feature is directly above or obliquely above the second feature, or simply mean that the level of the first feature is higher than that of the second feature.

Other components of a laundry treating device according to the embodiments of the present disclosure, such as a motor and a control system, and operations are known to those of ordinary skill in the art, and are not described in detail herein.

In the description of this specification, descriptions with reference to the terms "an embodiment", "some embodiments", "schematic embodiments", "examples", "specific examples", or "some examples", etc. mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although the embodiments of the present disclosure are illustrated and described above, it can be understood by those of ordinary skill in the art that various changes, modifications, substitutions, and alterations may be made to these embodiments without departing from the principles and spirit of the present disclosure. The scope of the present disclosure is defined by the claims and their equivalents.

**Claims**

1. An appearance part, wherein the appearance part is an integral injection-molding part, the appearance part comprising: a non-appearance plate, a surface of the non-appearance plate being a non-appearance surface, at least one blocking hole being formed on the non-appearance plate and penetrating the non-appearance plate in a thickness direction of the non-appearance plate; and a first appearance plate connected to a peripheral wall of the non-appearance plate and extending in a peripheral direction of the non-appearance plate, wherein: a side surface of the non-appearance plate in the thickness direction of the non-appearance plate has at least one gate forming region corresponding to a gate of a mold, the at least one gate forming region being located adjacent to the first appearance plate, the at least one blocking hole is formed adjacent to the first appearance plate, and the at least one blocking hole adjacent to the first appearance plate is spaced apart in the peripheral direction of the non-appearance plate from the at least one gate forming region adjacent to the first appearance plate; or a non-appearance surface of the first appearance plate has at least one gate forming region adapted to correspond to the gate of the mold, and the at least one blocking hole is formed adjacent to the first appearance plate.

2. The appearance part according to claim 1, further comprising a second appearance plate connected to the peripheral wall of the non-appearance plate, the first appearance plate and the second appearance plate being arranged in the peripheral direction of the non-appearance plate, wherein: the side surface of the non-appearance plate in the thickness direction of the non-appearance plate has a plurality of gate forming regions corresponding to a plurality of gates of the mold, some forming regions of the plurality of gate forming regions being located adjacent to the first appearance plate, the remaining forming region of the plurality of gate forming regions being located adjacent to the second appearance plate, wherein some blocking holes of a plurality of blocking holes are formed adjacent to the first appearance plate and are spaced apart from the some gate forming regions in the peripheral direction of the non-appearance plate, and the remaining blocking holes of the plurality of blocking holes are formed adjacent to the second appearance plate and are spaced apart from the remaining gate forming regions in the peripheral direction of the non-appearance plate; or the non-appearance surface of the first appearance plate has the gate forming region adapted to correspond to the gate of the mold, or each of the non-appearance surface of the first appearance plate and a non-appearance surface of the second appearance plate has the gate forming region adapted to the gate of the mold, some blocking holes of the plurality of blocking holes are formed adjacent to the first appearance plate, and at least one of the remaining blocking holes of the plurality of blocking holes is formed adjacent to the second appearance plate.

3. The appearance part according to claim 2, wherein: a minimum distance between each of the blocking holes adjacent to the first appearance plate and the first appearance plate is smaller than or equal to 20 mm; and/or a minimum distance between each of the blocking holes adjacent to the second appearance plate and the second appearance plate is smaller than or equal to 20 mm; and/or a minimum distance between each of the gate forming regions adjacent to the first appearance plate and the first appearance plate is smaller than or equal to 20 mm; and/or a minimum distance between each of the gate forming regions adjacent to the second appearance plate and the second appearance plate is smaller than or equal to 20 mm.

4. The appearance part according to claim 2, wherein: a minimum distance between each of the blocking holes adjacent to the first appearance plate and the first appearance plate is smaller than or equal to 10 mm; and/or a minimum distance between each of the blocking holes adjacent to the second appearance plate and the second appearance plate is smaller than or equal to 10 mm; and/or a minimum distance between each of the gate forming regions adjacent to the first appearance plate and the first appearance plate is smaller than or equal to 10 mm; and/or a minimum distance between each of the gate forming regions adjacent to the second appearance plate and the second appearance plate is smaller than or equal to 10 mm.

5. The appearance part according to claim 2, wherein: a minimum distance between each of the blocking holes adjacent to the first appearance plate and the first appearance plate is 0 mm; and/or a minimum distance between each of the blocking holes adjacent to the second appearance plate and the second appearance plate is 0 mm; and/or a minimum distance between each of the gate forming regions adjacent to the first appearance plate and the first appearance plate is 0 mm; and/or a minimum distance between each of the gate forming regions adjacent to the second appearance plate and the second appearance plate is 0 mm.

6. The appearance part according to any one of claims 1 to 5, wherein the at least one blocking hole comprises a plurality of blocking holes arranged at intervals in the peripheral direction of the non-appearance plate.

7. The appearance part according to any one of claims 1 to 7, wherein a wall thickness of the non-appearance plate is smaller than a wall thickness of an end of the first appearance plate connected to the non-appearance plate.

8. The appearance part according to claim 7, wherein the wall thickness of the non-appearance plate is smaller than a minimum wall thickness of the first appearance plate.

9. The appearance part according to claim 2, wherein a wall thickness of the non-appearance plate is smaller than a wall thickness of an end of the second appearance plate connected to the non-appearance plate.

10. The appearance part according to claim 9, wherein the wall thickness of the non-appearance plate is smaller than a minimum wall thickness of the second appearance plate.

11. The appearance part according to any one of claims 1 to 10, wherein the appearance part is a spray-free piece comprising a resin matrix and metal particles distributed in the resin matrix.

12. The appearance part according to claim 11, wherein the metal particles are aluminum, silver, or copper.

13. A household appliance, comprising the appearance part according to any one of claims 1 to 12.

14. A mold, comprising: a mold core having a mold cavity, the mold cavity comprising a non-appearance plate mold cavity and a first appearance plate mold cavity, at least one post structure being provided in the non-appearance plate mold cavity, the at least one post structure being used for forming a blocking hole and extending across the non-appearance plate mold cavity in a thickness direction of the non-appearance plate mold cavity, the first appearance plate mold cavity being in communication with an outer periphery of the non-appearance plate mold cavity and extending in a peripheral direction of the non-appearance plate mold cavity, wherein: the mold core has at least one gate located at the non-appearance plate mold cavity and formed adjacent to the first appearance plate mold cavity, the at least one post structure is disposed adjacent to the first appearance plate mold cavity, and the post structure adjacent to the first appearance plate mold cavity is spaced apart in the peripheral direction of the non-appearance plate mold cavity from the at least one gate adjacent to the first appearance plate mold cavity; or the mold core has at least one gate located at the first appearance plate mold cavity, and the at least one post structure is disposed adjacent to the first appearance plate mold cavity.

15. The mold according to claim 14, wherein the mold cavity comprises a second appearance plate mold cavity in communication with the outer periphery of the non-appearance plate mold cavity, and the first appearance plate mold cavity and the second appearance plate mold cavity being arranged in the peripheral direction of the non-appearance plate mold cavity, wherein: the mold core has a plurality of gates located at the non-appearance plate mold cavity, some gates of the plurality of gates being formed adjacent to the first appearance plate mold cavity, and the remaining gates of the plurality of gates being formed adjacent to the second appearance plate mold cavity, and some post structures of the plurality of post structures are disposed adjacent to the first appearance plate mold cavity and are spaced apart from the some gates in the peripheral direction of the non-appearance plate mold cavity, and the remaining post structures of the plurality of post structures are disposed adjacent to the second appearance plate mold cavity and are spaced apart from the remaining gates in the peripheral direction of the non-appearance plate mold cavity; or the mold core has a gate located at the first appearance plate mold cavity, or has a gate located at each of the first appearance plate mold cavity and the second appearance plate mold cavity, some post structures of the plurality of post structures are disposed adjacent to the first appearance plate mold cavity, and at least one of the remaining post structures of the plurality of post structures is disposed adjacent to the second appearance plate mold cavity.

16. The mold according to claim 15, wherein: a minimum distance between each of the post structures adjacent to the first appearance plate mold cavity and the first appearance plate mold cavity is smaller than or equal to 20 mm; and/or a minimum distance between each of the post structures adjacent to the second appearance plate mold cavity and the second appearance plate mold cavity is smaller than or equal to 20 mm; and/or a minimum distance between each of the gates adjacent to the first appearance plate mold cavity and the first appearance plate mold cavity is smaller than or equal to 20 mm; and/or a minimum distance between each of the gates adjacent to the second appearance plate mold cavity and the second appearance plate mold cavity is smaller than or equal to 20 mm.

17. The mold according to claim 15, wherein: a minimum distance between each of the post structures adjacent to the first appearance plate mold cavity and the first appearance plate mold cavity is smaller than or equal to 10 mm; and/or a minimum distance between each of the post structures adjacent to the second appearance plate mold cavity and the second appearance plate mold cavity is smaller than or equal to 10 mm; and/or a minimum distance between each of the gates adjacent to the first appearance plate mold cavity and the first appearance plate mold cavity is smaller than or equal to 10 mm; and/or a minimum distance between each of the gates adjacent to the second appearance plate mold cavity and the second appearance plate mold cavity is smaller than or equal to 10 mm.

18. The mold component according to claim 15, wherein: a minimum distance between each of the post structures adjacent to the first appearance plate mold cavity and the first appearance plate mold cavity is 0 mm; and/or a minimum distance between each of the post structures adjacent to the second appearance plate mold cavity and the second appearance plate mold cavity is 0 mm; and/or a minimum distance between each of the gates adjacent to the first appearance plate mold cavity and the first appearance plate mold cavity is 0 mm; and/or a minimum distance between each of the gates adjacent to the second appearance plate mold cavity and the second appearance plate mold cavity is 0 mm.

19. The mold according to any one of claims 14 to 18, wherein the at least one post structure comprises a plurality of post structures arranged at intervals in the peripheral direction of the non-appearance plate mold cavity.

20. The mold according to any one of claims 14 to 19, wherein a thickness of the non-appearance plate mold cavity is smaller than a thickness of an end, in communication with the non-appearance plate mold cavity, of the first appearance plate mold cavity.

21. The mold according to claim 20, wherein the thickness of the non-appearance plate mold cavity is smaller than a minimum thickness of the first appearance plate mold cavity.

22. The mold according to claim 15, wherein a thickness of the non-appearance plate mold cavity is smaller than a thickness of an end, in communication with the non-appearance plate mold cavity, of the second appearance plate mold cavity.

23. The mold according to claim 22, wherein the thickness of the non-appearance plate mold cavity is smaller than a minimum thickness of the second appearance plate mold cavity.

FIG. 1

1B

1011

FIG. 1a

2B

1011

FIG. 1b

3B

1011

FIG. 1c

104
1042
103
1041
A-A
101
Thickness A1
102
a
b
c
Width A1
Thickness A2

FIG. 2

B

1011a

1012a

FIG. 3

10

C          C

FIG. 4

C-C

101    103 ~1042    1041

E

102

FIG. 5

E

102

FIG. 6

FIG. 7

F–F

112 —

H

111

113

114

11

FIG. 8

H

1111 —

1121(112)

111

Width A2

FIG. 9

G–G

111
112

114
113    M

FIG. 10

M

1141
1142

FIG. 11

FIG. 12

FIG. 13

FIG. 14

FIG. 15

FIG. 16

FIG. 17

V–V

Width E2

FIG. 18

FIG. 19

FIG. 20

Length
E1

4031

Width E1

403

W1

4022

FIG. 20a

4021

FIG. 20b

4

41

FIG. 21

X—X

FIG. 22

Y—Y

FIG. 23

FIG. 24

Z1–Z1

FIG. 25

Z-Z

FIG. 26

FIG. 27

FIG. 28

A1-A1

FIG. 29

A2

5033

5031

5032

FIG. 30

A3

5011

502

501

5011

5011

FIG. 31

FIG. 32

A4–A4

Thickness D1

A5

Width D1

FIG. 33

A5

5023

FIG. 34

502
A6 501
504
502
A7
504

5031
5032

FIG. 35

A6

504

50421

FIG. 36

A7

504

Thickness D2

50421

FIG. 37

FIG. 37a

FIG. 37b

A13

50321

FIG. 37c

A14

50321

FIG. 37d

A15

50321

FIG. 37e

A16

50321

FIG. 37f

A17

5024

5021

FIG. 37g

A18

50311

FIG. 37h

A11-A11

A20

A19

5032

FIG. 37i

A19

50321

FIG. 37j

A20

50311

FIG. 37k

FIG. 38

A8-A8

512  511  51

FIG. 39

A9—A9

5132
513
5133
5131

514

FIG. 40

A10—A10

512

A11

511

5132

5133

5131

E

FIG. 41

A11

5121

FIG. 42

## INTERNATIONAL SEARCH REPORT

| International application No. |
|---|
| **PCT/CN2021/070153** |

| A. | CLASSIFICATION OF SUBJECT MATTER |
|---|---|
| | D06F 34/28(2020.01)i; D06F 39/02(2006.01)i; D06F 39/12(2006.01)i; B29C 45/26(2006.01)i; A47J 36/06(2006.01)i |

According to International Patent Classification (IPC) or to both national classification and IPC

| B. | FIELDS SEARCHED |
|---|---|

Minimum documentation searched (classification system followed by classification symbols)

D06F; B29C; A47J

Documentation searched other than minimum documentation to the extent that such documents are included in the fields searched

Electronic data base consulted during the international search (name of data base and, where practicable, search terms used)

CNABS, CNTXT, VEN, CNKI: 外观板, 外观面, 浇口, 进胶, 注塑, 注射, 阻隔, 截流, 洗衣机, 家用电器, 器具, 流纹, 流痕, surface, appearance, facade, facies, gat+, spru+, inject+, obstruct?, block?, hinder?, stop?, washer?, washing machine, household, home, appliance?, flow line?, flow mark

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 211609219 U (JOYOUNG CO., LTD.) 02 October 2020 (2020-10-02)<br>description, paragraphs 28-50, and figures 1-5 | 1-23 |
| Y | CN 209733573 U (GREE ELECTRIC APPLIANCES, INC. OF ZHUHAI) 06 December 2019 (2019-12-06)<br>description, paragraphs 33-45, and figures 1-5 | 1-23 |
| Y | CN 211609316 U (JOYOUNG CO., LTD.) 02 October 2020 (2020-10-02)<br>description, paragraphs 27-40, and figures 1-4 | 1-23 |
| Y | CN 208192884 U (JOYOUNG CO., LTD.) 07 December 2018 (2018-12-07)<br>description, paragraphs 29-36, and figures 1-4 | 1-23 |
| Y | CN 210748833 U (FOSHAN SHUNDE MIDEA ELECTRICAL HEATING APPLIANCES MANUFACTURING CO., LTD.) 16 June 2020 (2020-06-16)<br>entire document | 1-13 |
| A | CN 211704243 U (ZHEJIANG SUPOR ELECTRICAL APPLIANCES MANUFACTURING CO., LTD.) 20 October 2020 (2020-10-20)<br>entire document | 1-23 |

☑ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 July 2021** | **02 September 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/070153**

### C. DOCUMENTS CONSIDERED TO BE RELEVANT

| Category* | Citation of document, with indication, where appropriate, of the relevant passages | Relevant to claim No. |
|---|---|---|
| A | CN 211591140 U (HANGZHOU TIANPU MOULD CO., LTD.) 29 September 2020 (2020-09-29)<br>entire document | 1-23 |
| A | US 6224364 B1 (VELCRO INDUSTRIES B.V.) 01 May 2001 (2001-05-01)<br>entire document | 1-23 |
| A | KR 20050110871 A (LG ELECTRONICS INC.) 24 November 2005 (2005-11-24)<br>entire document | 1-23 |

Form PCT/ISA/210 (second sheet) (January 2015)

## INTERNATIONAL SEARCH REPORT
### Information on patent family members

International application No.

**PCT/CN2021/070153**

| Patent document cited in search report | | | Publication date (day/month/year) | Patent family member(s) | Publication date (day/month/year) |
|---|---|---|---|---|---|
| CN | 211609219 | U | 02 October 2020 | None | |
| CN | 209733573 | U | 06 December 2019 | None | |
| CN | 211609316 | U | 02 October 2020 | None | |
| CN | 208192884 | U | 07 December 2018 | None | |
| CN | 210748833 | U | 16 June 2020 | None | |
| CN | 211704243 | U | 20 October 2020 | None | |
| CN | 211591140 | U | 29 September 2020 | None | |
| US | 6224364 | B1 | 01 May 2001 | None | |
| KR | 20050110871 | A | 24 November 2005 | None | |

**EP 4 253 631 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011381066

- CH 202022841803